(19) Europäisches Patentamt
European Patent Office
Office européen des brevets

(11) EP 2 787 195 A1

## EUROPEAN PATENT APPLICATION
published in accordance with Art. 153(4) EPC

(43) Date of publication:
08.10.2014 Bulletin 2014/41

(51) Int Cl.:
*F02B 39/16* (2006.01)  *F01M 13/00* (2006.01)
*F02B 39/14* (2006.01)

(21) Application number: 12854363.4

(22) Date of filing: 06.07.2012

(86) International application number:
PCT/JP2012/067381

(87) International publication number:
WO 2013/080600 (06.06.2013 Gazette 2013/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 01.12.2011 PCT/JP2011/077827
15.02.2012 JP 2012030926

(71) Applicant: Toyota Jidosha Kabushiki Kaisha
Toyota-shi, Aichi 471-8571 (JP)

(72) Inventors:
• SHIODA, Jumpei
Toyota-shi
Aichi 471-8571 (JP)

• KAKUTA, Yushi
Toyota-shi
Aichi 471-8571 (JP)
• SUGIYAMA, Matsuyoshi
Toyota-shi
Aichi 471-8571 (JP)

(74) Representative: Smith, Samuel Leonard
J A Kemp
14 South Square
Gray's Inn
London WC1R 5JJ (GB)

(54) **INTERNAL COMBUSTION ENGINE WITH SUPERCHARGER**

(57) A supercharged internal combustion engine of the present invention is provided with a turbocharger (18) having a compressor (18b) in an air intake passage (24), a communication passage (52) connected between an upstream-side portion of the air intake passage (24) on the upstream side of a compressor impeller (18b3) and an internal space (90) of the internal combustion engine (10), and an oil supply apparatus (96, 98, 100) that supplies oil to an internal passage in the compressor (18) through which intake air flows. When a deposit buildup operation condition under which there is a concern of a buildup of a deposit in the compressor (18) is met, the oil supply apparatus (96, 98, 100) increases the amount of oil supplied to the internal passage compared with the amount of oil supplied when the deposit buildup operation condition is not met.

Fig. 2

EP 2 787 195 A1

## Description

## Technical Field

The present invention relates to a supercharged internal combustion engine.

## Background Art

A supercharged internal combustion engine such as disclosed in Patent Document 1 is known. This conventional internal combustion engine has a throttle valve disposed in an air intake passage on the downstream side of a compressor, a first communication passage for communication between the air intake passage on the downstream side of the throttle valve and a crank chamber, and a second communication passage for communication between the air intake passage on the upstream side of the compressor and the crank chamber. When supercharging is not performed, fresh air is introduced from the second communication passage into the crank chamber, and blow-by gas in the crank chamber is scavenged and discharged to the air intake passage through the first communication passage. In contrast, when supercharging is performed, fresh air is introduced from the first communication passage into the crank chamber, and blow-by gas in the crank chamber is scavenged and discharged to the air intake passage through the second communication passage.

In a case where blow-by gas is introduced into a portion of the air intake passage on the upstream side of the compressor as at the time of supercharging in the supercharged internal combustion engine disclosed in Patent Document 1, oil contained in the blow-by gas is taken into the compressor. There is a concern that when deteriorated (soot-containing) oil is exposed to high temperature in the compressor, the oil evaporates in the compressor to have an increased viscosity and generate a deposit. There is also a concern that a degradation in performance of a supercharger occurs with the progress of the buildup of such a deposit in the compressor.

Including the above described document, the applicant is aware of the following documents as related art of the present invention.

## Citation List

## Patent Documents

Patent Document 1: Japanese Laid-open Patent Application Publication No. 2009-293464
Patent Document 2: Japanese Laid-open Patent Application Publication No. 2007-309128
Patent Document 3: Japanese Laid-open Patent Application Publication No. 2008-150956
Patent Document 4: Japanese Laid-open Patent Application Publication No. 2009-097450
Patent Document 5: Japanese Laid-open Patent Application Publication No. 6-033792
Patent Document 6: Japanese Laid-open Patent Application Publication No. 2008-157047
Patent Document 7: Japanese Laid-open Patent Application Publication No. 2011-074833
Patent Document 8: Japanese Laid-open Patent Application Publication No. 2011-202591
Patent Document 9: Japanese Laid-open Patent Application Publication No. 2010-90873
Patent Document 10: Japanese Laid-open Patent Application Publication No. 2006-104983
Patent Document 11: Japanese Laid-open Patent Application Publication No. 2011-140922
Patent Document 12: Japanese Laid-open Patent Application Publication No. 2009-041443

## Summary of Invention

The present invention has been achieved to solve the above-described problem, and an object of the present invention is to provide a supercharged internal combustion engine capable of effectively preventing a buildup of a deposit in a compressor.

The present invention provides a supercharged internal combustion engine including a supercharger, a communication passage and an oil supply apparatus.

The supercharger has a compressor in an air intake passage. The communication passage is connected between an upstream-side portion of the air intake passage on the upstream side of an impeller of the compressor and a crank chamber of the internal combustion engine or an engine internal space communicating with the crank chamber. The oil supply apparatus supplies oil to an internal passage in the compressor through which intake air flows. When a deposit buildup operation condition under which there is a concern of a buildup of a deposit in the compressor is met, the oil supply apparatus increases the amount of oil supplied to the internal passage compared with when the deposit buildup operation condition is not met.

A concrete example of the deposit buildup operation condition is an operating condition under which an operating state in which deposit can build up easily in the compressor is established and a deposit is supposed to build up during continuation of this operating state. An operating condition in which a buildup of a deposit in the compressor is actually inferable also corresponds to the deposit buildup operation condition. According to the present invention, the amount of oil supplied to the internal passage in the compressor is increased when such a deposit buildup operation condition is met compared with when the deposit buildup operation condition is not met. In the internal combustion engine, blow-by gas is introduced, through the communication passage, into the air intake passage on the upstream side of the compressor basically in an amount according to the difference between the pressure in the crank chamber and the intake air pressure on the upstream side of the compressor in an ordinary state, that is, when the deposit buildup condition is not met. That is, according to the present invention, the amount of oil supplied to the internal passage in the compressor is increased when the deposit buildup operation condition is met relative to the amount of oil contained in blow-by gas introduced into the air intake passage in the above-described way when the deposit buildup operation condition is not met. However, a situation is conceivable where introduction of blow-by gas into the air intake passage through the communication passage is not performed when some sort of control is performed. Accordingly, in the present invention, the amount of oil supplied to the internal passage when the deposit buildup operation condition is not met may include a zero amount. In the present invention, therefore, the mode of increasing the amount of oil in the case where the deposit buildup operation condition is met includes a mode of increasing relative to the amount of oil (zero) when the deposit buildup operation condition is not met, i.e., a mode of executing supply of oil to the internal passage in a situation where no oil is supplied to the internal passage at a moment at which the deposit buildup operation condition is met.

When oil is brought into the internal passage in the compressor in such a large amount that any part of the oil can not stay long enough to be able to evaporate, no deposit is generated and a deposit attached to the compressor is scaled off and removed. Therefore, the present invention enables effective prevention of a buildup of a deposit in the compressor by increasing the amount of oil when the deposit buildup operation condition is met. More specifically, generation and growth of a deposit can be prevented in a situation where no deposit is building up in the compressor, and a built up deposit can be subjected to cleaning and removed in a situation where the deposit is actually building up.

The above-described deposit buildup operation condition in the present invention may be met when the temperature of the compressor reaches a predetermined value.

If the time period during which oil is exposed to a high temperature in the compressor is increased, evaporation of the oil progresses, the viscosity of the oil is increased and a buildup of a deposit progresses. Therefore, if the temperature of the compressor is increased, the facility with which a deposit builds up is increased. Therefore, determination as to whether the deposit buildup operation condition is met can be made in a favorable way based on the temperature of the compressor.

Also, the deposit buildup operation condition may be met when the compressor efficiency of the compressor is reduced to a value equal to or lower than a predetermined value.

When a deposit builds up in the compressor, the compressor efficiency is reduced. Therefore, determination as to whether the deposit buildup operation condition is met can be made in a favorable way based on the reduction in compressor efficiency.

Also, the deposit buildup operation condition may be met when the degree of degradation of oil is equal to or higher than a predetermined degree and when the temperature of the compressor is equal to or higher than a predetermined value.

When the degree of degradation of oil is equal to or higher than the predetermined degree and when the temperature of the compressor is increased, the facility with which a deposit builds up is increased. Therefore, determination as to whether the deposit buildup operation condition is met can be made in a favorable way based on the degree of oil degradation and the temperature of the compressor.

The above-described compressor in the present invention may be a centrifugal compressor. The internal combustion engine may be further provided with compressor local temperature obtaining means for obtaining the temperature of a high-temperature portion whose temperature is locally increased to a high temperature in internal portions of the centrifugal compressor. The deposit buildup operation condition may be met when the degree of degradation of the oil is equal to or higher than the predetermined degree and when the temperature of the high-temperature portion is equal to or higher than the predetermined value.

A deposit can occur easily at the above-described local high-temperature portion in the compressor. Therefore, determination as to whether the deposit buildup operation condition is met can be made in a favorable way based on the temperature of such a local high-temperature portion and the degree of oil degradation.

The deposit buildup operation condition in the present invention may be met when the temperature of the compressor is equal to or higher than a predetermined value and when soot concentration in the oil is equal to or higher than a predetermined value.

Since one of the causes of a deposit is soot contained in oil, the facility with which a deposit builds up is increased when the soot concentration is high. Also, the facility with which a deposit builds up is increased when the temperature of the compressor is high. Therefore, determination as to whether the deposit buildup operation condition is met can be made in a favorable way based on the temperature of the compressor and the soot concentration.

The oil supply apparatus in the present invention may increase the amount of oil supplied to the internal passage by increasing the amount of oil supplied to the upstream-side portion of the air intake passage.

When the amount of oil supplied to the upstream-side portion of the air intake passage is increased, the amount of oil supplied to the internal passage in the compressor together with intake air is increased. Therefore, effective prevention of a buildup of a deposit in the compressor can be achieved by increasing the amount of oil supplied to the internal passage by means of such a mode when the deposit buildup operation condition is met.

The oil supply apparatus in the present invention may increase the amount of oil supplied to the internal passage by increasing the amount of blow-by gas introduced to the upstream-side portion of the air intake passage through the communication passage.

Oil is contained in blow-by gas. When the amount of blow-by gas supplied to the upstream-side portion of the air intake passage is increased, therefore, the amount of oil supplied to the air intake passage together with this blow-by gas and supplied to the internal passage in the compressor together with intake air is increased. Therefore, effective prevention of a buildup of a deposit in the compressor can be achieved by increasing the amount of oil supplied to the internal passage by means of such a mode when the deposit buildup operation condition is met.

The oil supply apparatus in the present invention may include an oil mist generation device that generates an oil mist. Also, the oil supply apparatus may supply an oil mist generated by the oil mist generation device to the crank chamber or the engine internal space communicating with the crank chamber.

When an oil mist generated by the oil mist generation device is supplied to the crank chamber or the engine internal space communicating with the crank chamber, the amount of oil mist in blow-by gas existing in the crank chamber and other portions is increased. The amount of oil supplied to the upstream-side portion of air intake passage through the communication passage can thereby be increased.

The oil mist generation device in the present invention may include a negative-pressure pump that is supplied with oil and that is capable of discharging the oil together with its discharge gas, a gas introduction passage that communicates with an air intake port of the negative-pressure pump, and opening and closing means for opening and closing the gas introduction passage. A discharge port of the negative-pressure pump may communicate with the crank chamber or the engine internal space communicating with the crank chamber. The opening and closing means may be arranged to open the gas introduction passage when the deposit buildup operation condition is met.

With this arrangement, when the deposit buildup condition is met, oil and gas introduced from the gas introduction passage are mixed in the negative-pressure pump and the mixture of the oil and the gas is discharged as a gas containing an oil mist from the negative-pressure pump into the crank chamber for example. The amount of oil supplied to the upstream-side portion of air intake passage through the communication passage can thereby be increased. In general, an internal combustion engine incorporates a negative-pressure pump for producing negative pressure. In the above-described arrangement, the oil mist generation device can be formed by using such a negative-pressure pump. The oil mist generation device that can be provided at a low cost and appropriately incorporated and the oil supply apparatus including the oil mist generation device can thus be realized.

The negative-pressure pump in the present invention may be rotationally driven with a camshaft provided in the internal combustion engine. Also, oil circulating in the internal combustion engine may be supplied from the camshaft to the negative-pressure pump.

In the above-described arrangement, the negative-pressure pump can be driven by using a torque from the camshaft and oil can be supplied to the negative-pressure pump by using an oil passage ordinarily provided in the camshaft for lubrication of the valve operating system. The oil mist generation device that can be provided at a low cost and appropriately incorporated and the oil supply apparatus including the oil mist generation device can thus be realized in a favorable way.

The intake port of the negative-pressure pump in the present invention may be connected to a negative-pressure-using device that uses a negative pressure produced by the negative-pressure pump. When there is a deficiency of the negative pressure to be used by the negative-pressure-using device, the oil supply apparatus may prohibit opening of the gas introduction passage by the opening and closing means.

In the above-described arrangement, determination as to whether or not opening of the opening and closing means is to be prohibited for prevention of a negative pressure deficiency is made with priority to determination as to whether or not the opening and closing means is to be opened for prevention of a deposit buildup. A malfunction of the negative-pressure-using device due to a negative pressure deficiency can thus be prevented with reliability.

The present invention may further include a brake negative-pressure passage that provides communication between the air intake port of the negative-pressure pump and a brake booster provided in a brake system of a vehicle on which the internal combustion engine is mounted. Also, the opening and closing means may be arranged to shut the gas introduction passage in a situation where a request for use by the brake booster of the negative pressure produced by the negative-pressure pump is issued while the gas introduction passage is open, and where the negative pressure produced by the negative-pressure pump is lower than a negative pressure according to the request.

The gas introduction passage is thereby shut off if the negative pressure satisfying a use request from the brake booster can not be produced by use of negative pressure that is produced by the negative-pressure pump in a situation where the gas introduction passage is open, thus enabling prevention of a delay in brake response due to a deficiency of the negative pressure used by the brake booster.

The present invention may further include a negative-pressure tank that stores negative pressure produced by the negative-pressure pump.

A negative pressure can thereby be supplied to the negative-pressure-using device with improved reliability even in a situation where the gas introduction passage is opened by the opening and closing means for prevention of a deposit buildup. The response delay characteristic of the negative-pressure-using device can thereby be improved.

The gas introduction passage in the present invention may be a passage for introducing air into the negative-pressure pump. The internal combustion engine may be further provided with intake air amount measurement means for measuring the amount of intake air flowing through the air intake passage on the upstream side of the portion to which the communication passage is connected, and intake air amount correction means for correcting the amount of intake air measured by the intake air amount measurement means based on the pressure in the crank chamber when the negative-pressure pump is operating in a situation where the gas introduction passage is open.

Correction of the amount of intake air considering the amount of air taken in from the negative-pressure pump can thereby be made, thus enabling engine control (such as air-to-fuel ratio control) using the corrected accurate air flow rate.

The oil mist generation device in the present invention may include an oil jet that jets oil into the crank chamber or the engine internal space communicating with the crank chamber.

The amount of oil mist in blow-by gas existing in blow-by gas in the crank chamber and other portions can be increased by jetting oil from the oil jet when the deposit buildup operation condition is met. The amount of oil supplied to the upstream-side portion of the air intake passage through the communication passage can thereby be increased.

The present invention may further include a collision-type oil separator disposed in the communication passage, the crank chamber or the engine internal space communicating with the crank chamber.

The collision-type oil separator captures oil simply by causing blow-by gas to collide against the wall surface. The collision-type oil separator can therefore have such a characteristic that the oil capture rate is not substantially changed with change in the blow-by gas flow rate. The amount of oil supplied to the upstream-side portion of the air intake passage can thereby be increased effectively when the deposit buildup operation condition under which a need arises to increase the amount of oil is met.

The oil supply apparatus in the present invention may include: oil capture means for capturing and collecting oil contained in the blow-by gas by separating the oil from the blow-by gas, the oil capture means being provided in an intermediate portion of the communication passage; a bypass passage that branches off from the communication passage at an upstream-side connection portion on the upstream side of the oil capture means in the blow-by gas flow direction and merges into the communication passage at a downstream-side connection portion on the downstream side of the oil capture means in the blow-by gas flow direction; flow passage change means capable of selecting a blow-by gas flow passage form between an oil-capturing flow passage form for causing blow-by gas to pass through the oil capture means and a non-oil-capturing flow passage form for causing blow-by gas to flow through the bypass passage without passing through the oil capture means; and flow passage control means for controlling the flow passage change means so that the non-oil-capturing flow passage form is selected when the deposit buildup operation condition is met.

A buildup of a deposit in the compressor due to introduction of an oil mist of a large particle size into the compressor (an increase in the amount of oil mist supplied) under the deposit buildup operation condition can thereby be effectively prevented. Also, both reduction of the oil consumption and prevention of a deposit buildup in the compressor can be simultaneously achieved in a favorable way in the internal combustion engine provided with the above-described oil capture means.

The flow passage control means in the present invention may control the flow passage change means so that the non-oil-capturing flow passage form is intermittently obtained when the deposit buildup operation condition is met.

The risk of the flow passage change means being made immovable by oil attached when the non-oil-capturing flow passage form is used can thereby be reduced while a buildup of a deposit is prevented under the deposit buildup operation condition.

The flow passage change means in the present invention may be a switch valve provided in the downstream-side connection portion or an intermediate portion of the bypass passage, the switch valve functioning to change the blow-by gas flow passage form.

The risk of the flow passage change means being made immovable by oil attachment can thereby be reduced in comparison with a case where the flow passage change means is set in the upstream-side connection portion.

The compressor in the present invention may include: a turbine shaft, the impeller of the compressor being provided at one end of the turbine shaft; a compressor housing in which the impeller is housed and a diffuser portion is formed downstream of the impeller; and a center housing connected to the compressor housing. Also, the oil supply apparatus may include: an oil passage formed in the center housing, oil being supplied to a bearing portion for the turbine shaft through the oil passage; an oil communication passage that provides communication between the oil passage and the diffuser portion; opening and closing means capable of opening and closing the oil communication passage; and diffuser portion oil supply means for supplying oil from the oil passage to the diffuser portion by causing the opening and closing means to open the oil communication passage when the deposit buildup operation condition is met.

If the oil supply apparatus is arranged as described above, oil can be led to the diffuser portion formed on the downstream side of the impeller of the compressor when the deposit buildup operation condition is met. A deposit attached to the diffuser portion can be subjected to cleaning and removed by increasing the amount of oil supplied to the diffuser portion corresponding to the internal passage in the compressor in a way such as described above while inhibiting damaging of the impeller.

The opening and closing means in the present invention may be a check valve capable of opening when the pressure in the oil passage is higher than the pressure in the diffuser portion.

In the above-described arrangement, the check valve can be opened by producing a pressure difference between the oil passage and the diffuser portion. Oil can thereby be to lead to the diffuser portion.

The present invention may further include a throttle valve provided in the air intake passage on the downstream side of the diffuser portion. The diffuser portion oil supply means may include throttle abrupt opening means for abruptly opening the throttle valve when the deposit buildup operation condition is met while the internal combustion engine is idling.

In the above-described arrangement, control to abruptly open the throttle valve at a convenient time when the engine enters the idling state is performed. Air around the compressor is thereby caused to flow abruptly to the internal combustion engine side to produce a negative pressure in the diffuser portion. By this negative pressure, a pressure difference is produced between the oil passage and the diffuser portion, thus enabling opening of the check valve.

The present invention may further include a variable nozzle that reduces exhaust pressure exerted on a turbine wheel provided at the other end of the turbine shaft by increasing the opening of the nozzle. Also, the diffuser portion oil supply means may include variable nozzle opening means for increasing the opening of the variable nozzle when the deposit buildup operation condition is met while the internal combustion engine is idling.

In the above-described arrangement, an increase in the rotation of the turbine wheel can be prevented by increasing the opening of the variable nozzle. A large negative pressure can thereby be produced in the diffuser portion.

The present invention may further include: an EGR passage connected between an exhaust passage of the internal combustion engine and the air intake passage, part of exhaust gas being recirculated to the air intake passage through the EGR passage; and an EGR valve capable of opening and closing the EGR passage. Also, the deposit cleaning means may include EGR valve closing means for closing the EGR valve when the deposit buildup operation condition is met while the internal combustion engine is idling.

In the above-described arrangement, a large negative pressure can be produced in the diffuser portion by closing the EGR valve.

The oil supply apparatus in the present invention may include: oil capture means for capturing and collecting oil contained in the blow-by gas by separating the oil from the blow-by gas, the oil capture means being provided in an intermediate portion of the communication passage; an oil tank which stores oil captured and collected by the oil capture means; and an oil mist injection valve provided at the upstream portion of the air intake passage and connected to the oil tank, an oil mist having such a particle size as to inhibit a deposit buildup in the compressor being supplied to the upstream-side portion through the oil mist injection valve.

In the above-described arrangement, oil can be recovered from blow-by gas and supplied to as an oil mist to the upstream-side portion of the air intake passage through the oil mist injection valve when the deposit buildup operation condition is met. A measure to prevent a deposit buildup in the compressor can reliably be taken when necessary by increasing the amount of oil supplied to the diffuser portion corresponding to the internal passage in the compressor in a way such as described above.

The present invention may further include an LPL-EGR device. Also, the oil supply apparatus may include: deposit buildup determination means for determining whether or not the deposit buildup operation condition is met, based on soot concentration in gas flowing through the internal passage in the compressor, the value of the LPL mixing ratio in the LPL-EGR device and the outlet temperature of the compressor; and control means for opening the oil mist injection valve when the deposit buildup determination means determines that the deposit buildup operation condition is met.

Determination as to whether the deposit buildup operation condition is met can thereby be made with accuracy to speedily achieve oil mist injection and inhibit a deposit buildup in the compressor with reliability.

The oil mist injection valve in the present invention may supply an oil mist of a particle size equal to or larger than a certain value such that the oil mist reaches the outlet of a diffuser portion of the compressor before adhering to the diffuser portion even if the oil mist has landed on a surface of the diffuser portion.

Inhibition of a deposit buildup on a wall surface in the diffuser portion of the compressor can thereby be performed with reliability.

The present invention may further include: a bypass passage that branches off from the communication passage at an upstream-side connection portion on the upstream side of the oil capture means in the blow-by gas flow direction and merges into the communication passage at a downstream-side connection portion on the downstream side of the oil capture means in the blow-by gas flow direction; flow passage change means capable of selecting a blow-by gas flow passage form between an oil-capturing flow passage form for causing blow-by gas to pass through the oil capture means and a non-oil-capturing flow passage form for causing blow-by gas to flow through the bypass passage without passing through the oil capture means; and flow passage control means for controlling the flow passage change means to change the blow-by gas flow passage form between the oil-capturing flow passage form and the non-oil-capturing flow passage form according to an operating condition of the internal combustion engine and whether or not the amount of oil in the oil tank is equal to or larger than an upper limit value. The oil capture means may be a centrifugal separation type of oil separator. The oil mist injection valve may supply an oil mist of a particle size larger than the maximum value of the particle size of oil mists passing through the centrifugal separation type of oil separator.

An oil mist having a certain particle size can thereby be supplied to the upstream-side portion of the air intake passage with stability by the desired timing regardless of the blow-by gas flow passage form.

**Brief Description of Drawings**

Figure 1 is a diagram showing a system configuration of an internal combustion engine in Embodiment 1 of the present invention;

Figure 2 is a diagram schematically showing the internal structure of the internal combustion engine shown in Figure 1;

Figure 3 is a diagram schematically showing an example of an arrangement around an air intake port of a negative-pressure pump;

Figure 4 is a diagram showing details of the configuration of the negative-pressure pump shown in Figure 2;

Figure 5 is a diagram showing the configuration of an internal space in a cylinder head around the negative-pressure pump shown in Figure 2;

Figure 6 is a diagram showing an enlarged illustration of an example of the structure around an oil separator chamber shown in Figure 2;

Figure 7 is a sectional view showing details of the configuration of a compressor shown in Figure 1;

Figure 8 is a diagram for explaining a concrete mechanism by which a deposit is generated in the compressor;

Figure 9 is a flowchart of a routine that is executed in Embodiment 1 of the present invention;

Figure 10 is a diagram showing the flow of gas when an atmospheric relief valve is opened;

Figure 11 is a diagram for explaining a deposit buildup prevention effect based on supply of a large amount of oil mist to the compressor;

Figure 12 is a diagram showing the relationship between the amount of oil in blow-by gas and the oil particle size;

Figure 13 is a diagram showing the relationship between a compressor efficiency decrement and engine operating time;

Figure 14 is a diagram showing changes in compressor efficiency due to opening/closing of the atmospheric relief valve;

Figure 15 is a flowchart of a routine that is executed in Embodiment 2 of the present invention;

Figure 16 is a diagram for explaining the effect of the control routine shown in Figure 15;

Figure 17 is a flowchart of a routine that is executed in a modified example of Embodiment 2 of the present invention;

Figure 18 is a diagram for explaining the effect of the control routine shown in Figure 17;

Figure 19 is a diagram schematically showing an arrangement around the air intake port of the negative-pressure pump in Embodiment 3;

Figure 20 is a time chart showing the outline of control executed to effectively use a negative-pressure tank in Embodiment 3 of the present invention;

Figure 21 is a time chart showing the outline of control executed to effectively use the negative-pressure tank in a modified example of Embodiment 3 of the present invention;

Figure 22 is a flowchart of a routine that is executed in Embodiment 4 of the present invention;

Figure 23 is a diagram for explaining an example of the disposition of the negative-pressure pump in the lubricating system of the internal combustion engine 10 shown in Figure 1;

Figure 24 is a diagram for explaining another example of the disposition of the negative-pressure pump in the lubricating system of the internal combustion engine 10 shown in Figure 1;

Figure 25 is a diagram for explaining still another example of the disposition of the negative-pressure pump in the lubricating system of the internal combustion engine 10 shown in Figure 1;

Figure 26 is a diagram for explaining a first modified example of the arrangement on the inlet side of the negative-pressure pump;

Figure 27 is a diagram for explaining a second modified example of the arrangement on the inlet side of the negative-pressure pump;

Figure 28 is a diagram for explaining a third modified example of the arrangement on the inlet side of the negative-pressure pump;

Figure 29 is a diagram for explaining a fourth modified example of the arrangement on the inlet side of the negative-pressure pump;

Figure 30 is a diagram schematically showing the internal structure of an internal combustion engine in Embodiment 5 of the present invention;

Figure 31 is a diagram for explaining an example of the disposition of oil jets in the lubricating system of the internal combustion engine shown in Figure 30;

Figure 32 is a flowchart of a routine that is executed in Embodiment 5 of the present invention;

Figure 33 is a flowchart of a routine that is executed in Embodiment 6 of the present invention;

Figure 34 is a diagram for explaining another example of the disposition of oil jets in the lubricating system of the internal combustion engine shown in Figure 30;

Figure 35 is a diagram for explaining a system configuration of an internal combustion engine in Embodiment 7 of the present invention;

Figure 36 is a diagram showing the relationship between the amount of oil mist and the particle size in blow-by gas (oil mist particle size distribution) with respect to the existence/nonexistence of the oil separator;

Figure 37 is a diagram for explaining the influence of variation in oil mist particle size on a buildup of a deposit from an oil mist taken into the compressor;

Figure 38 is a diagram showing the relationship between the compressor efficiency decrement $\Delta\eta c$ and the internal combustion engine operating time with respect to the existence/nonexistence of the oil separator;

Figure 39 is a flowchart of a routine that is executed in Embodiment 7 of the present invention;

Figure 40 is a diagram or explaining the effect of the control routine shown in Figure 39;

Figure 41 is a diagram showing the relationship between a buildup of a deposit in the compressor and changes in compressor efficiency $\eta c$ with respect to a case where oil capture with the oil separator is performed and a case where oil capture with the oil separator is not performed;

Figure 42 is a diagram for explaining variations of the place for disposition of a switch valve;

Figure 43 is a flowchart of a routine that is executed in Embodiment 8 of the present invention;

Figure 44 is a diagram for explaining the effect of the control routine shown in Figure 43;

Figure 45 is a diagram showing a system configuration of an internal combustion engine in Embodiment 9 of the present invention;

Figure 46 is a sectional view showing portions of a compressor housing and a center housing of a turbocharger;

Figure 47 is a flowchart of a routine that is executed in Embodiment 9 of the present invention;

Figure 48 is a diagram showing a system configuration of an internal combustion engine in Embodiment 10 of the present invention;

Figure 49 is an enlarged schematic diagram of a portion in the vicinity of an oil mist recovery tank and an oil mist injection valve;

Figure 50 is a diagram showing the relationship between a deposit buildup and the soot concentration;

Figure 51 is a diagram for explaining the relationship between a deposit buildup and the LPL-EGR mixing ratio;

Figure 52 is a diagram for explaining the relationship between a deposit buildup and the LPL-EGR mixing ratio;

Figure 53 is a diagram for explaining the relationship between a deposit buildup and the compressor outlet temperature;

Figure 54 is a flowchart of a routine that is executed in Embodiment 10 of the present invention; and

Figure 55 is a flowchart of a routine that is executed in Embodiment 10 of the present invention.

## Description of Embodiments

Embodiment 1

[System Configuration of Embodiment 1]

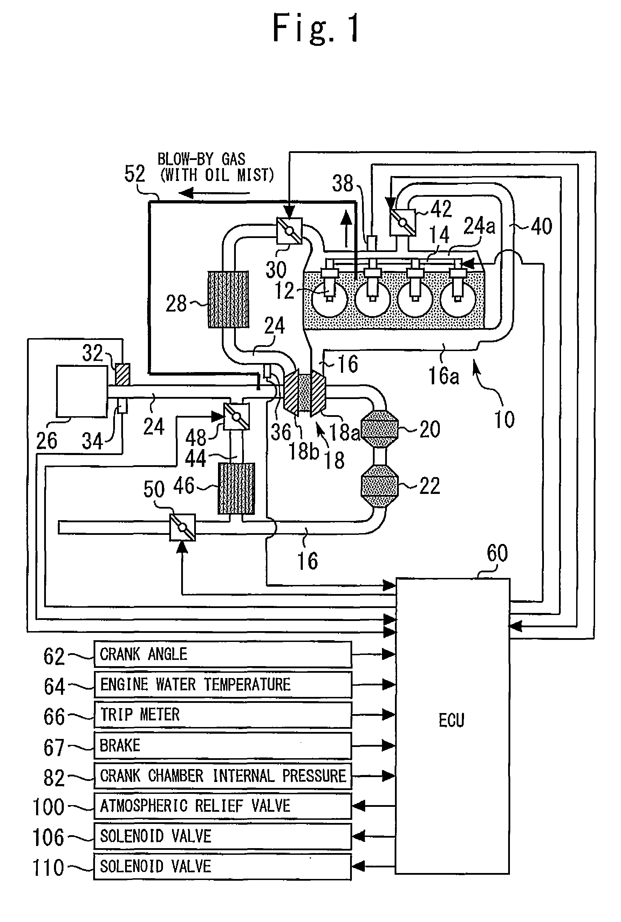

Figure 1 is a diagram showing a system configuration of an internal combustion engine 10 in Embodiment 1 of the present invention. A system shown in Figure 1 includes the internal combustion engine 10. The internal combustion engine 10 is assumed to be a four-cycle diesel engine (compression-ignition internal combustion engine) 10 mounted on a vehicle as a power source for the vehicle. The internal combustion engine 10 in the present embodiment is of a straight four-cylinder type. However, the number of cylinders and the cylinder arrangement of the internal combustion engine of the present invention are not limited to those of the straight four-cylinder type.

Each cylinder of the internal combustion engine 10 is provided with an injector 12 for directly injecting fuel into the cylinder. The injector 12 for each cylinder is connected to a shared common rail 14. High-pressure fuel pressurized by a supply pump (not illustrated) is supplied into the common rail 14. The fuel is supplied from the common rail 14 to the injectors 12 for the cylinders. Exhaust gas discharged from the cylinders is collected by an exhaust manifold 16a and flows into an exhaust passage 16.

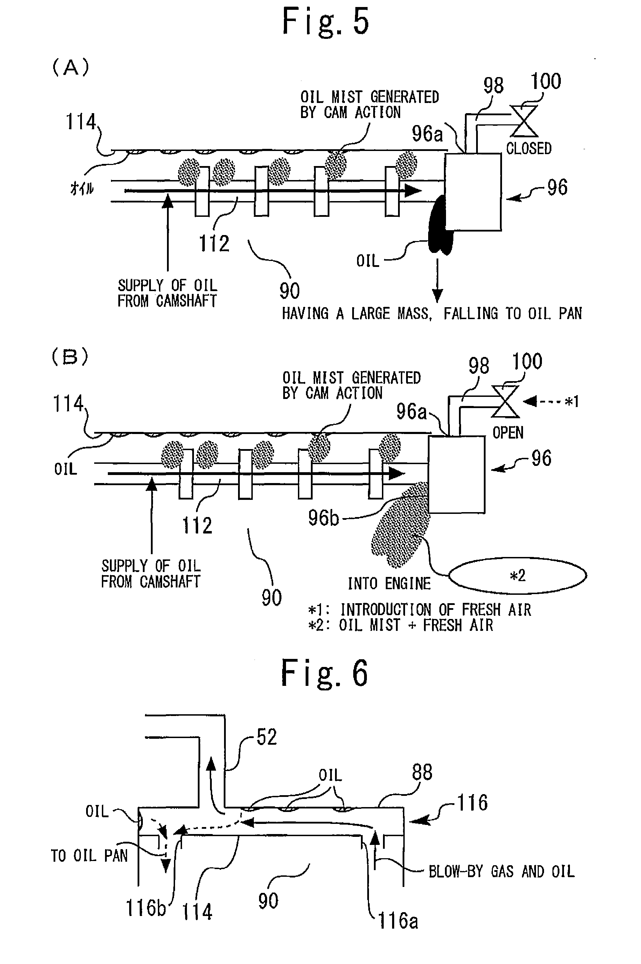

The internal combustion engine 10 is provided with a variable nozzle type of turbocharger 18. The turbocharger 18 has a turbine 18a operated by the exhaust energy of exhaust gas and a compressor 18b integrally connected to the turbine 18a by a connecting shaft 18c (described later with reference to Figure 6) and rotationally driven by the exhaust energy of the exhaust gas supplied to the turbine 18a. The compressor 18b is a centrifugal compressor, as described later with reference to Figure 6. The turbine 18a of the turbocharger 18 is disposed in an intermediate portion of the exhaust passage 16. Further, the turbocharger 18 has a variable nozzle (VN) (not illustrated) for adjusting the rate of flow of exhaust gas supplied to the turbine 18a. The supercharging pressure can be controlled through adjustment of the opening of the variable nozzle with an actuator not illustrated (e.g., one using a negative pressure produced by a negative-pressure pump 96 described later). In the exhaust passage 16 on the downstream side of the turbine 18a, an oxidation catalyst 20 and a diesel particulate filter (DPF) 22 are disposed in this order from the upstream side to purify the exhaust gas.

An air cleaner 26 is provided at the inlet of an air intake passage 24 of the internal combustion engine 10. Air drawn in through the air cleaner 26 is compressed by the compressor 18b of the turbocharger 18 and thereafter cooled by an intercooler 28. The intake air that has passed through the intercooler 28 is distributed by an air intake manifold 24a to flow into the cylinders. A diesel throttle 30 is provided between the intercooler 28 and the air intake manifold 24a in the air intake passage 24.

An air flow meter 32 for sensing the amount of intake air and a first intake air temperature sensor 34 for sensing the temperature of intake air at the inlet of the air intake passage 24 (intake air inlet temperature T0) are provided at the air intake passage 24 in the downstream vicinity of the air cleaner 26. A second intake air temperature sensor 36 for sensing the temperature of intake air discharged from the compressor 18b (compressor outlet temperature) is provided at the air intake passage 24 in the vicinity of the outlet of the compressor 18b. Further, an intake air pressure sensor 38 for sensing the air intake manifold pressure (supercharging pressure) is provided at the air intake manifold 24a.

The system shown in Figure 1 also includes a high-pressure exhaust gas recirculation passage (high pressure loop (HPL)) 40. The HPL 40 is formed so as to provide communication between the exhaust manifold 16a located on the upstream side of the turbine 18a and the air intake manifold 24a located on the downstream side of the compressor 18b. An HPL-EGR valve 42 for adjustment of the amount of recirculated exhaust gas (EGR gas) that flows back into the air intake manifold 24a through the HPL 40 is disposed in an intermediate portion of the HPL 40.

Further, the system shown in Figure 1 includes a low-pressure exhaust gas recirculation passage (low pressure loop (LPL)) 44. The LPL 44 is formed so as to provide communication between the exhaust passage 16 on the downstream side of the turbine 18a and on the downstream side of the DPF 22 and the air intake passage 24 on the upstream side of the compressor 18b. An EGR cooler 46 for cooling EGR gas flowing through the LPL 44 and an LPL-EGR valve 48 for adjustment of the amount of EGR gas recirculated to the air intake passage 24 through the LPL 44 are provided in intermediate portions of the LPL 44 in this order from the upstream side in the direction of the EGR gas flow. An exhaust throttle valve 50 is disposed in the exhaust passage 16 on the downstream side of the point of connection between the LPL 44 and the exhaust passage 16.

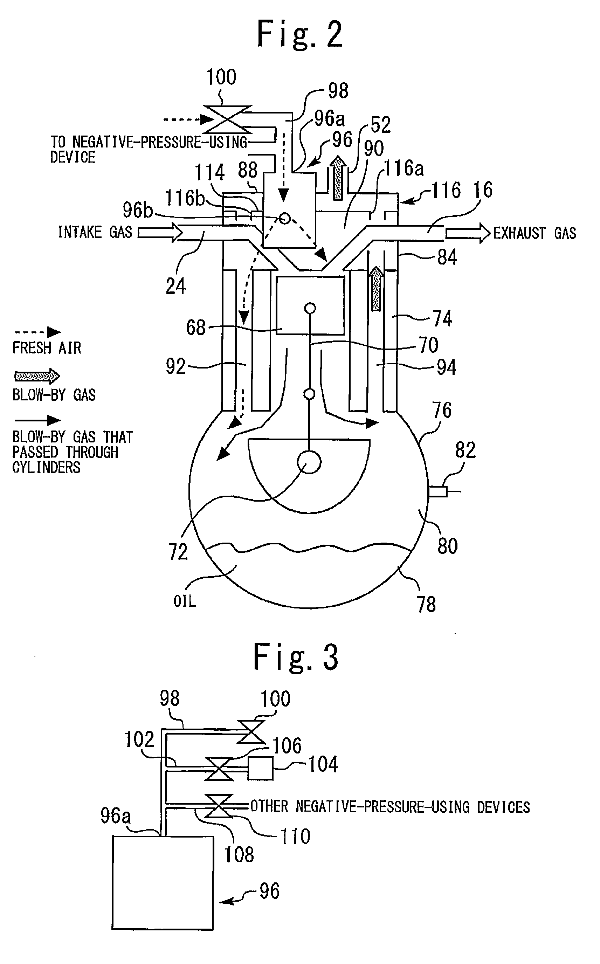

Further, the system in the present embodiment includes an electronic control unit (ECU) 60. To an input section of the ECU 60, various sensors for sensing operating state of the internal combustion engine 10, including a crank angle sensor 62 for sensing the engine speed, a water temperature sensor 64 for sensing the engine cooling water temperature and a crank chamber internal pressure sensor 82 for sensing the pressure in a crank chamber 80, are connected as well as the above-described air flow meter 32, the intake air temperature sensors 34 and 36 and the intake air pressure sensor 38. A trip meter 66 for sensing the distance traveled by the vehicle on which the internal combustion engine 10 is mounted and a brake sensor 67 for sensing the pedal force on a brake pedal on the vehicle or the position (the amount of depression) of the brake pedal are also connected to the ECU 60. Further, to an output section of the ECU 60, various actuators for controlling the operation of the internal combustion engine 10, including an atmospheric relief valve 100 (see Figure 2) for opening and closing a gas introduction passage 98 (see Figure 2), a solenoid valve 106 (see Figure 3) for opening and closing a brake negative-pressure passage 102 (see Figure 3), a solenoid valve 110 (see Figure 3) for opening and closing a negative-pressure passage 108 (see Figure 3), are connected as well as the above-described injector 12, diesel throttle 30, HPL-EGR valve 42, LPL-EGR valve 48 and exhaust throttle valve 50. The ECU 60 controls the operating state of the internal combustion engine 10 by driving the above-described various actuators on the basis of outputs from the above-described various sensors and predetermined programs.

Figure 2 is a diagram schematically showing the internal structure of the internal combustion engine 10 shown in Figure 1.

A piston 68 is reciprocatingly movably disposed in each cylinder of the internal combustion engine 10. The piston 68 is connected to a crankshaft 72 by a connecting rod 70. A crankcase 76 is disposed below a cylinder block 74, which is a member forming the cylinders of the internal combustion engine 10. An oil pan 78 for storing oil for lubricating portions of the internal combustion engine 10 is disposed below the crankcase 76.

The crank chamber 80 is formed on the lower side (crankshaft 72 side) of the piston 68 as a space surrounded by the piston 68, the cylinder block 74, the crankcase 76 and the oil pan 78. The above-mentioned crank chamber internal pressure sensor 82 is attached to the crankcase 76.

On the other hand, a cylinder head 84 in which portions of the air intake passage 24 and the exhaust passage 16 are formed is disposed above the cylinder block 74. A combustion chamber 86 is formed on the upper side of the piston 68 as a space surrounded between the piston 68 and the cylinder head 84. In Figure 2, illustration of an intake valve and an exhaust valve is omitted.

A head cover 88 that covers the cylinder head 84 is disposed above the cylinder head 84. An internal space 90 surrounded by the cylinder head 84 and the head cover 88 communicates with the crank chamber 80 through internal communication passages 92 and 94 formed in the cylinder block 74 and the cylinder head 84. That is, in the engine (in the main body of the internal combustion engine 10), the internal communication passages 92 and 94 and the above-described internal space 90 are formed as engine internal spaces which communicates with the crank chamber 80.

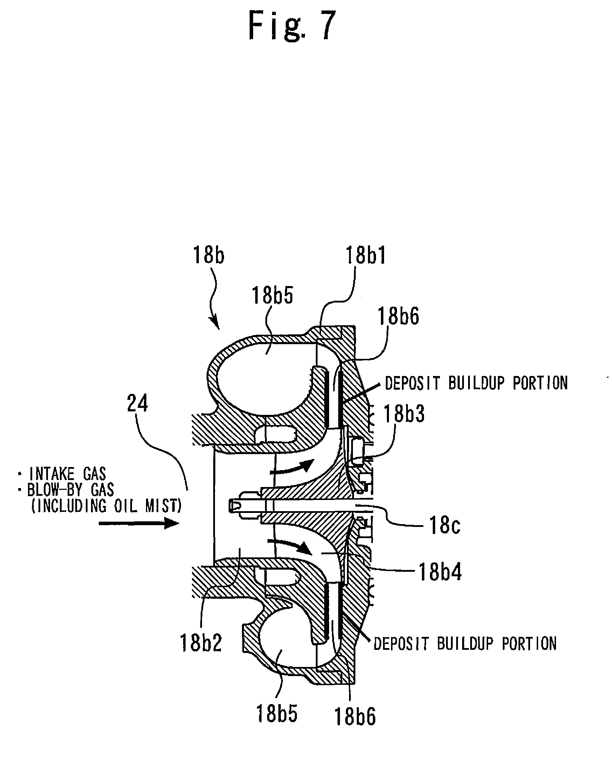

The internal combustion engine 10 has a communication passage 52 that provides communication between the internal space 90 and the air intake passage 24 on the upstream side of the compressor 18b (more specifically, a compressor impeller 18b3 (see Figure 7)). As shown in Figure 2, combustion gas and unburnt mixture gas (blow-by gas) leaking out from the combustion chamber 86 side by passing through the gap between the piston 68 and the cylinder wall surface are introduced into the crank chamber 80. The crank chamber 80 and the internal communication passages 92 and 94 and the internal space 90 which are the engine internal spaces that communicate with the crank chamber 80 function as blow-by gas passages through which the blow-by gas flows in the engine. The communication passage 52 functions as a blow-by gas passage for recirculating blow-by gas existing in the engine to the air intake passage 24.

A negative-pressure pump (e.g., a vacuum pump) 96 is provided in the cylinder head 84 of the internal combustion engine 10, as shown in Figure 2. The communication passage 52 and the negative-pressure pump 96 are disposed near one end of the internal combustion engine 10 in the axial direction of the crankshaft 72 as seen from Figure 5 referred to later. One end of the gas introduction passage 98 having the other end opened to the atmosphere is connected to an air intake port 96a of the negative-pressure pump 96. The atmospheric relief valve 100, which is a solenoid valve for opening and closing the gas introduction passage 98, is provided in an intermediate portion of the gas introduction passage 98. A discharge port 96b of the negative-pressure pump 96 communicates with the internal space 90 in the cylinder head 84.

A passage that connects to certain negative-pressure-using devices using a negative pressure produced by the negative-pressure pump 96 is connected to the gas introduction passage 98 at a position closer to the air intake port 96a relative to the position of the atmospheric relief valve 100. Figure 3 is a diagram schematically showing an example of an arrangement around the air intake port 96a of the negative-pressure pump 96. One end of the brake negative-pressure passage 102 is connected to the gas introduction passage 98. The other end of the brake negative-pressure passage 102 is connected to a brake booster 104 (corresponding to one of the negative-pressure-using devices) provided in the brake system of the vehicle on which the internal combustion engine 10 is mounted. The solenoid valve 106 for opening and closing the brake negative-pressure passage 102 is provided in an intermediate portion of the brake negative-pressure passage 102. The negative-pressure passage 108 for supplying a negative pressure to the other negative-pressure-using devices (e.g., actuators for driving the variable nozzle, the HPL-EGR valve 42, the LPL-EGR valve 48 and a waste gate valve (not illustrated)) is also connected to the gas introduction passage 98. The solenoid valve 110 for opening and closing the negative-pressure passage 108 is also provided in an intermediate portion of the negative-pressure passage 108.

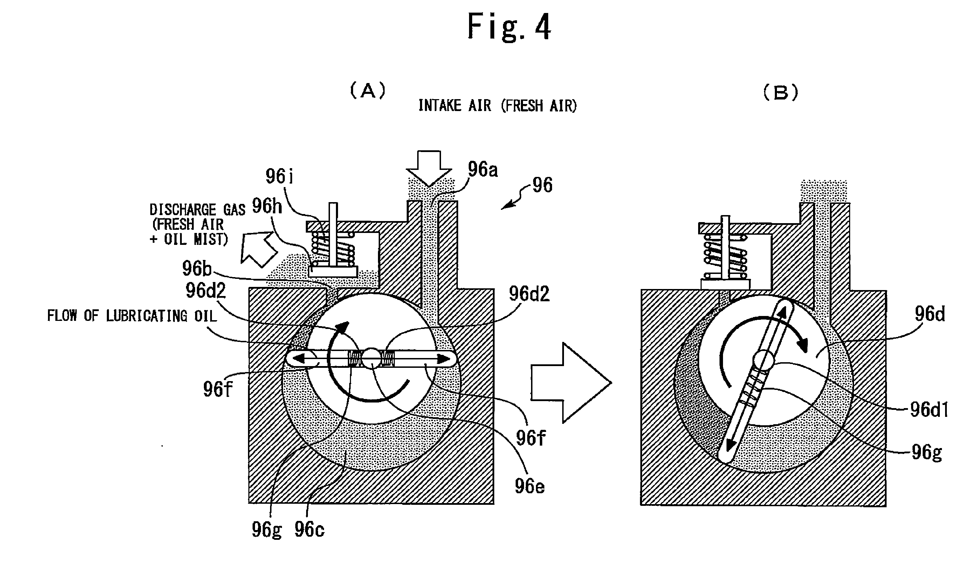

Figure 4 is a diagram showing details of the configuration of the negative-pressure pump 96 shown in Figure 2.

As shown in Figure 4, a rotor 96d in the form of a disk is disposed in a cylinder 96c of the negative-pressure pump 96. The rotor 96d is disposed in a state of being eccentric to the generally cylindrical shape of the cylinder 96c. The rotor 96d is fixed concentrically with a camshaft 112 (see Figure 5 referred to later). That is, the negative-pressure pump 96 is driven by using a torque from the camshaft 112.

An oiling port 96e that communicates with an oil passage (not illustrated) formed in the camshaft (air intake camshaft, exhaust camshaft or intake/exhaust camshaft) 112 is formed in a center shaft 96d1 of the rotor 96d. A pair of rotor grooves 96d2 are formed in the rotor 96d so as to extend along opposite two radial directions about the rotor center shaft 96d1. In each rotor groove 96d2, a vane 96f capable of advancing and retreating in the radial direction of the rotor 96d along the rotor groove 96d2 is installed. Springs 96g for urging the vanes 96f outwardly along the radial directions of the rotor 96d are disposed between the vanes 96f and the rotor center shaft 96d1.

The air intake port 96a of the negative-pressure pump 96 communicates with the gas introduction passage 98, as already described. On the discharge port 96b communicating with the internal space 90 in the cylinder head 84, a discharge valve 96h for opening and closing the discharge port 96b is provided. The discharge valve 96h is urged by a spring 96i so as to close the discharge port 96b.

In the negative-pressure pump 96 thus configured, the pair of vanes 96f extend and retract in the radial directions of the rotor 96d with rotation of the rotor 96d, as shown in Figures 4(A) and 4(B). The internal space in the cylinder 96c is divided into three or two spaces by partitioning with the pair of vanes 96f according to the rotational position of the rotor 96d. Air taken into the divided space in the cylinder 96c from the air intake port 96a is compressed with rotation of the rotor 96d. When the force of the pressure of compressed air to move the discharge valve 96h upward prevails over the urging force of the spring 96i, the discharge valve 96h is opened to discharge air from the discharge port 96b. At this time, oil supplied from the oiling port 96e in the rotor center shaft 96d1 into the cylinder 96c is discharged as an oil mist together with air (fresh air).

Blow-by gas passing through the gap between the piston 68 and the cylinder wall surface is introduced into the crank chamber 80 when the internal combustion engine 10 is operating, as already described. When the atmospheric relief valve 100 is open, fresh air drawn from the gas introduction passage 98 into the negative-pressure pump 96 is discharged together with the oil mist into the internal space 90 in the cylinder head 84. As indicated by broken-line arrows in Figure 2, part of the fresh air and the oil mist discharged from the negative-pressure pump 96 is led into the crank chamber 80 through the internal communication passage 92 closer to the discharge port 96b, and the other part of the air and the oil mist is introduced into the internal space 90. The blow-by gas existing in the crank chamber 80 is led into the internal space 90 through the other internal communication passage 94 together with the fresh air and the oil mist introduced from the internal communication passage 92 into the crank chamber 80. The blow-by gas led into the internal space 90 in this way (including the fresh air and the oil mist from the negative-pressure pump 96) is flowed to the air intake passage 24 on the upstream side of the compressor 18b via the communication passage 52 by the pressure difference between the internal space 90 communicating with the crank chamber 80 and the air intake passage 24 on the upstream side of the compressor 18b. The oil mist introduced into the air intake passage 24 is supplied to an internal passage (including a diffuser portion 18b6) in the compressor 18b along with the flow of intake air.

As described above, the internal combustion engine 10 in the present embodiment is provided with an oil supply apparatus that supplies oil to the internal passage in the compressor 18b by using the communication passage 52. In order to generate oil mist, the oil supply apparatus includes an oil mist generation device having the negative-pressure pump 96, the gas introduction passage 98 and the atmospheric relief valve 100. With an amount according to the difference in pressure between the crank chamber 80 and the air intake passage 24 on the upstream side of the compressor 18b, blow-by gas containing an oil mist is supplied into a portion on the upstream of the compressor 18b through the communication passage 52. To the amount of oil mist supplied in this way, an amount of oil mist discharged from the negative-pressure pump 96 is added when the atmospheric relief valve 100 is open. The amount of oil mist can thus be increased.

Figure 5 is a diagram showing the configuration of the internal space 90 in the cylinder head 84 around the negative-pressure pump 96 shown in Figure 2. More specifically, Figure 5(A) shows the operation when the atmospheric relief valve 100 is closed, and Figure 5(B) shows the operation when the atmospheric relief valve 100 is open.

As shown in Figure 5, the negative-pressure pump 96 is supplied with oil from the oil passage formed in the camshaft 112. In the state shown in Figure 5(A) where the atmospheric relief valve 100 is closed, no fresh air (atmospheric air) is supplied to the negative-pressure pump 96. In this state, therefore, oil supplied to the negative-pressure pump 96 is discharged from the discharge port 96b in a state of forming a mass, as shown in Figure 5(A). In this case, since the mass of oil is large, it falls to the oil pan 78. In this case, therefore, the oil mist in the blow-by gas can not be effectively increased.

On the other hand, in the state shown in Figure 5(B) where the atmospheric relief valve 100 is open, air supplied from the gas introduction passage 98 and oil supplied from the camshaft 112 are compressed in the negative-pressure pump 96 while being mixed with each other. In this state, therefore, oil is discharged together with air (fresh air) from the discharge port 96b of the negative-pressure pump 96, thereby supplying an oil mist in the engine in a spraying manner, as shown in Figure 5(B).

As shown in Figure 5, a baffle plate 114 having a wall surface for causing oil contained in blow-by gas and oil scattered from members in the valve operating system, e.g., the camshaft 112 to fall is disposed in the internal space 90 on the upper side of the camshaft 112 (the head cover 88 side). When the atmospheric relief valve 100 is open, an oil mist and fresh air discharged from the negative-pressure pump 96 are supplied to the internal space 90 while involving an oil mist generated by the movements of the members in the valve operating system, such as by the rotation of the camshaft 112, and oil attached to the wall surface of the baffle plate 114.

Further, when the atmospheric relief valve 100 is open, air is introduced from the discharge port 96b of the negative-pressure pump 96 into the internal space 90, thereby increasing the amount of blow-by gas flowing in the engine. This can increase the amount of taking away of the oil mist existing in the crank chamber 80 (such as an oil mist generated by the movements of the piston 68 and the connecting rod 70) (increase the amount of blow-by gas collected in the air intake passage 24).

As shown in Figure 2, an oil separator chamber 116 for separating oil from blow-by gas is partitioned off in the internal space 90 near the portion of the communication passage 52 connected to the head cover 88 (the internal space 90 above the baffle plate 114). Figure 6 is a diagram showing an enlarged illustration of an example of the structure around the oil separator chamber 116 shown in Figure 2. As shown in Figure 6, the oil separator chamber 116 is provided with its inlet portion 116a that communicates with the internal space 90 in the cylinder head 84. The above-described communication passage 52 is, more specifically, provided at an outlet portion of the oil separator chamber 116.

Blow-by gas in the internal space 90 is flowed toward the air intake passage 24 by the pressure difference between the internal space 90 communicating with the crank chamber 80 and the air intake passage 24 on the upstream side of the compressor 18b. To capture oil contained in blow-by gas, the inlet portion 116a and the outlet portion (the portion connected to the communication passage 52) of the oil separator chamber 116 are disposed at a predetermined distance from each other, as shown in Figure 6, such that alignment between the flow of gas passing through the inlet portion 116a and the flow of gas passing through the outlet portion is avoided. This configuration enables blow-by gas flowing from the inlet portion 116a into the oil separator chamber 116 to move toward the outlet portion while changing its flowing direction, as indicated by arrows in Figure 6. Oil in the blow-by gas colliding against the wall surface of the oil separator chamber 116 while passing through the interior of the oil separator chamber 116 attaches to the wall surface. In this way, the oil is separated, captured and collected from the blow-by gas. The oil captured and collected by attaching to the wall surface is returned to the oil pan 78 via an oil recovery hole 116b and the internal communication passage 92. Thus, the oil separator chamber 116 provided in the internal combustion engine 10 in the present embodiment for the purpose of limiting the oil consumption is a collision-type oil separator.

[About Buildup of Deposit in Compressor]

A buildup of a deposit on an inner portion (diffuser portion 18b6) of the compressor 18b, which is a problem arising when degraded oil in mist form is contained in blow-by gas introduced into the air intake passage 24, will be described.

Figure 7 is a sectional view showing details of the configuration of the compressor 18b shown in Figure 1.

The compressor 18b intermediates between sections of the air intake passage 24, and the internal passage in a housing 18b1 of the compressor 18b functions as a portion of the air intake passage 24. That is, the internal passage in the compressor 18b is included in the air intake passage 24. As shown in Figure 7, a compressor inlet portion 18b2 connected to the air intake passage 24 on the intake upstream side, an impeller portion 18b4 in which the compressor impeller 18b3 fixed to the connecting shaft 18c is housed, a spiral scroll portion 18b5, and the diffuser portion 18b6 are formed in the housing 18b1 on the compressor 18b side in the turbocharger 18. The diffuser portion 18b6 is a passage in the form of a disk that is positioned on the outer circumference side relative to the impeller portion 18b4 between the impeller portion 18b4 and the scroll portion 18b5.

Intake gas taken into the compressor 18b from the compressor inlet portion 18b2 is pressurized to have a high temperature when passing through the impeller portion 18b4 and the diffuser portion 18b6, then passes through the scroll portion 18b5 and is discharged to the air intake passage 24 on the downstream side of the compressor 18b.

As shown in Figure 1, blow-by gas is introduced to a portion in the air intake passage 24 on the upstream side of the compressor 18b through the communication passage 52. Therefore, if an oil mist is contained in the blow-by gas introduced into the air intake passage 24, the oil mist is taken into the compressor 18b. If the oil taken into the compressor 18b is degraded (contains soot), there is a concern that when the oil mist is exposed to high temperature in the compressor 18b, a deposit is produced in the internal passage in the compressor 18b (more specifically, on a wall surface in the diffuser portion 18b6, as shown in Figure 7) and a buildup of the deposit occurs in the diffuser portion 18b6. There is also a concern that a degradation in performance of the turbocharger 18 occurs with the progress of a buildup of such a deposit in the diffuser portion 18b6.

In the internal combustion engine 10 of the present embodiment, EGR gas is introduced into the vicinity of the compressor inlet portion 18b2 of the air intake passage 24 through the LPL 44. If EGR gas is introduced upstream of the compressor 18b in such a way, high-temperature EGR gas flows into the compressor 18b without being sufficiently mixed with fresh air having a low temperature (ordinary temperature). In such a case, there is a possibility of an internal portion (diffuser portion 18b6) of the compressor 18b locally having a high temperature. If a degraded oil mist is brought into contact with such a local high-temperature portion, the possibility of generation of a deposit is increased. Also, during high-load operation in an operating region in which EGR using the LPL 44 is not used, the internal temperature of the compressor 18b is increased and the possibility of generation of a deposit is increased.

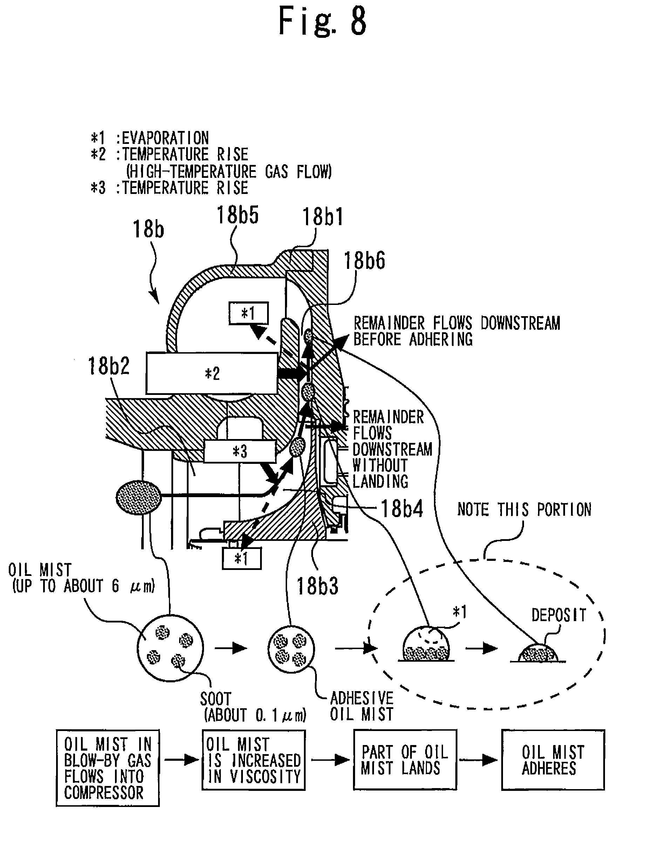

Figure 8 is a diagram for explaining a concrete mechanism by which a deposit is generated in the compressor 18b.

As shown in Figure 8, an oil mist contained in the blow-by gas is of about 6 $\mu$m or less in diameter. A degraded oil mist contains soot of about 0.1 $\mu$m in diameter. When such an oil mist flows into the impeller portion 18b4, the temperature of the oil mist and intake air is increased and an oil part evaporates. As a result, the viscosity and the adhesiveness of the oil mist are increased.

Thereafter, when the deposit that has a high viscosity flows into the diffuser portion 18b6, part of the oil mist that has flown in lands on a surface in the diffuser portion 18b6 and the other part of the oil mist flows downstream without landing. The oil mist that has landed on the surface in the diffuser portion 18b6 further evaporates by being exposed to high-temperature intake air. As a result, part of the oil mist that has landed adheres to the diffuser portion 18b6 to be a deposit, while the other part of the oil mist flows downstream instead of adhering.

[Control Specific to Embodiment 1]

The inventors of the present invention eagerly studied and found that when oil is brought into the internal passage in the compressor 18b in such a large amount that any part of the oil can not stay long enough to be able to evaporate, no deposit is generated and a significant effect of scaling and removing a deposit attached to the compressor 18b can be obtained.

In the present embodiment, the amount of oil to be supplied into the internal passage in the compressor 18b is increased when a deposit buildup operation condition is met such that there is a concern of a buildup of a deposit in the compressor 18b due to oil contained in blow-by gas is increased compared with when the deposit buildup operation condition is not met.

More specifically, if a deposit builds up in the compressor 18b, the compressor efficiency is reduced. In the present embodiment, when the compressor efficiency is reduced to a value equal to or smaller than a predetermined value during the operation of the internal combustion engine 10, it is determined that the above-described deposit buildup operation condition is met. When the deposit buildup operation condition is met, the atmospheric relief valve 100, which is normally closed, is opened to a predetermined degree of opening to open the gas introduction passage 98.

In the present embodiment, determination is also made as to whether or not there is a deficiency of the negative pressure to be used by the above-described negative-pressure-using devices. If there is a deficiency of the negative pressure, opening of the atmospheric relief valve 100 is prohibited to avoid opening of the gas introduction passage 98.

Further, in the present embodiment, if a request for use by the brake booster 104 of the negative pressure produced by the negative-pressure pump 96 is issued when the gas introduction passage 98 is open, the gas introduction passage 98 is immediately shut by closing the atmospheric relief valve 100.

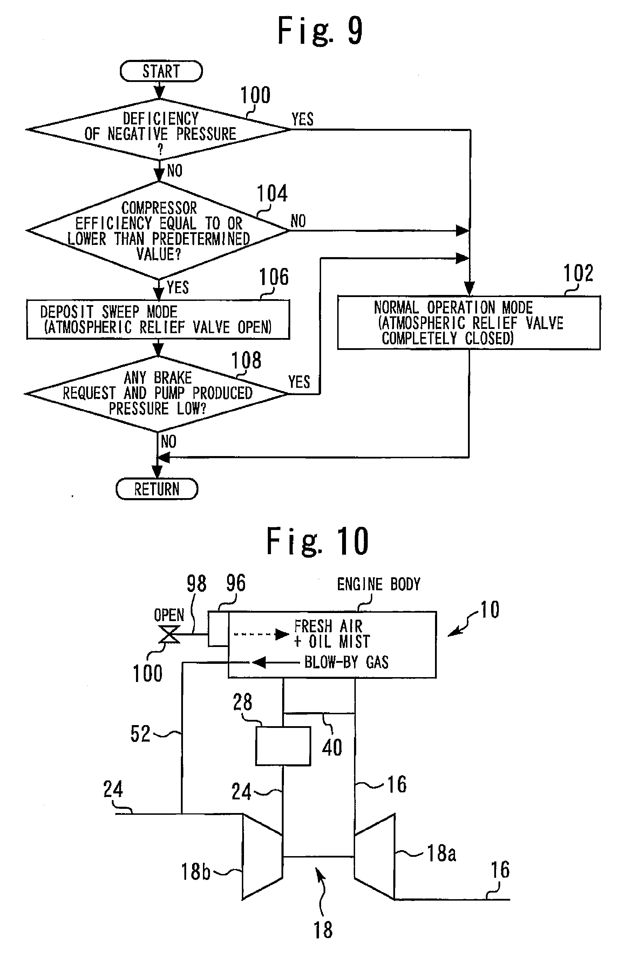

Figure 9 is a flowchart showing a control routine executed by the ECU 60 to realize specific control in Embodiment 1 of the present invention. This routine is assumed to be repeatedly executed in predetermined control cycles.

In the routine shown in Figure 9, determination is first made as to whether or not there is a deficiency of the negative pressure to be used by the above-described negative-pressure-using devices (step 100). Determination in this step 100 is made, for example, by a method described below. That is, the value of negative pressure required for the brake booster 104 is calculated based on the pedal force on the brake pedal or its position (the amount of depression) detected by the above-described brake sensor 67, by using a map or the like set in advance. Similarly, each of the values of negative pressure required for the other negative-pressure-using devices (e.g., the actuator for driving the variable nozzle) is calculated based on the deviation between the present opening (e.g., the opening of the variable nozzle) and a target opening by using a map or the like set in advance. Also, the value of negative pressure that can be secured when the atmospheric relief valve 100 is opened by the predetermined degree of opening is calculated by using a map or the like set in advance. In this step 100, determination is made based on such items of information and, if the value of negative pressure required for each negative-pressure-using device is larger than the value of negative pressure that can be secured when the atmospheric relief valve 100 is opened, it is determined that there is a deficiency of the negative pressure to be used by the negative-pressure-using device.

If a deficiency of the negative pressure is recognized in step 100, a normal operation mode in which the atmospheric relief valve 100 is completely closed is selected as a mode of control of the atmospheric relief valve 100 (step 102).

On the other hand, if it is determined in step 100 that there is no negative pressure deficiency, determination is then made as to whether or not the compressor efficiency is equal to or lower than a predetermined value (step 104). Determination in step 104 is made, for example, by a method described below.

That is, for example, when the deviation between a target supercharging pressure calculated from the engine speed and the engine load (the amount of fuel injected) and the actual supercharging pressure sensed by the intake air pressure sensor 38 is equal to or larger than a predetermined value, it can be determined that the compressor efficiency is reduced to a value equal to or lower than the predetermined value.

Alternatively, when control of the opening of the variable nozzle for making the actual supercharging pressure equal to the target supercharging pressure is performed by using PID control, it can be determined that if the value of the I term (integral term) is increased to a value equal to or larger than a predetermined value, the compressor efficiency is reduced to a value equal to or lower than the predetermined value.

A method described below, for example, may alternatively be used. The compressor efficiency ηc and the compressor outlet temperature T3 can be respectively calculated by the following equations:

$$\eta c = T1((P3/P1)^{(\kappa-1)/\kappa} - 1)/(T3 - T1)$$

$$T3 = T1((P3/P1)^{(\kappa-1)/\kappa} - 1)/\eta c + T1$$

In the above equations, P3 represents the compressor outlet pressure; P1, the compressor inlet pressure or atmospheric pressure; and T1, the compressor outlet temperature.

If the compressor outlet temperature T3 calculated by the above equation is higher than a predetermined value when a target air flow rate specified based on the relationship between the torque (the amount of fuel injected) and the engine speed, a target compressor outlet pressure (air intake manifold pressure), or a pressure ratio (P3/P1) of the compressor 18b is attained, it may be determined that the compressor efficiency ηc is reduced to a value equal to or lower than the predetermined value. The above equations show that if the pressure ratio (P3/P1) of the compressor 18b and the compressor inlet temperature T1 are constant, the compressor output temperature T3 rises when the compressor efficiency ηc is reduced. Reduction of the compressor efficiency ηc to a value equal to or lower than the predetermined value can be ascertained based on the above equations.

In the present embodiment, if it is determined as a result of processing in this step 104 that the compressor efficiency is reduced to a value equal to or lower than the predetermined value, it is determined that the deposit buildup operation condition is met under which there is a concern of a buildup of a deposit in the compressor 18b. It is assumed that once the deposit buildup operation condition is met, the state that meets the deposit buildup operation condition continues until the compressor efficiency reaches (is restored to) another predetermined value higher than the above-described predetermined value.

If the reduction of the compressor efficiency is not recognized in the above-described step 104, the normal operation mode is selected (step 102). On the other hand, if the reduction of the compressor efficiency is recognized, that is, the deposit buildup operation condition is met, a deposit sweep mode is executed in which the atmospheric relief valve 100 is opened by the predetermined degree of opening (step 106). The amount of air supplied to the negative-pressure pump 96 can be adjusted by adjusting the opening of the atmospheric relief valve 100. Through this adjustment, the amount of oil mist discharged from the negative-pressure pump 96 and the amount of blow-by gas in the engine can be controlled. Therefore, the opening of the atmospheric relief valve 100 controlled in this step 106 is set in advance so that an oil mist necessary for prevention of a buildup of a deposit (prevention of attachment (generation) and growth of a deposit, and removal of the attached deposit by cleaning in this case) is supplied to a portion on the upstream side of the compressor 18b while the oil consumption is limited within the range of minimum necessary amounts. The opening of the atmospheric relief valve 100 may be changed according to the extent of buildup of the deposit determined.

In step 108, determination is made as to whether or not both two necessary conditions described below are satisfied. That is, determination is made by using the brake sensor 67 as to whether or not, as the first necessary condition, a request for braking (i.e., a request for use by the brake booster 104 of the negative pressure produced by the negative-pressure pump) has been made in the state where the atmospheric relief valve 100 is open as a result of processing in step 106. Further, determination is made as to whether or not, as the second necessary condition, the negative pressure produced by the negative-pressure pump 96 in the state where the atmospheric relief valve is open is smaller than the negative pressure satisfying the braking request. If the results of determination in this step 108 are affirmative results, the atmospheric relief valve 100 is immediately closed by return to the normal operation mode. When the braking request is canceled, the opening of the atmospheric relief valve 100 is returned to the opening before the closing.

Incidentally, when a negative pressure deficiency is recognized in the above-described routine processing shown in Figure 9, the normal operation mode in which the atmospheric relief valve 100 is completely closed is selected regardless of the compressor efficiency. However, the way of controlling the atmospheric relief valve 100 is not limited to that described above. That is, the control may be such that each time a deficiency of the negative pressure is recognized, the atmospheric relief valve 100 is closed to an opening necessary for making up the deficiency of the negative pressure. That is, the opening of the atmospheric relief valve 100 may be feedback-controlled so that a target negative pressure is secured with no negative pressure deficiency.

In the routine shown in Figure 9, the atmospheric relief valve 100 is opened when it can be determined that the deposit buildup operation condition is met as a result of reduction of the compressor efficiency to a value equal to or lower than the predetermined value in a situation where no negative pressure deficiency is recognized. Figure 10 is a diagram showing the flow of gas when the atmospheric relief valve 100 is opened. Since the negative-pressure pump 96 in the present embodiment uses a torque from the camshaft 112, it is driven at all times during the operation of internal combustion engine 10. In the state where the atmospheric relief valve 100 is open, therefore, an oil mist is supplied to internal portions of the engine (internal space 90) together with fresh air by the operation of the negative-pressure pump 96, as shown in Figure 10. In this state, therefore, the amount of oil mist contained in blow-by gas introduced into the air intake passage 24 on the upstream side of the compressor 18b through the communication passage 52 can be increased and the amount of blow-by gas itself can also be increased. The blow-by gas containing the oil mist introduced into the air intake passage 24 is supplied into the internal passage in the compressor 18b.

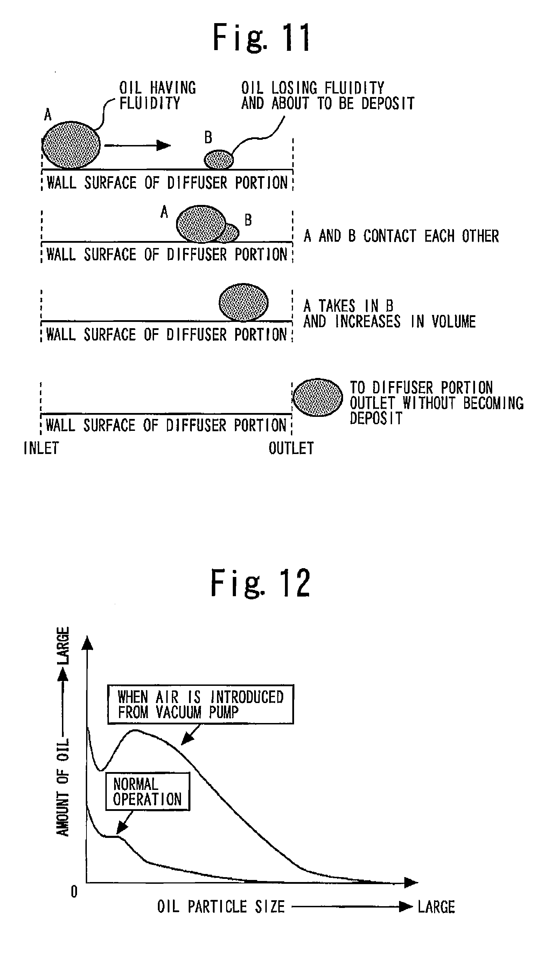

Figure 11 is a diagram for explaining a deposit buildup prevention effect based on supply of a large amount of oil mist to the compressor 18b.

In a case where oil is brought into the interior of the compressor 18b in such a large amount in a state of having fluidity that any part of the oil can not stay long enough to be able to evaporate, a deposit buildup prevention effect such as shown in Figure 11 can be obtained. More specifically, a state is assumed in which, as shown in Figure 11, oil B of a small particle size having lost fluidity and being about to be a deposit lands in front of oil A having fluidity. In this case, when oil A contacts oil B, oil A having fluidity takes in oil B to increase in volume. The oil that has increased in volume reaches the outlet of the diffuser portion 18b6 without losing fluidity and is discharged downstream. Thus, a large amount of oil is supplied into the internal passage in the compressor 18b such that any part of the oil can not stay long enough to be able to evaporate, thereby achieving an effect of cleaning the diffuser portion 18b6 and preventing oil of a small particle size from forming and growing a deposit.

With the arrangement of the internal combustion engine 10 in the present embodiment, the amount of oil mist in blow-by gas can be increased for three reasons described below, as already described with reference to Figure 5. The first reason is that the arrangement includes: the negative-pressure pump 96 having the air intake port 96a connected with the gas introduction passage 98 that can be opened to the atmosphere; and the atmospheric relief valve 100 that opens and closes the gas introduction passage 98. This enables an oil mist to be supplied from the discharge port 96b to internal portions of the engine together with fresh air compressed by the negative-pressure pump 96 when the atmospheric relief valve 100 is open. The second reason is that the discharge gas from the negative-pressure pump 96 is introduced toward the internal space 90 in which the valve operating system is disposed. This enables an oil mist and fresh air discharged from the negative-pressure pump 96 to be supplied into the internal space 90 while involving an oil mist generated by the movements of the members in the valve operating system such as the rotation of the camshaft 112 and oil attached to the wall surface of the baffle plate 114. The third reason is that the discharge gas from the negative-pressure pump 96 is introduced into the internal space 90 that communicates with the crank chamber 80. The amount of blow-by gas flowing in the engine can thereby be increased. This can increase the amount of taking away of the oil mist existing in the crank chamber 80 (oil mist generated by the movements of the piston 68 and the connecting rod 70) (increase the amount of blow-by gas collected in the air intake passage 24) can be increased.

Figure 12 is a diagram showing the relationship between the amount of oil in blow-by gas and the oil particle size.

In the internal combustion engine 10 having the above-described arrangement, the amount of oil in blow-by gas can be largely increased irrespective of the oil particle size when air is introduced from the negative-pressure pump 96 into the engine by opening the atmospheric relief valve 100 compared with the time of the normal operation (when the atmospheric relief valve 100 is closed), as shown in Figure 12. More specifically, in the internal combustion engine 10 having the negative-pressure pump 96 supplied with oil and capable of discharging oil together with the discharge gas (fresh air in the present embodiment), the amount of oil in blow-by gas can be effectively increased in comparison with a case where the amount of oil is increased simply by increasing the amount of blow-by gas.

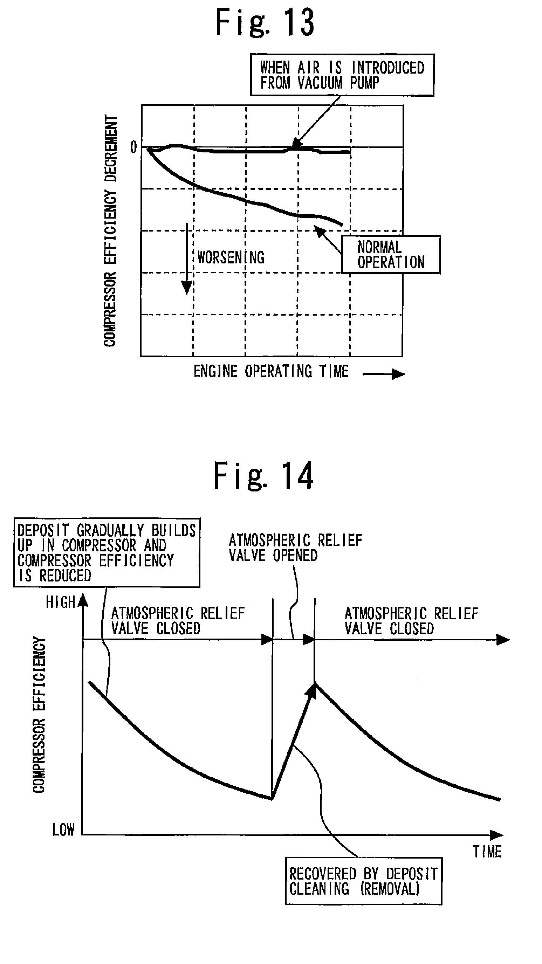

Figure 13 is a diagram showing the relationship between a compressor efficiency decrement and engine operating time.

As shown in Figure 13, during normal operation in a case where no measure is taken against a buildup of a deposit, the compressor efficiency is reduced with the buildup of a deposit with the lapse of engine operating time. In contrast, in the internal combustion engine 10 having the above-described negative-pressure pump 96, generation of a deposit can be prevented in a state where the atmospheric relief valve 100 is opened to introduce air from the negative-pressure pump 96 into the engine, thus preventing a reduction in compressor efficiency.

Figure 14 is a diagram showing changes in compressor efficiency due to opening/closing of the atmospheric relief valve 100.

During the operation of the internal combustion engine 10 in the normal operation mode in which the atmospheric relief valve 100 is open, a deposit builds up gradually in the compressor 18b to reduce the compressor efficiency. In the internal combustion engine 10 having the above-described negative-pressure pump 96, a reduction in compressor efficiency can be prevented by maintaining the atmospheric relief valve 100 in the open state, as described above. However, opening the atmospheric relief valve 100 indiscriminately even in a situation where the compressor efficiency is maintained high can not be said to be a suitable measure since the oil consumption is increased.

In contrast, in the routine described above with reference to Figure 9, the atmospheric relief valve 100 is opened (the deposit sweep mode is executed) when it is determined that the deposit buildup operation condition is met as a result of reduction of the compressor efficiency to a value equal to or lower than the predetermined value, provided that there are no negative pressure deficiency and no other hindrances. A deposit built up in the compressor 18b is thereby subjected to cleaning and removed, thus enabling recovery of the compressor efficiency, as shown in Figure 14. Prevention of reduction of the compressor efficiency to a value equal to or lower than the predetermined value can thus be achieved while the oil consumption is limited.

In general, an internal combustion engine incorporates a negative-pressure pump for drive of a brake and actuators (the above-described negative-pressure-using devices). In the present embodiment, the gas introduction passage 98 opened and closed with the atmospheric relief valve 100 is provided so as to communicate with the air intake port 96a of the negative-pressure pump 96 which corresponds to that ordinarily provided, and the negative-pressure pump 96 is configured so that oil supplied from the camshaft 112 (in one example) is introduced into the engine together with discharge gas (fresh air). The amount of oil mist in blow-by gas can thereby be effectively increased as described above without requiring any additional device. The oil mist generation device and the oil supply apparatus including the oil mist generation device that can be provided at a low cost and appropriately incorporated can thus be realized. Further, the arrangement as described above needs no passage for introducing intake gas into the crank chamber 80. Also in this respect, it is ensured that the devices can be provided at a low cost and appropriately incorporated. Also, the amount of blow-by gas can be adjusted with high accuracy through adjustment of the opening of the atmospheric relief valve 100. That is, adjustment of the amount of blow-by gas can be performed without unnecessarily increasing the amount of blow-by gas, when the amount of blow-by gas is small. Therefore, a deposit can be subjected to cleaning by increasing the amount of oil carried into the compressor 18b while limiting the oil consumption within the range of minimum necessary amounts. Furthermore, in the present embodiment, there is no possibility of the atmospheric relief valve 100 for adjustment of the amount of the blow-by gas clogging or malfunctioning since only air passes through the atmospheric relief valve 100.

In the above-described routine, determination as to whether or not there is a deficiency of the negative pressure to be used by the negative-pressure-using devices is made before determination as to whether or not the deposit buildup operation condition is met. That is, determination as to whether or not opening of the atmospheric relief valve 100 is to be prohibited for prevention of a negative pressure deficiency is made with priority to determination as to whether or not the atmospheric relief valve 100 is to be opened for deposit cleaning. A malfunction of any of the negative-pressure-using devices due to a negative pressure deficiency can thus be prevented with reliability.

In the above-described routine, when a braking request is issued while the atmospheric relief valve 100 is open, and when the negative pressure produced by the negative-pressure pump 96 is lower than the negative pressure satisfying the braking request, the atmospheric relief valve 100 is immediately closed completely. Thus, when the negative pressure satisfying a use request from the brake booster 104 can not be produced by the negative-pressure pump 96 in a situation where the atmospheric relief valve 100 is open, a delay in brake response due to a deficiency of the negative pressure used by the brake booster 104 can be prevented by closing the atmospheric relief valve 100. However, if a negative-pressure pump capable of producing such a high negative pressure that a sufficient negative pressure can be secured even in a situation where the atmospheric relief valve 100 is open is used, it is not necessary to close the atmospheric relief valve 100 even when a braking request is recognized.

The internal combustion engine 10 in the present embodiment is provided with the oil separator chamber 116 that functions as a collision-type oil separator. In a case where an oil separator differing in construction from this, e.g., a cyclone-type oil separator is used, the oil capture rate is increased by an increase in centrifugal force when the amount of blow-by gas is increased. Also in a case where a flter-type or electrostatic-type oil separator is used, the oil capture rate is increased excessively high. It can therefore be said that these types of oil separators are also not suitable for increasing the amount of oil mist by using the negative-pressure pump 96 when the deposit buildup operation condition is met. On the other hand, the collision-type oil separator chamber 116 captures oil simply by causing oil to collide against the wall surface. The collision-type oil separator chamber 116 can therefore have such a characteristic that the oil capture rate is not substantially changed with change in the blow-by gas flow rate. Therefore, deposit cleaning and prevention of a deposit buildup by increasing the amount of oil mist with the negative-pressure pump 96 can be carried out effectively in comparison with cases where other types of oil separators are provided. However, deposit cleaning and prevention of a deposit buildup can be also carried out even in cases where oil separators other than the collision type of oil separator are used.

In the internal combustion engine 10 in the present embodiment, the amount of oil necessary for prevention of attachment of a deposit and deposit cleaning can be secured reliably and sufficiently by only opening the atmospheric relief valve 100. That is, a deposit buildup prevention operation can be reliably performed when prevention of a deposit buildup is required. The control as described above requires only one valve (atmospheric relief valve 100) and can be performed with improved facility.

In the internal combustion engine 10 in the present embodiment, as described above, the arrangement (negative-pressure pump 96) ordinarily used in the internal combustion engine 10 is utilized so that the amount of oil mist in blow-by gas can be increased by using simple control without requiring any substantial addition of equipment to an extent not achievable by a simple method of increasing the amount of blow-by gas. Also, a buildup of a deposit in the compressor 18b can be effectively prevented.

In Embodiment 1 described above, the atmospheric relief valve 100 corresponds to the "opening and closing means" in the present invention.

Embodiment 2

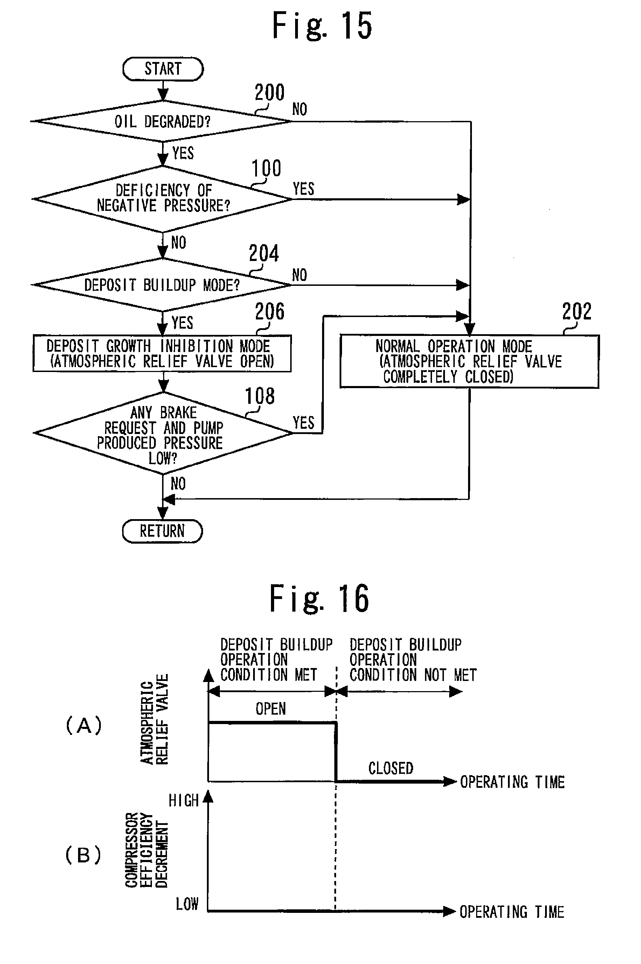

Embodiment 2 of the present invention will be described with reference mainly to Figures 15 and 16.

The system in the present embodiment can be implemented by using the hardware arrangement shown in Figures 1 to 6 and by making the ECU 60 execute a routine described later with reference to Figure 15 in place of the routine shown in Figure 9.

In Embodiment 1 described above, if it is determined that the compressor efficiency is reduced to a value equal to or lower than a predetermined value, it is then determined that the deposit buildup operation condition is met. That is, in the system in Embodiment 1, if it is inferred from a reduction in compressor efficiency that a buildup of a deposit has actually occurred, it is then determined that the deposit buildup operation condition is met under which there is a concern of a buildup of a deposit in the compressor 18b. Upon making this determination, the atmospheric relief valve 100 is opened for deposit cleaning (sweeping) (the deposit sweep mode is executed).

In the system in the present embodiment, when an operating condition in which the degree of degradation of oil is equal to or higher than a predetermined degree and in which the temperature of the compressor 18b is equal to or higher than a predetermined temperature (hereinafter referred to as "deposit buildup mode") is established, the gas introduction passage 98 is opened by opening the atmospheric relief valve 100 in order to prevent a buildup and growth of a deposit since when such a condition is established there is a concern of a buildup of a deposit (a deposit is supposed to build up with duration of the condition). That is, in the present embodiment, from the concern of a buildup of a deposit in a stage before a deposit grows actually, based on oil degradation and establishment of the deposit buildup mode (an increase in compressor temperature), it is determined that the deposit buildup operation condition is met.

Also in the present embodiment, when there is a deficiency of the negative pressure to be used by the above-described negative-pressure-using devices, opening of the atmospheric relief valve 100 is prohibited in order not to open the gas introduction passage 98. Further, also in the present embodiment, when a braking request is issued while the gas introduction passage 98 is open, the gas introduction passage 98 is immediately shut by closing the atmospheric relief valve 100.

Figure 15 is a flowchart showing a control routine executed by the ECU 60 to realize control specific to Embodiment 2 of the present invention. In Figure 15, the same steps as those shown in Figure 9 for Embodiment 1 are indicated by the same reference characters. The same description of them will not be repeated or abbreviated descriptions will be made of them.

In the routine shown in Figure 15, determination is first made as to whether or not oil has degraded to a degree equal to or higher than a predetermined degree (more specifically, for example, whether or not the soot concentration in oil has exceeded a predetermined value) (step 200). Determination in this step 200 can be executed, for example, by making determination as to whether or not the distance traveled after the last oil change by the vehicle on which the internal combustion engine 10 is mounted or the total amount of fuel injected after the last oil change (calculable by the ECU 60) has exceeded a predetermined value.

If it is determined in step 200 that the oil has not degraded to a degree equal to or higher than the predetermined degree, then determination is made as to whether or not there is a deficiency of the negative pressure to be used by the above-described negative-pressure-using devices (step 100). If a negative pressure deficiency is recognized as a result of this determination, the atmospheric relief valve 100 is completely closed (step 202).

If it is determined in step 100 that no negative pressure deficiency has occurred, then determination is made as to whether or not the above-described deposit buildup mode is established (step 204). As described above, a deposit builds up easily when the internal temperature of the compressor 18b is high. In this step 204, therefore, the compressor internal temperature T3 is calculated by a method described below and, if the calculated compressor internal temperature T3 is equal to or higher than a predetermined value, it is determined that the deposit buildup mode in which a deposit can build up easily is established. The ECU 60 stores a map (not illustrated) in which the compressor internal temperature T3 is determined in advance in relation to the engine speed, the engine load (the amount of fuel injected) and the pressure ratio (outlet pressure P3/inlet pressure P1 of the compressor 18b). In step 204, the compressor internal temperature T3 is calculated by referring to such a map. The outlet pressure P3 and the inlet pressure P1 of the compressor 18b can be respectively obtained, for example, by using the air intake manifold pressure and the atmospheric pressure. For determination as to whether or not the deposit buildup mode is established, a simple method of determining whether or not the outlet temperature of the compressor 18b sensed by the second intake air temperature sensor 36 is equal to or higher than a predetermined value may suffice. However, the method of obtaining the compressor internal temperature T3 in this step 204 is advantageous in terms of air intake loss and cost since it does not require addition of any special temperature sensor.

If it is determined in step 204 that the deposit buildup mode is not established, the atmospheric relief valve 100 is completely closed (step 202). On the other hand, if it is determined in step 204 that the deposit buildup mode is established, that is, if it can be determined that the deposit buildup operation condition in the present embodiment is met from the degradation of the oil to an extent equal to or higher than a predetermined degree and the establishment of the deposit buildup mode, the atmospheric relief valve 100 is opened by a predetermined degree of opening (a deposit growth inhibition mode is executed) (step 206). The degree of opening of the atmospheric relief valve 100 in this step 206 is set in advance so that an oil mist necessary for prevention of a buildup of a deposit (prevention of generation and growth of a deposit in this case) is supplied to a portion on the upstream side of the compressor 18b while the oil consumption is limited within the range of minimum necessary amounts. The opening of the atmospheric relief valve 100 may be changed according to the facility with which a deposit builds up based on the degree of degradation of oil and the temperature of the compressor 18b.

Also in the routine shown in Figure 15, control of opening and closing of the atmospheric relief valve 100 according to the existence/nonexistence of a braking request and the level of negative pressure produced by the negative-pressure pump 96 is executed by processing in step 206 while the atmospheric relief valve 100 is open. This processing is the same as the processing based on the determination in step 108 described above. Therefore, the detailed description of the processing is not repeated here.

Figure 16 is a diagram for explaining the effect of the control routine shown in Figure 15.

In the routine described above with reference to Figure 15, the atmospheric relief valve 100 is completely closed when the deposit buildup operation condition is not met (when the oil has not degraded to a degree equal to or higher than the predetermined degree, or when the deposit buildup mode is not established), as shown in Figure 16(A). In the above-described routine, the atmospheric relief valve 100 is opened when the deposit buildup operation condition is met (when there is a concern of a buildup of a deposit in the compressor 18b because of the degradation of the oil to an extent equal to or higher than the predetermined degree and the establishment of the deposit buildup mode), provided that there is no negative pressure deficiency. The amount of oil mist supplied to the air intake passage 24 on the upstream side of the compressor 18b together with blow-by gas is thereby increased. Generation (attachment) and growth of a deposit in internal portions of the compressor 18b (e.g., the diffuser portion 18b6) can be effectively prevented by increasing the amount of oil mist supplied to the internal passage in the compressor 18b in the above-described way in a situation where there is a concern of a buildup of a deposit. Therefore, prevention of a reduction in the compressor efficiency can be achieved even under the deposit buildup operation condition, as shown in Figure 16(B).

Modified Example of Embodiment 2

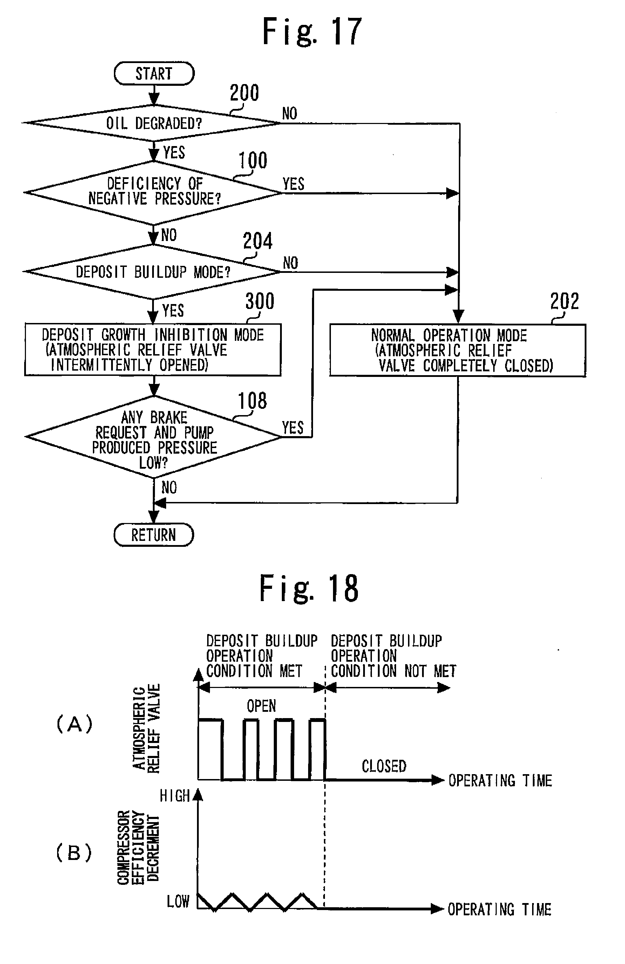

Embodiment 2 has been described with respect to an example in which the atmospheric relief valve 100 is opened to a predetermined degree of opening when the deposit buildup operation condition is met. However, the atmospheric relief valve 100 maybe controlled so as to be intermittently opened as in a routine described below with reference to Figure 17 when the deposit buildup operation condition is met.

Figure 17 is a flowchart showing a control routine executed by the ECU 60 to realize control specific to a modified example of Embodiment 2 of the present invention. In Figure 17, the same steps as those shown in Figure 15 for Embodiment 2 are indicated by the same reference characters. The same description of them will not be repeated or abbreviated descriptions will be made of them.

In the routine shown in Figure 17, if, after the affirmative result of determination in step 200 as to oil degradation, it is determined in step 204 that the deposit buildup mode is established, that is, the deposit buildup operation condition is met, control for intermittently opening the atmospheric relief valve 100 is executed as a deposit growth inhibition mode (step 300).

Figure 18 is a diagram for explaining the effect of the control routine shown in Figure 17.

In the routine described above with reference to Figure 17, the atmospheric relief valve 100 is intermittently opened when the deposit buildup operation condition is met (when the oil has degraded to a degree equal to or higher than the predetermined degree, and when the deposit buildup mode is established), as shown in Figure 18(A). With this opening, with the lapse of time, the amount of oil mist supplied to the compressor 18b is changed according to opening and closing of the atmospheric relief valve 100, and the amount of buildup of a deposit in the diffuser portion 18b6 is changed, as shown in Figure 18(B).

More specifically, when the atmospheric relief valve 100 is closed under the deposit buildup operation condition, the amount of buildup of a deposit increases with the lapse of operating time. Thereafter, when the atmospheric relief valve 100 is opened, the amount of buildup of the deposit is reduced with the lapse of operating time by the deposit cleaning effect already described. With the progress of the deposit buildup to a certain extent (when the deposit grows), the deposit firmly adheres to the diffuser portion 18b6. In the present embodiment, therefore, the time intervals defining the valve opening periods during which the atmospheric relief valve 100 is open in the process of intermittently opening the atmospheric relief valve 100 are set sufficiently wide based on experimental results or the like obtained in advance in order to open the atmospheric relief valve 100 within such limits that the deposit cleaning effect produced by charging a large amount of oil mist is sufficiently high (such that a large amount of oil mist can be charged by opening the atmospheric relief valve 100 before the deposit firmly adheres to the diffuser portion 18b6).

As described above, a buildup of a deposit in the compressor 18b can also be prevented by intermittently charging a large amount of oil mist according to the method of intermittently opening the atmospheric relief valve 100 under the deposit buildup operation condition, thus enabling prevention of a reduction in compressor efficiency ηc.

In Embodiment 2 described above, determination as to whether or not the deposit buildup mode is established is made in step 204 by determining whether or not the compressor internal temperature T3 calculated by referring to the map stored in the ECU 60 is equal to or higher than a predetermined value. The above-described method of determining whether or not the deposit buildup mode is established is not exclusively used. For example, a method described below may alternatively be used.

To be specific, a method such as described below may, for example, be suffice. That is, the intake air inlet temperature T0 at the inlet of the air intake passage 24 (in the vicinity of the air cleaner 26) is first obtained by using the first intake air temperature sensor 34. The intake air taken in from the air cleaner 26 is locally increased in temperature before being introduced into the compressor 18b by receiving heat from the body of the internal combustion engine 10 and by flowing under the presence of high-temperature LPL-EGR gas introduced to a portion on the upstream side of the compressor 18b. As a result, a local high-temperature part is produced in the gas introduced into the compressor inlet portion 18b2. The gas introduced into the compressor 18b passes through the interior of the compressor 18b while swirling. Therefore, the temperatures of some portions in the internal portions (e.g., the impeller portion 18b4 and the diffuser portion 18b6) of the compressor 18b are locally increased to high temperatures by local high-temperature gas flowing into the compressor 18b.

Then a local temperature increment $\Delta T$ in intake air in the section from the air cleaner 26 to the compressor inlet portion 18b2 is obtained. More specifically, the ECU 60 stores in advance a map in which the local temperature increment $\Delta T$ is determined in relation to the amount of intake air, the LPL-EGR rate and the engine cooling water temperature based on experimental results or the like, and the local temperature increment $\Delta T$ is calculated by referring to such a map during the operation of the internal combustion engine 10. If the LPL-EGR system is not provided, the LPL-EGR rate term may be eliminated. Also, the temperature T1 local of a local high-temperature part (a part having the highest temperature) of gas at the compressor inlet portion 18b2 is calculated as the sum of the intake air inlet temperature T0 and the above-described local temperature increment $\Delta T$. The compressor efficiency ηc is then obtained. The compressor efficiency ηc can be calculated based on the amount of intake air, the pressure ratio (P3/P1) of the compressor 18b or the turbo rotational speed by using a known formula. Next, the temperature T3local of a local high-temperature portion (a portion having the highest temperature) in the internal portion (diffuser portion 18b6) of the compressor 18b is calculated, for example, by the following equation as a function of the above-mentioned temperature T1local, the pressure ratio P3/P1 and the compressor efficiency ηc:

$$\text{T3local} = \text{T1local}((P3/P1)^{(\kappa-1)/\kappa} - 1)/\eta c + \text{T1local}$$

Then determination as to whether or not the deposit buildup mode is established is made according to the result of determination as to whether or not the calculated temperature T3local of the local high-temperature portion in the compressor 18b is equal to or higher than a predetermined value. A deposit can occur easily in the above-described local high-temperature portion in the internal portion (diffuser portion 18b6) of the compressor 18b. A method such as this, in contrast to the above-described method in Embodiment 2 in which the internal temperature T3 of the compressor 18b is roughly calculated, enables accurately grasping the temperature T3local of the local high-temperature portion (i.e., detecting with improved accuracy the condition allowing a deposit to build up easily) before opening/closing of the atmospheric relief valve 100. Therefore, both reduction of the oil consumption and prevention of a deposit buildup in the compressor 18b can be simultaneously achieved in a preferable way in comparison with Embodiment 2 described above. This method is also advantageous in terms of air intake loss and cost since it does not require addition of any special temperature sensor.

On the other hand, a method of determining whether or not the deposit buildup mode is established, for example, as described below, may alternatively be used. That is, the position of the local high-temperature portion in the compressor inlet portion 18b2 is grasped in advance by experiment, and a temperature sensor is mounted at a position determined based on the result of the experiment. The temperature T1local of the local high-temperature portion is obtained by using this temperature sensor during the operation of the internal combustion engine 10. As methods for obtaining the temperature increment ΔT and the temperature T3local, those described above can also be used. This method also enables accurately grasping the temperature T3local of the local high-temperature portion (i.e., detecting with improved accuracy the condition allowing a deposit to build up easily) before opening/closing of the atmospheric relief valve 100.

Embodiment 3

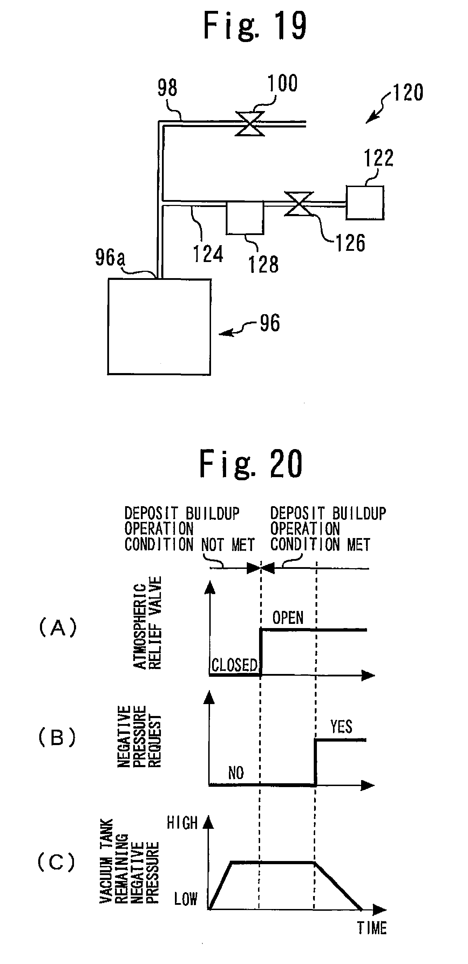

Embodiment 3 of the present invention will be described with reference mainly to Figures 19 to 21.

[Specific arrangement in Embodiment 3]

Figure 19 is a diagram schematically showing an arrangement around the air intake port 96a of the negative-pressure pump 96 in Embodiment 3. In Figure 19, the same components as those shown in the figures referred to above including Figure 3 are indicated by the same reference characters. The same description of them will not be repeated or abbreviated descriptions will be made of them.

An internal combustion engine 120 in the present embodiment is assumed to have the same construction as that of the above-described internal combustion engine 10 except that the arrangement shown in Figure 19 is provided in place of the arrangement shown in Figure 3. As shown in Figure 19, a negative-pressure passage 124 for supplying a negative pressure to a negative-pressure-using device 122 is connected to the gas introduction passage 98, and a solenoid valve 126 for opening and closing the negative-pressure passage 124 is provided in an intermediate portion of the negative-pressure passage 124.

A negative-pressure tank 128 that accumulates negative pressure produced by the negative-pressure pump 96 is provided on an intermediate portion of the negative-pressure passage 124 between the negative-pressure-using device 122 and the negative-pressure pump 96. More specifically, the negative-pressure tank 128 is provided at a portion of the negative-pressure passage 124 closer to the negative-pressure pump 96 than the solenoid valve 126. In Figure 19, the brake booster 104 and other negative-pressure-using devices (including the actuator for driving the variable nozzle) are indicated as the negative-pressure-using device 122 for ease of illustration. In a case where a negative-pressure passage and a solenoid valve are actually provided for each negative-pressure-using device, however, the negative-pressure tank 128 is provided at a portion of the negative pressure passage closer to the negative-pressure pump 96 than any of the solenoid valves. A check valve (not illustrated) arranged to allow inflow of air only in the direction from the negative-pressure tank 128 side toward the gas introduction passage 98 side may be provided in a portion of the negative-pressure passage 124 closer to the negative-pressure pump 96 than the negative-pressure tank 128.

[Specific Control in Embodiment 3]

Figure 20 is a time chart showing the outline of control executed to effectively use the negative-pressure tank 128 in Embodiment 3 of the present invention.

Also in the present embodiment, the routine processing in Embodiment 1 or 2 shown in Figure 9 or 15 is executed to open and close the atmospheric relief valve 100 according to whether or not the deposit buildup operation condition is met, as shown in Figure 20(A).

In the internal combustion engine 120 having the arrangement shown in Figure 19, the negative pressure produced by drive of the negative-pressure pump 96 is accumulated in the negative-pressure tank 128, as shown in Figure 20, in a situation where no request for use of the negative pressure by.the negative-pressure-using device 122 is issued (that is, the solenoid valve 126 is closed) and the atmospheric relief valve 100 is closed. The negative pressure accumulated in the negative-pressure tank 128 is used when the atmospheric relief valve 100 is open and a negative-pressure use request is issued (that is, the solenoid valve 126 is opened), as shown in Figure 20.

As described above, in the internal combustion engine 120 provided with the negative-pressure tank 128 that accumulates negative pressure produced by the negative-pressure pump 96, a negative pressure can be supplied to the negative-pressure-using device 122 even when the atmospheric relief valve 100 is open. Also, in the internal combustion engine 120, a delay in response of the negative-pressure-using device 122 can be reduced by enabling the negative-pressure-using device 122 to use the negative pressure accumulated in the negative-pressure tank 128 in comparison with the arrangement not provided with the negative-pressure tank 128, which is adopted to secure a negative pressure by closing the atmospheric relief valve 100 when a negative-pressure request is made.

Modified Example of Embodiment 3

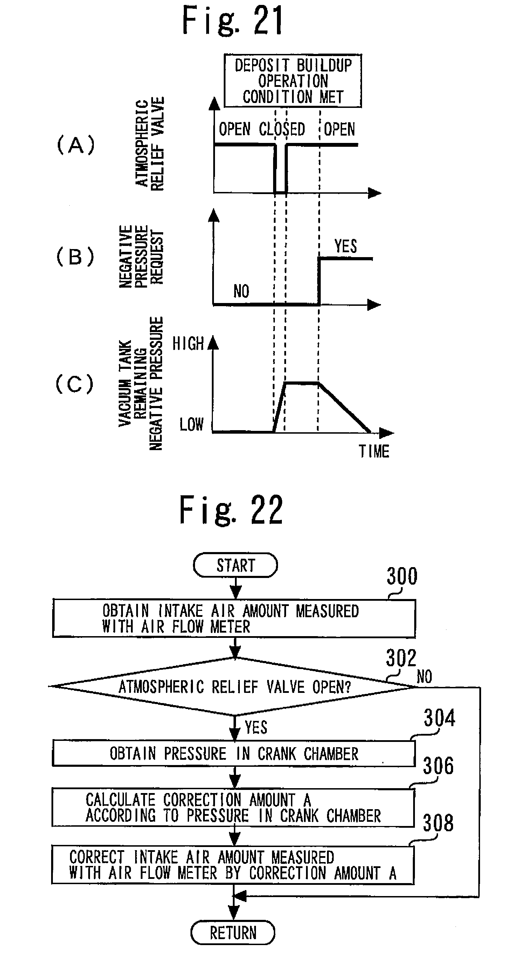

Control for effectively using the negative-pressure tank 128 in the internal combustion engine 120 provided with the negative-pressure tank 128 may use, for example, a method such as shown in Figure 21. Figure 21 is a time chart showing the outline of control executed to effectively use the negative-pressure tank 128 in a modified example of Embodiment 3 of the present invention.

As shown in Figure 21, control for closing the atmospheric relief valve 100 over a predetermined time period may be performed in a situation where no negative-pressure request is issued while the atmospheric relief valve 100 is open. Control such as this enables accumulation of negative pressure in the negative-pressure tank 128 while the atmospheric relief valve 100 is open. Control such as this increases chances of accumulating negative pressure in the negative-pressure tank 128, thus enabling suitably reducing a delay in response of the negative-pressure-using device 122.

Embodiment 4

Embodiment 4 of the present invention will be described with reference mainly to Figure 22.

The system in the present embodiment can be implemented by using the hardware arrangement provided in the internal combustion engine 10 or 120 described above and by making the ECU 60 execute a routine shown in Figure 22 referred to later.

When the deposit buildup operation condition is met, the atmospheric relief valve 100 is opened as in Embodiment 1 described above. Fresh air is then taken into the engine together with an oil mist. The amount of blow-by gas existing in the engine is thereby increased. Such an increase in the amount of gas appears as an increase in the pressure in the crank chamber 80. The amount of blow-by gas introduced into the air intake passage 24 on the upstream side of the compressor 18b corresponds to the pressure difference between the crank chamber 80 and the air intake passage 24 on the upstream side of the compressor 18b. Therefore, when the pressure in the crank chamber is increased by opening the atmospheric relief valve 100, the amount of blow-by gas introduced into the air intake passage 24 on the upstream side of the compressor 18b (including fresh air introduced from the negative-pressure pump 96) is increased.

The air flow meter 32 for measuring the amount of intake air taken into the air intake passage 24 is disposed upstream relative to the communication passage 52 for introducing blow-by gas, as shown in Figure 1. Therefore, the amount of air drawn into the cylinder of the internal combustion engine 10 when the atmospheric relief valve 100 is open includes the amount of fresh air contained in blow-by gas introduced from the communication passage 52 into the air intake passage 24 as well as the amount of intake air measured with the air flow meter 32. If, in spite of this, the amount of fresh air introduced from the communication passage 52 into the air intake passage 24 is not considered with respect to the amount of intake air charged into the cylinder, engine control can not be performed by using the correct amount of air.

In the present embodiment, therefore, the amount of intake air measured with the air flow meter 32 is corrected by a correction amount A based on the pressure in the crank chamber when the atmospheric relief valve 100 is open.

Figure 22 is a flowchart showing a routine executed by the ECU 60 to realize processing for correcting the amount of intake air in Embodiment 4 of the present invention. It is assumed that this routine is repeatedly executed in predetermined control cycles.

In the routine shown in Figure 22, the amount of intake air measured with the air flow meter 32 is obtained (step 300). Determination is then made as to whether or not the atmospheric relief valve 100 is open (step 302). If it is determined in step 302 that the atmospheric relief valve 100 is open, the pressure in the crank chamber measured with the in-crank-chamber-pressure sensor 82 is obtained (step 304).

Next, the correction amount A for correction of the amount of intake air with respect to the amount of fresh air introduced through the communication passage 52 is calculated based on the pressure in the crank chamber (step 306). The amount of fresh air introduced into the air intake passage 24 through the communication passage 52 corresponds to the increase in the pressure in the crank chamber accompanying the opening of the atmospheric relief valve 100. The ECU 60 therefore stores information (e.g., a map) in which the relationship between the pressure in the crank chamber and the correction amount A is determined in advance. In this step 306, the correction amount A is calculated based on such information.

The amount of intake air measured with the air flow meter 32 is corrected based on the correction amount A calculated in step 306 (step 308).

In the routine described above with reference to Figure 22, the amount of intake air measured with the air flow meter 32 is corrected by the correction amount A based on the pressure in the crank chamber in a situation where the atmospheric relief valve 100 is open, and where fresh air is therefore introduced from the negative-pressure pump 96 into the engine together with an oil mist. Thus, correction of the amount of intake air can be made by considering the amount of fresh air taken in from the negative-pressure pump 96, thereby enabling engine control (such as air-to-fuel ratio control) using the correct air flow rate after the correction.

In Embodiment 4 described above, the ECU 60 executes processing in step 300 to realize "intake air amount measurement means" in the present invention, and executes a sequence of operation from step 302 to step 308 to realize "intake air amount correction means" in the present invention.

Modified Examples of Embodiments 1 to 4

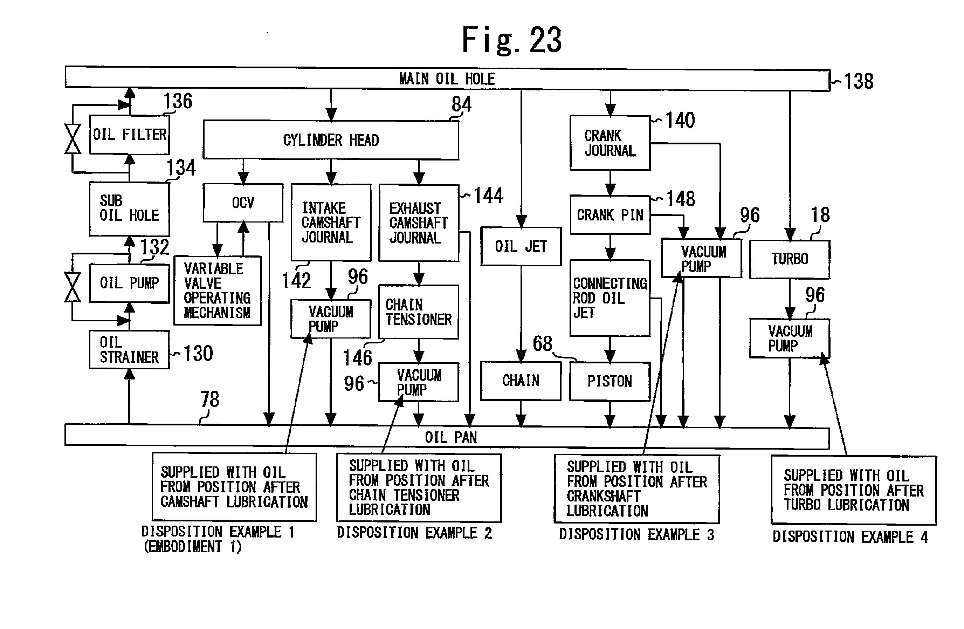

Variations of the methods of supplying oil to the negative-pressure pump 96 will first be described with reference to Figures 23 to 25.

Figure 23 is a diagram for explaining an example of the disposition of the negative-pressure pump 96 in the lubricating system of the internal combustion engine 10 shown in Figure 1.

As shown in Figure 23, oil stored in the oil pan 78 is drawn up by an oil pump 132 through an oil strainer 130. The oil pump 132 operates by using a torque from the internal combustion engine 10 as power for its operation. The oil drawn up by the oil pump 132 is supplied to a main oil hole 138 through a sub oil hole 134 and an oil filter 136.

The oil is supplied to portions of the internal combustion engine 10 from the main oil hole 138 and is thereafter returned to the oil pan 78. More specifically, the oil in the main oil hole 138 is supplied to the cylinder head 84, a crank journal 140, the turbocharger 18 and the like, as shown in Figure 23. The oil supplied to the cylinder head 84 is supplied to an air intake camshaft journal 142, an exhaust camshaft journal 144 and the like via internal portions of the camshafts (corresponding to the camshaft 112 and the like). The oil supplied to the exhaust camshaft journal 144 is supplied to a chain tensioner 146 for a chain (not illustrated) for driving the camshaft 112. The oil supplied to the crank journal 140 is supplied to a crank pin 148 and the like.

It has been assumed that in Embodiment 1 described above oil is supplied from the camshaft 112 to the oiling port 96e of the negative-pressure pump 96. Accordingly, the negative-pressure pump 96 may be configured so as to be supplied with oil, for example, from a position reached by oil after lubrication of the air intake camshaft journal 142, as shown in Figure 23. Also, the negative-pressure pump 96 may be configured so as to be supplied with oil, for example, from a position reached by oil after lubrication of the chain tensioner 146. Further, the negative-pressure pump 96 may be configured so as to be supplied with oil, for example, from a position reached by oil after lubrication of the crankshaft 72 (the crank journal 140 and the crank pin 148). Furthermore, the negative-pressure pump 96 may be configured so as to be supplied with oil, for example, from a position reached by oil after lubrication of (a bearing portion) of the turbocharger 18.

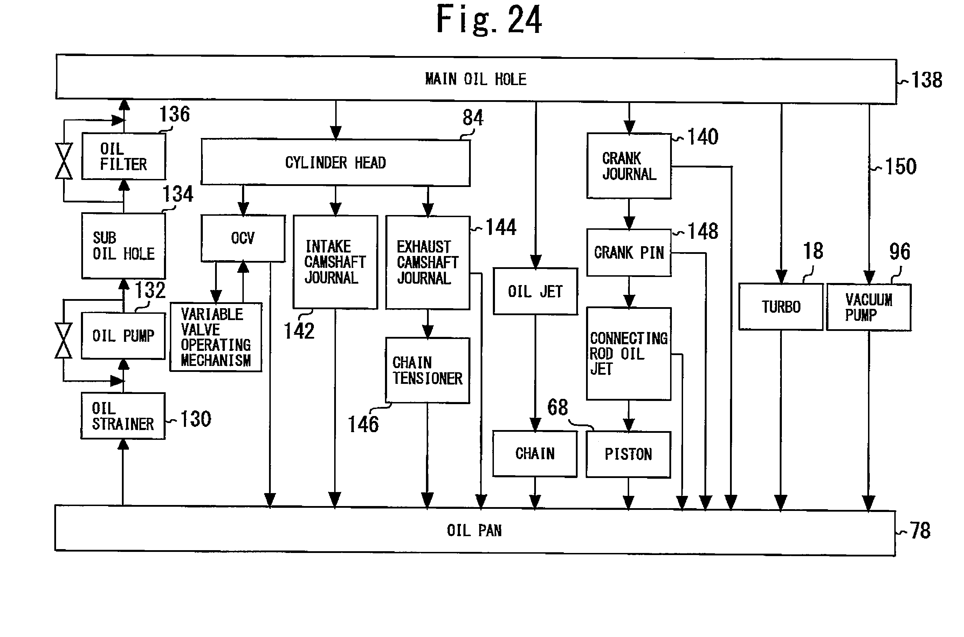

Figure 24 is a diagram for explaining another example of the disposition of the negative-pressure pump 96 in the lubricating system of the internal combustion engine 10 shown in Figure 1.

The lubricating system of the internal combustion engine 10 in the example shown in Figure 24 is provided with a negative-pressure pump oil passage 150 that directly connects the main oil hole 138 to the oil pan 78. The negative-pressure pump 96 may be configured so as to be supplied with oil through the negative-pressure pump oil passage 150, as shown in Figure 24.

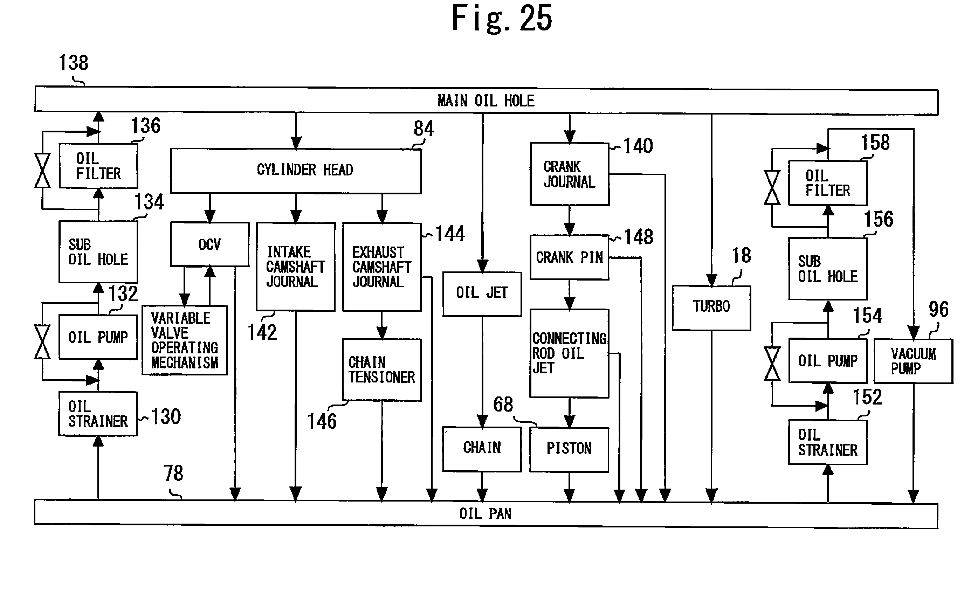

Figure 25 is a diagram for explaining still another example of the disposition of the negative-pressure pump 96 in the lubricating system of the internal combustion engine 10 shown in Figure 1.

The lubricating system of the internal combustion engine 10 in the example shown in Figure 25 is provided with an arrangement with which oil in the oil pan 78 can be directly supplied toward the negative-pressure pump 96. More specifically, a special oil pump 154 for drawing up oil in the oil pan 78 through an oil strainer 152 to supply the oil to the negative-pressure pump 96 is provided. The negative-pressure pump 96 is supplied with oil from this oil pump 154 through a sub oil hole 156 and an oil filter 158. An arrangement such as this may be used to supply oil to the negative-pressure pump 96.

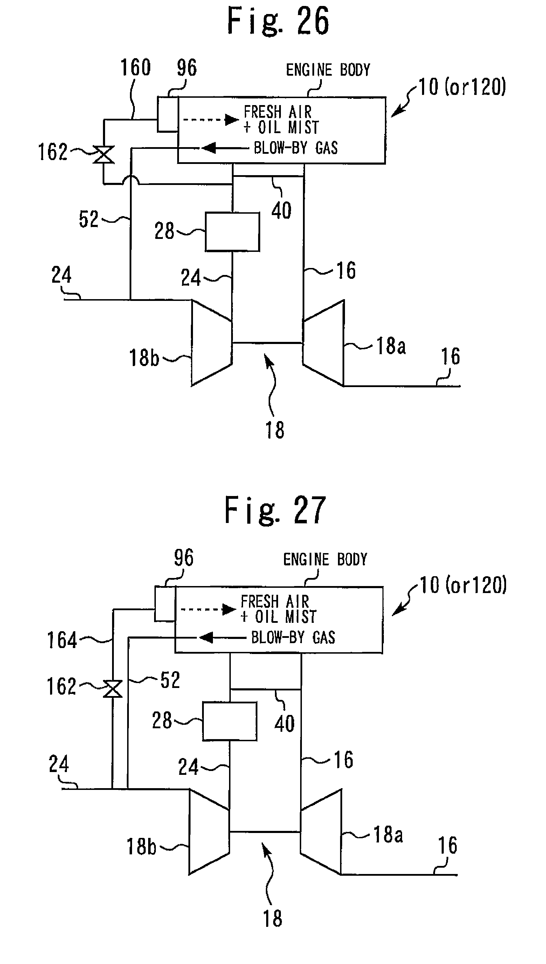

Variations of the arrangement on the inlet side of the negative-pressure pump 96 will be described with reference to Figures 26 to 29.

Figure 26 is a diagram for explaining a first modified example of the arrangement on the inlet side of the negative-pressure pump 96.

The arrangement on the inlet side of the negative-pressure pump 96 shown in Figure 10 may be replaced with, for example, one such as shown in Figure 26. The arrangement shown in Figure 26 is provided with a gas introduction passage 160 that provides communication between the air intake port 96a of the negative-pressure pump 96 and the air intake passage 24 on the downstream side of the intercooler 28 (and located upstream relative to the HPL 40). A gas introduction valve 162 having the same function as the atmospheric relief valve 100 is installed in an intermediate portion of the gas introduction passage 160. An arrangement such as this may be provided to introduce into the negative-pressure pump 96 fresh air that passed through the intercooler 28 when the gas introduction valve 162 is open.

Figure 27 is a diagram for explaining a second modified example of the arrangement on the inlet side of the negative-pressure pump 96.

The arrangement on the inlet side of the negative-pressure pump 96 shown in Figure 10 may be replaced with, for example, one such as shown in Figure 27. The arrangement shown in Figure 27 is provided with a gas introduction passage 164 that provides communication between the air intake port 96a of the negative-pressure pump 96 and the air intake passage 24 on the downstream side of the air cleaner 26 and on the upstream side of the compressor 18b (more preferably, also located upstream relative to the communication passage 52). A gas introduction valve 162 is installed in an intermediate portion of the gas introduction passage 164. An arrangement such as this may be provided to introduce into the negative-pressure pump 96 fresh air flowing on the upstream side of the compressor 18b when the gas introduction valve 162 is open.

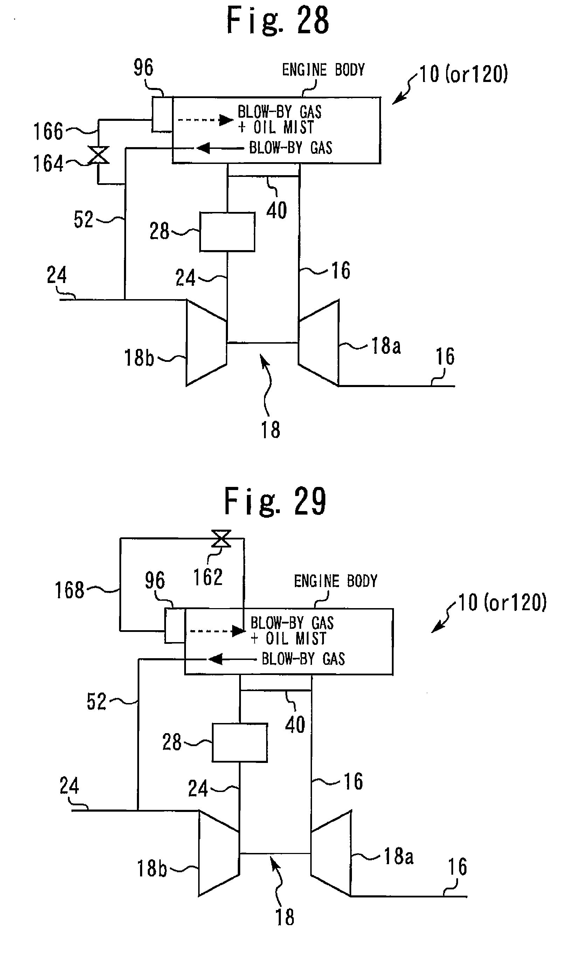

Figure 28 is a diagram for explaining a third modified example of the arrangement on the inlet side of the negative-pressure pump 96.

The arrangement on the inlet side of the negative-pressure pump 96 shown in Figure 10 may be replaced with, for example, one such as shown in Figure 28. The arrangement shown in Figure 28 is provided with a gas introduction passage 166 that provides communication between the air intake port 96a of the negative-pressure pump 96 and an intermediate portion of the communication passage (blow-by gas passage) 52. A gas introduction valve 162 is installed in an intermediate portion of the gas introduction passage 166. An arrangement such as this may be provided to introduce into the negative-pressure pump 96 blow-by gas flowing through the communication passage 52 when the gas introduction valve 162 is open. Further, use of a method such as this enables relatively fine oil particles to be returned to the interior of the engine together with blow-by gas since large oil particles can not easily be drawn in. In this case, blow-by gas and an oil mist are supplied from the discharge port 96b of the negative-pressure pump 96 into the internal space 90.

Figure 29 is a diagram for explaining a fourth modified example of the arrangement on the inlet side of the negative-pressure pump 96.

The arrangement on the inlet side of the negative-pressure pump 96 shown in Figure 10 may be replaced with, for example, one such as shown in Figure 29. The arrangement shown in Figure 29 is provided with a gas introduction passage 168 that provides communication between the air intake port 96a of the negative-pressure pump 96 and an internal portion of the engine (e.g., the crank chamber 80 or the internal space 90). The gas introduction valve 162 is installed in an intermediate portion of the gas introduction passage 168. An arrangement such as this may be provided to circulatingly introduce into the negative-pressure pump 96 blow-by gas existing in the engine when the gas introduction valve 162 is open.

In the above descriptions of Embodiments 1 to 4, the arrangement in which the negative-pressure pump 96 is disposed so that the discharge port 96b communicates with the internal space 90 in the cylinder head 84 has been described by way of example. However, the arrangement on the outlet side of the negative-pressure pump 96 is not limited to that described above. That is, the arrangement may be such that the discharge port 96b of the negative-pressure pump 96 communicates with the crank chamber 80 at, for example, a position close to the crankshaft 72. With this arrangement, an oil mist produced by the rotation of the crankshaft 72 can also be effectively taken into blow-by gas that flows through the interior of the engine and is returned to the air intake passage 24.

A different arrangement on the outlet side of the negative-pressure pump 96 such as described below may alternatively be adopted. That is, discharge gas from the negative-pressure pump 96 may be directly supplied to the communication passage (blow-by gas passage) 52 communicating with the air intake passage 24 on the upstream side of the compressor 18b instead of being supplied via the interior of the engine. In this case, if an arrangement on the inlet side in which the gas drawn into the negative-pressure pump 96 is fresh air is adopted, not the amount of blow-by gas but the amount of oil mist supplied into the air intake passage 24 is increased. The oil supply apparatus according to the present invention may be implemented in this way. Further, gas containing an oil mist may be supplied to the internal passage in the compressor 18b by using a passage provided separately from the communication passage 52 through which blow-by gas flows.

In the above descriptions of Embodiments 1 to 4, an example of the arrangement in which the negative-pressure pump 96 is driven by using a torque from the camshaft 112 has been described. The method of driving the negative-pressure pump according to the present invention is not limited to that described above. That is, the negative-pressure pump may be driven, for example, by an electric motor or by using a torque from the crankshaft 72. In a case of using a torque from the crankshaft 72, a transmission member such as a belt or a chain may be used or a gear connecting the negative-pressure pump 96 with the crankshaft 72 may be used as a transmission member.

Embodiment 5

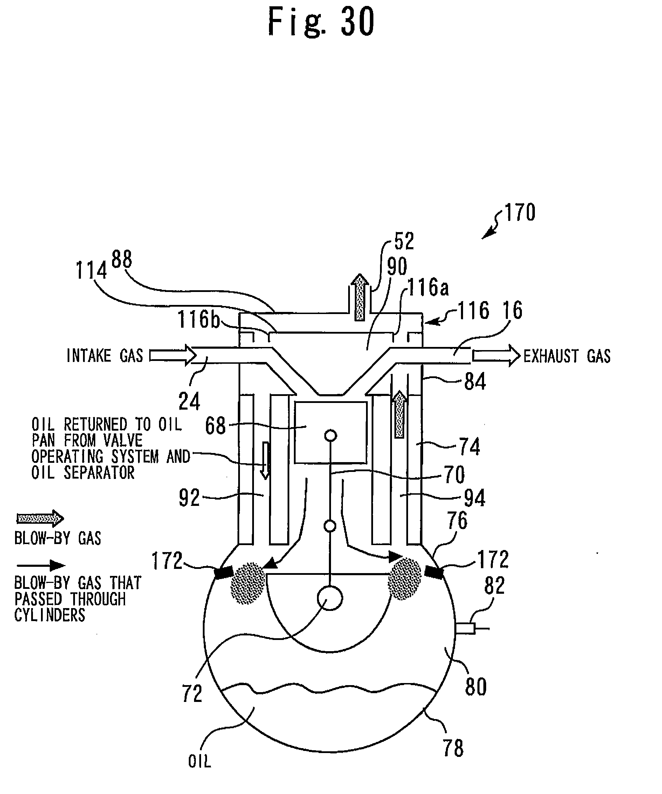

Embodiment 5 of the present invention will be described with reference mainly to Figures 30 to 32.

[Specific Arrangement in Embodiment 5]

Figure 30 is a diagram schematically showing the internal structure of an internal combustion engine 170 in Embodiment 5 of the present invention.

In each of the above-described internal combustion engines 10 and 120, the oil mist generation device having the negative-pressure pump 96, the gas introduction passage 98 and the atmospheric relief valve 100 is provided as a component of the oil supply apparatus that supplies oil to the internal passage in the compressor 18b by using the communication passage 52. In contrast, in the internal combustion engine 170 of the present embodiment, an oil mist generation device configured as described below is provided in place of the oil mist generation device including the negative-pressure pump 96.

To be specific, as shown in Figure 30, a pair of oil jets 172 that jet oil into the crank chamber 80 are provided as an oil mist generation device in the internal combustion engine 170. The pair of oil jets 172 disposed so as to jet oil toward the vicinity of the outlet of the internal communication passage 92 through which blow-by gas flows from the internal space 90 toward the crank chamber 80 and also to jet oil toward the vicinity of the inlet of the internal communication passage 94 through which blow-by gas flows from the crank chamber 80 toward the internal space 90.

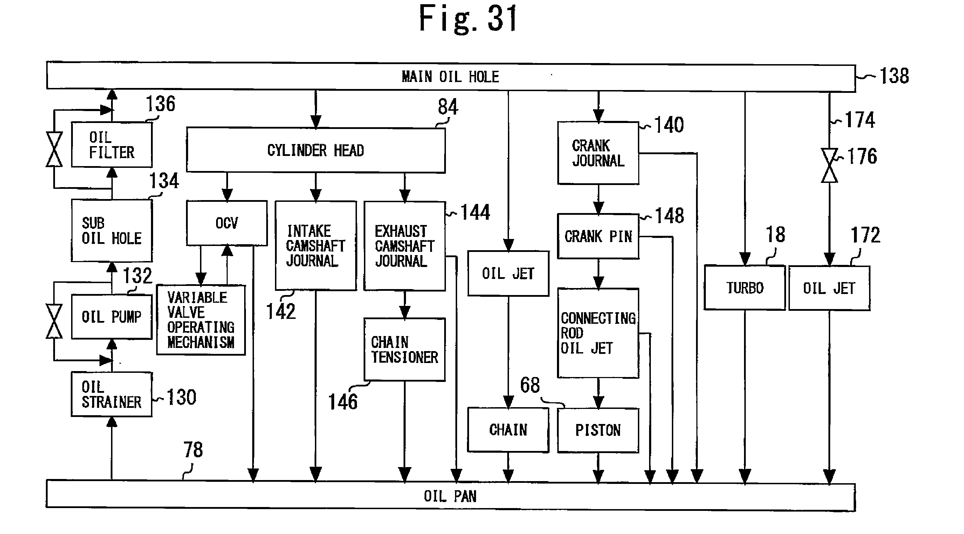

Figure 31 is a diagram for explaining an example of the disposition of the oil jets 172 in the lubricating system of the internal combustion engine 170 shown in Figure 30. In Figure 31, the same components as those shown in the figures referred to above including Figure 23 are indicated by the same reference characters. The same description of them will not be repeated or abbreviated descriptions will be made of them.

As shown in Figure 31, the lubricating system of the internal combustion engine 170 is provided with an oil jet oil passage 174 for supplying oil from the main oil hole 138 to the oil jets 172. A solenoid valve 176 for opening and closing the oil jet oil passage 174 is provided in an intermediate portion of the oil jet oil passage 174. The solenoid valve 176 is controlled by the above-described ECU 60.

In the internal combustion engine 170 thus configured, the amount of oil mist in blow-by gas in the crank chamber 80 can be increased by opening the solenoid valve 176 so that oil is jetted from the oil jets 172. Also, the amount of oil (mist) supplied to the internal passage in the compressor 18b can be increased by supplying the blow-by gas in which the amount of oil mist contained is increased from the communication passage 52 to the air intake passage 24 on the upstream side of the compressor 18b. In this way, in the internal combustion engine 170, the oil supply apparatus is realized using the oil mist generation device including the pair of oil jets 172. A fresh air introducing passage (not illustrated) that communicates with a predetermined portion of the air intake passage 24 may be connected to the internal space 90 or the crank chamber 80 of the internal combustion engine 170 for the purpose of scavenging blow-by gas in the engine.

[Specific Control in Embodiment 5]

In the present embodiment, when the deposit buildup operation condition is met during the operation of the internal combustion engine 170, oil is jetted from the oil jets 172 to increase the amount of oil mist in blow-by gas and to thereby increase the amount of oil supplied to the internal passage in the compressor 18b.

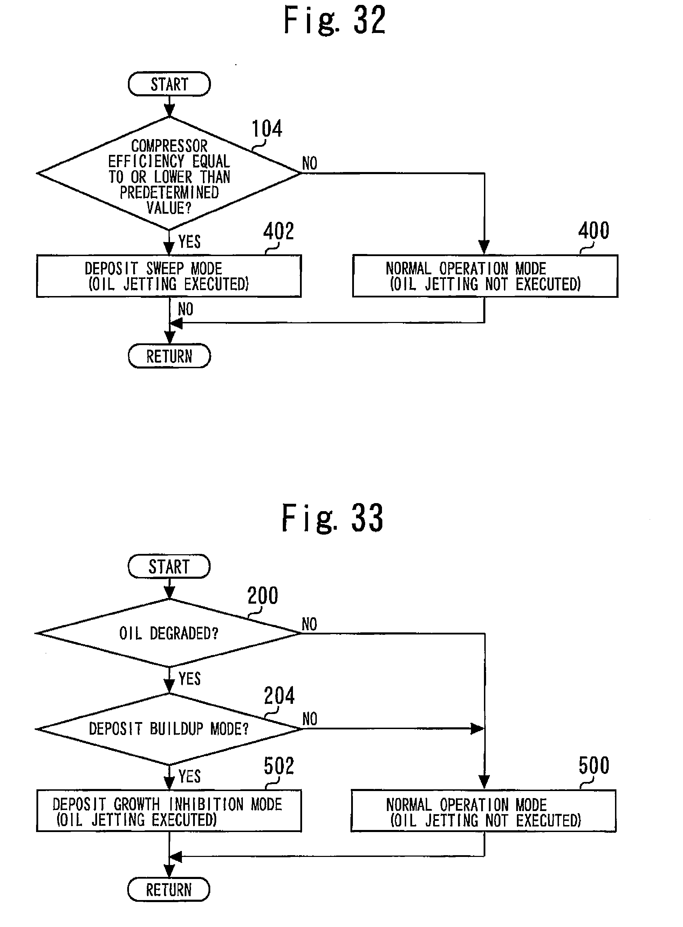

Figure 32 is a flowchart showing a control routine to be executed by the ECU 60 in order to realize specific control in Embodiment 5 of the present invention. In Figure 32, the same steps as those shown in Figure 9 for Embodiment 1 are indicated by the same reference characters. The same description of them will not be repeated or abbreviated descriptions will be made of them.

In the routine shown in Figure 32, determination is first made as to whether or not the compressor efficiency is equal to or lower than a predetermined value (step 104). If the reduction in the compressor efficiency is not recognized thereby, a normal operation mode in which jetting of oil by the oil jets 172 is not executed is selected (step 400).

On the other hand, if the reduction in the compressor efficiency is recognized, that is, the deposit build up operation condition is met, a deposit sweep mode in which jetting of oil by the oil jets 172 is executed is selected (step 402). Also with respect to this routine, it is assumed that once the deposit buildup operation condition is met, the state that meets the deposit buildup operation condition continues until the compressor efficiency reaches (is restored to) another predetermined value higher than the above-described predetermined value.

In the routine described above with reference to Figure 32, jetting of oil into the crank chamber 80 is executed when the deposit buildup operation condition is met. By increasing the amount of oil supplied to the compressor 18b by a method such as this, a deposit built up in the internal passage (including the diffuser portion 18b6) in the compressor 18b can be subjected to cleaning to recover the compressor efficiency.

Embodiment 6

Embodiment 6 of the present invention will be described with reference mainly to Figure 33.

The system in the present embodiment can be implemented by using the hardware arrangement that the internal combustion engine 170 has and by making the ECU 60 execute a routine described later with reference to Figure 33 in place of the routine shown in Figure 32.

The position of the present embodiment with respect to Embodiment 5 corresponds to the position of Embodiment 2 with respect to Embodiment 1. That is, in the system in the present embodiment, when an operating condition in which the degree of degradation of oil is equal to or higher than a predetermined degree and in which the temperature of the compressor 18b is equal to or higher than a predetermined temperature (deposit buildup mode) is established, it is determined that the deposit buildup operation condition is met. When this condition is met, jetting of oil by the oil jets 172 is executed to increase the amount of oil mist in blow-by gas and to thereby increase the amount of oil supplied to the internal passage in the compressor 18b for the purpose of preventing generation and growth of a deposit.

Figure 33 is a flowchart showing a control routine executed by the ECU 60 to realize specific control in Embodiment 6 of the present invention. In Figure 33, the same steps as those shown in Figure 32 for Embodiment 5 are indicated by the same reference characters. The same description of them will not be repeated or abbreviated descriptions will be made of them.

In the routine shown in Figure 33, determination is first made as to whether or not oil has degraded to a degree equal to or higher than a predetermined degree. If it is thereby determined that the oil has not degraded to a degree equal to or higher than the predetermined degree, a normal operation mode in which jetting of oil by the oil jets 172 is not performed is selected (step 500). On the other hand, if it is determined that the oil has degraded to a degree equal to or higher than the predetermined degree, determination is then made based on the outlet temperature of the compressor 18b as to whether or not the deposit buildup mode is established (step 204).

If it is determined in step 204 that the deposit buildup mode is not established, the normal operation mode in which jetting of oil by the oil jets 172 is not performed is selected (step 500). On the other hand, if it is determined that the deposit buildup mode is established as well as the determination of oil degradation in step 200, that is, if it can be determined that the deposit buildup operation condition is met, jetting of oil by the oil jets 172 is executed (a deposit growth inhibition mode is executed) (step 502).

In the routine described above with reference to Figure 33, jetting of oil into the crank chamber 80 is executed when the deposit buildup operation condition is met (when there is a concern of a buildup of a deposit in the compressor 18b because of the degradation of the oil to an extent equal to or higher than the predetermined degree and the establishment of the deposit buildup mode). By increasing the amount of oil supplied to the compressor 18b by a method such as this, generation (attachment) and growth of a deposit in the internal passage (including the diffuser portion 18b6) in the compressor 18b can be effectively prevented.

Modified Example of Embodiments 5 and 6

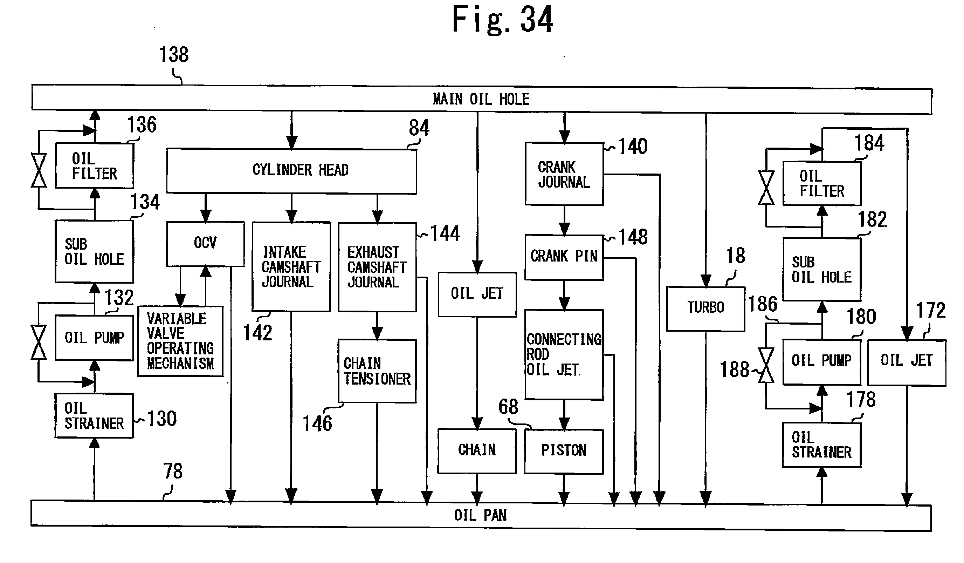

Figure 34 is a diagram for explaining another example of the disposition of oil jets 172 in the lubricating system of the internal combustion engine 170 shown in Figure 30.

The lubricating system of the internal combustion engine 170 shown in Figure 34 is provided with an arrangement with which oil in the oil pan 78 can be directly supplied toward the oil jets 172. More specifically, a special oil pump 180 for drawing up oil in the oil pan 78 through an oil strainer 178 to supply the oil to the oil jets 172 is provided. The oil jets 172 are supplied with oil from this oil pump 180 through a sub oil hole 182 and an oil filter 184. This lubricating system is also provided with an oil return passage 186 for returning, to the intake side of the oil pump 180, oil ejected from the oil pump 180, and a solenoid valve 188 for opening and closing the oil return passage 186.

The arrangement shown in Figure 34 may be used in place of the arrangement shown in Figure 31 to supply oil to the oil jets 172. More specifically, the arrangement shown in Figure 34 may be such that the oil pump 180 is driven by an electric motor and is driven when supply of oil to the oil jets 172 is required. If the oil pump 180 provided is of such a type as to be driven by a torque from the crankshaft 72, supply of oil to the oil jets 172 may be controlled by adjusting the opening of the solenoid valve 188.

In the above descriptions of Embodiments 5 and 6, the arrangement having the oil jets 172 for jetting oil into the crank chamber 80 has been described by way of example. However, the oil jet according to the present invention is not limited to those described above. Any other oil jet may be provided if it jets oil into the crank chamber or an internal space of the engine communicating with the crank chamber. That is, the oil jet according to the present invention may be one for jetting oil, for example, into the above-described internal space 90 in the cylinder head 84.

Embodiment 7

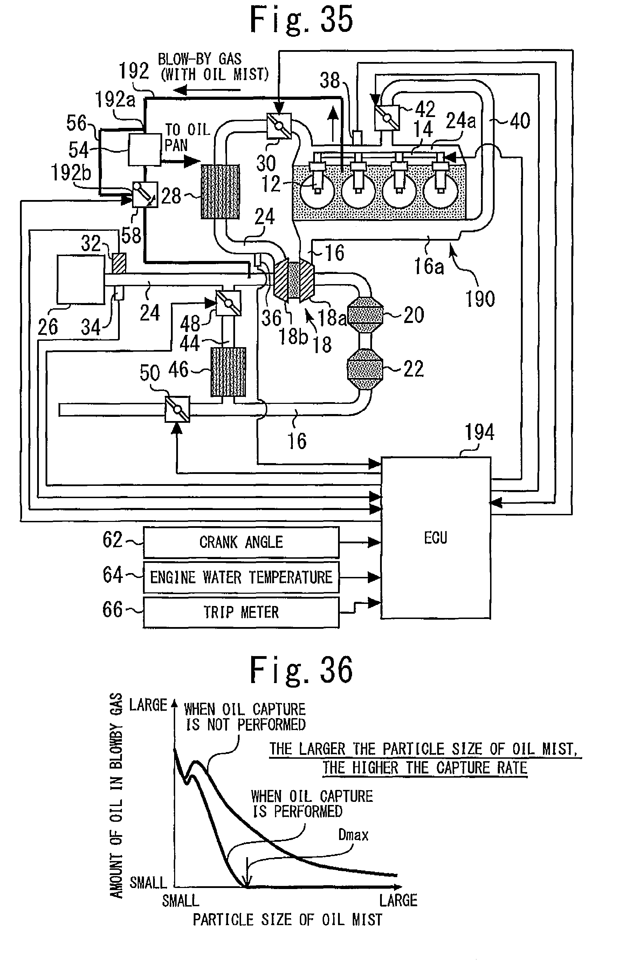

Embodiment 7 of the present invention will be described with reference mainly to Figures 35 to 40.

[System Configuration of Embodiment 7]

Figure 35 is a diagram for explaining a system configuration of an internal combustion engine 190 in Embodiment 7 of the present invention. In Figure 35, the same components as those shown in the figures referred to above including Figure 1 are indicated by the same reference characters. The same description of them will not be repeated or abbreviated descriptions will be made of them.

In each of the above-described internal combustion engines 10 and 120, the oil mist generation device having the negative-pressure pump 96, the gas introduction passage 98 and the atmospheric relief valve 100 is provided as a component of the oil supply apparatus that supplies oil to the internal passage in the compressor 18b by using the communication passage 52. In contrast, in the internal combustion engine 190 in the present embodiment, an oil supply apparatus configured as described below is provided in place of the oil supply apparatus having the oil mist generation device including the negative-pressure pump 96. In respects other than the arrangement relating to the oil supply apparatus, the internal combustion engine 190 is basically arranged in the same way as the internal combustion engines 10 and 120.

That is, the oil supply apparatus in the present embodiment also uses a communication passage 192 and is provided with an oil separator 54, a bypass passage 56 and a switch valve 58. Descriptions of these components will be made below.

The communication passage 192 is a component of a positive crankcase ventilation system (not illustrated) for processing blow-by gas generated in the internal combustion engine 190. The oil separator 54 for separating and capturing an oil mist contained in blow-by gas is provided in an intermediate portion of the communication passage 192. The oil separator 54 is assumed to be a cyclone-type oil separator in the present embodiment. More specifically, the cyclone-type oil separator 54 separates and captures oil from blow-by gas by causing an oil mist to collide against a wall surface of a separator inner portion by utilizing centrifugal force. Oil captured by the oil separator 54 is returned to the oil pan 78.

The bypass passage 56 for enabling blow-by gas to bypass the oil separator 54 is provided by the side of the oil separator 54. The bypass passage 56 branches off the communication passage 192 at an upstream-side connection portion 192a on the upstream side of the oil separator 54 in the blow-by gas flow direction and merges into the communication passage 192 at a downstream-side connection portion 192b on the downstream side of the oil separator 54 in the blow-by gas flow direction. Further, the switch valve (three-way valve) 58 for changing the blow-by gas flow passage is provided in the downstream-side connection portion 192b. The switch valve 58 is controlled by an ECU 194.

More specifically, the switch valve 58 is configured so as to be selectable between a first operating position at which it shuts the bypass passage 56 in the downstream-side connection portion 192b and a second operating position at which it shuts, in the downstream-side connection portion 192b, the communication passage 192 located upstream relative to the bypass passage 56. Therefore, an "oil-capturing flow passage form" for causing blow-by gas to pass through the oil separator 54 can be realized as a blow-by gas passage form by controlling the switch valve 58 to the first operating position, and a "non-oil-capturing flow passage form" for causing blow-by gas to flow through the bypass passage 56 by bypassing the oil separator 54 can be realized as another blow-by gas passage form by controlling the switch valve 58 to the second operating position. A unit formed by integrally combining the oil separator 54, the bypass passage 56 and the switch valve 58 may be provided as an oil separator unit in an intermediate portion of the communication passage 192. Such an oil separator unit may be disposed at any intermediate point in the blow-by gas flow toward the air intake passage 24 on the upstream side of the compressor 18b, and is not limited to the portion of the communication passage 192 outside the internal space 90. For example the oil separator unit may be provided in the internal space 90 in the cylinder head 84.

[Specific Control in Embodiment 7]

The problem relating to a buildup of a deposit in the internal passage (including the diffuser portion 18b6) in the compressor 18b has been described in the description of Embodiment 1 with reference to Figures 7 and 8. The internal combustion engine 190 in the present embodiment is provided with the oil separator 54 for capturing an oil mist contained in blow-by gas for the purpose of limiting the oil consumption for example, as already described. Figure 36 is a diagram showing the relationship between the amount of oil mist and the particle size in blow-by gas (oil mist particle size distribution) with respect to the existence/nonexistence of the oil separator 54.

Cyclone-type oil separators including the oil separator 54 in the present embodiment can be mentioned as a type of oil separator actually being widely used in internal combustion engines. This is because other filter-type and electric oil separators have drawbacks described below. That is, in a case of capturing an oil mist with a filter-type oil separator, the pressure loss is adversely increased when the oil mist capture rate is increased, and there is a need for maintenance of the filter after the filter captures oil. Therefore, this type of filter is not suitable for use when installed in an internal combustion engine. Electric oil separators are generally large in size and high in cost and it can be said that it is difficult to apply them to motor vehicles.

On the other hand, a characteristic of oil mist capturing using a cyclone-type oil separator is as described below. That is, in a case where capture of an oil mist in blow-by gas is performed by using the cyclone-type oil separator 54, an oil mist larger in particle size can be effectively captured while an oil mist smaller in particle size is captured less effectively, as shown in Figure 36. This is because if the particle size of an oil mist is smaller, the effect of centrifugal force is reduced and the oil mist does not easily collide against the internal wall surface of the oil separator 54. Accordingly, when the non-oil-capturing flow passage form for providing a bypass used in place of the oil separator 54 is selected, the amount of oil mist (an oil mist larger in particle size) contained in blow-by gas supplied to the air intake passage 24 on the upstream side of the compressor 18b can be increased.

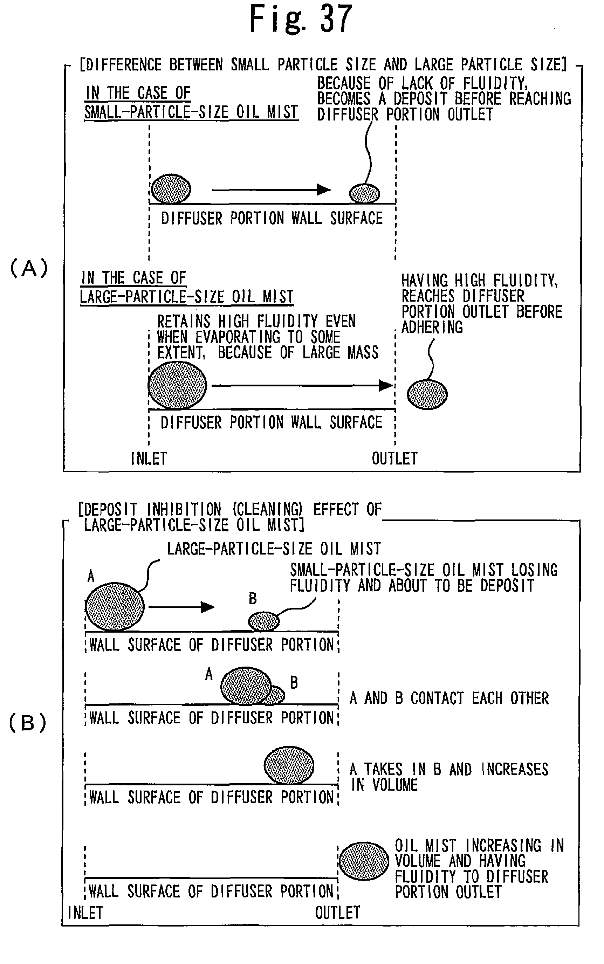

Figure 37 is a diagram for explaining the influence of variation in oil mist particle size on a buildup of a deposit from an oil mist taken into the compressor 18b.

The influence of the particle size of an oil mist on the facility with which a deposit builds up will first be described with reference to Figure 37(A). An oil mist larger in particle size remains in a state of having high fluidity even when it evaporates to some extent in the compressor 18b, because it has a large mass, as shown in Figure 37(A). Even after landing on a surface in the diffuser portion 18b6, therefore, the oil mist larger in particle size can easily reach the outlet of the diffuser portion 18b6 before adhering to the diffuser portion 18b6. On the other hand, after an oil mist smaller in particle size lands on a surface in the diffuser portion 18b6, it adheres to the diffuser portion 18b6 to be a deposit before reaching the outlet of the diffuser portion 18b6, because it lacks fluidity (has low fluidity).

It was also found that an oil mist larger in particle size is effective in cleaning the diffuser portion 18b6 and inhibiting generation and growth (progress of deposition) of a deposit from an oil mist smaller in particle size. More specifically, a state is assumed in which, as shown in Figure 37(B), oil mist B smaller in particle size, having lost fluidity and being about to be a deposit has landed on a surface in the diffuser portion 18b6 in front of oil mist A larger in particle size. In this case, when oil mist A larger in particle size contacts oil mist B smaller in particle size, oil mist A larger in particle size takes in oil mist B smaller in particle size to increase in volume. The oil mist having increased in volume and having an increased particle size reaches the outlet of the diffuser portion 18b6 without losing fluidity and is discharged downstream. Thus, it can be said that the existence of an oil mist of a large particle size is effective in cleaning the diffuser portion 18b6 and inhibiting generation and growth of a deposit from an oil mist of a small particle size.

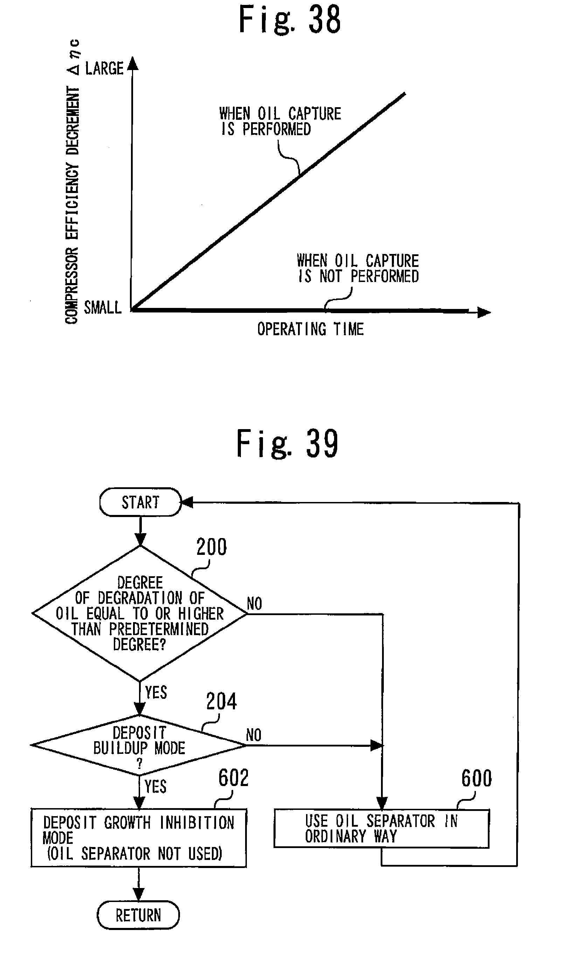

Figure 38 is a diagram showing the relationship between the compressor efficiency decrement $\Delta \eta c$ and the internal combustion engine 190 operating time with respect to the existence/nonexistence of the oil separator 54.

As described above, in a case where oil mists in blow-by gas are captured by using the oil separator 54, an oil mist larger in particle size is captured while an oil mist smaller in particle size and not capturable flows into the compressor 18b. Also, an oil mist smaller in particle size can easily be a deposit, and an oil mist larger in particle size has an effect of inhibiting generation and growth of a deposit from an oil mist smaller in particle size. Therefore, the effect of inhibiting a buildup of a deposit in the diffuser portion 18b6 by increasing the amount of oil mist (larger in particle size) is higher when capture of oil mists with the oil separator 54 is not performed than when capture of oil mists with the oil separator 54 is performed. Accordingly, while no reduction in compressor efficiency decrement $\Delta \eta c$ due to a buildup of a deposit is recognized in a case where oil mist capturing is not performed, the compressor efficiency decrement $\Delta \eta c$ increases with the lapse of operating time in a case where oil mist capturing is performed, as shown in Figure 38.

In the present embodiment, control described below is performed by considering the influence, of variation in particle size distribution of oil mists in blow-by gas accompanying oil capture with the oil separator 54, on the buildup of a deposit in the compressor 18b as described above.

That is, first, as shown in Figure 35 referred to above, the bypass passage 56 and the switch valve 58 are provided that enable changing the form of the flow passage for blow-by gas to be introduced into the air intake passage 24 between the above-described "oil-capturing flow passage form" and "non-oil-capturing flow passage form" according to the operating condition of the internal combustion engine 190.

Then, in the present embodiment, determination is made during the operation of the internal combustion engine 190 as to whether or not the present operating condition is the deposit buildup operation condition under which there is a concern of a buildup of a deposit in the compressor 18b (diffuser portion 18b6) due to an oil mist contained in blow-by gas. More specifically, when an operating condition in which the degree of degradation of oil is equal to or higher than a predetermined degree and in which the temperature of the compressor 18b is equal to or higher than a predetermined temperature (hereinafter referred to as "deposit buildup mode") is established, it is determined that the deposit buildup operation condition is met. When it is determined that the deposit buildup operation condition is met, the switch valve 58 is controlled so that the above-described non-oil-capturing flow passage form for causing blow-by gas to bypass the oil separator 54 is obtained.

Figure 39 is a flowchart showing a control routine executed by the ECU 194 to inhibit a buildup of a deposit in the compressor 18b in Embodiment 7 of the present invention. In Figure 39, the same steps as those shown in Figure 15 for Embodiment 2 are indicated by the same reference characters. The same description of them will not be repeated or abbreviated descriptions will be made of them.

In the routine shown in Figure 39, determination is first made as to whether or not oil has degraded to a degree equal to or higher than a predetermined degree (step 200).

If it is determined in step 200 that the oil has not degraded to a degree equal to or higher than the predetermined degree, the oil separator 54 is used as usual. That is, the switch valve 58 is controlled so that the oil-capturing flow passage form is selected (step 600).

If it is determined in step 200 that the oil has degraded to a degree equal to or higher than the predetermined degree, then determination is made as to whether or not the above-described deposit buildup mode is established (step 204). Also as the method of determination as to the deposit buildup mode on the internal combustion engine 190 in the present embodiment, the method already described in the modified example of Embodiment 2 as an alternative to the method for this step 204 may be used.

If it is determined in step 204 that the above-described deposit buildup mode is not established, the oil separator 54 is used as usual. That is, the switch valve 58 is controlled so that the oil-capturing flow passage form is selected (step 600). On the other hand, if, after the affirmative result of determination in step 200, it is determined in step 204 that the above-described deposit buildup mode is established, that is, if it can be determined that the present operating condition is the deposit buildup operation condition under which there is a concern of a buildup of a deposit in the compressor 18b (diffuser portion 18b6) due to an oil mist contained in blow-by gas, the deposit growth inhibition mode in the present embodiment is executed (step 602). More specifically, in the deposit growth inhibition mode in this step 602, the switch valve 58 is controlled so that the above-described non-oil-capturing flow passage form is obtained in order not to use the oil separator 54.

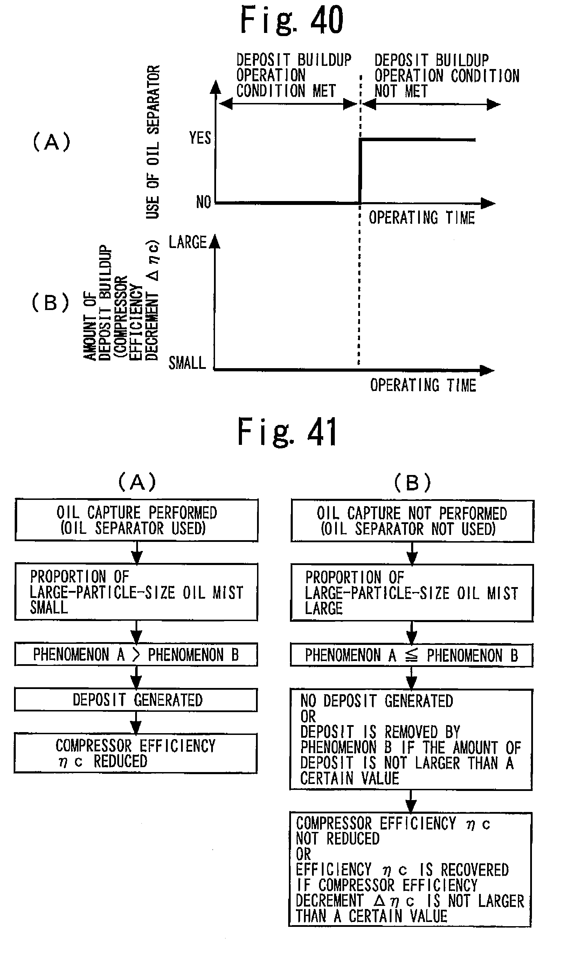

Figure 40 is a diagram or explaining the effect of the control routine shown in Figure 39.

In the routine described above with reference to Figure 39, when the deposit buildup operation condition is not met (when the degree of degradation of oil is not equal to or higher than the predetermined value, or when the deposit buildup mode is not established), the switch valve 58 is controlled so that oil-capturing flow passage form is obtained in order to use the oil separator 54, as shown in Figure 40(A). Also, in the above-described routine, when the deposit buildup operation condition is met (when the degree of degradation of oil is equal to or higher than the predetermined value, and when the deposit buildup mode is established), the switch valve 58 is controlled so that non-oil-capturing flow passage form is obtained in order not to use the oil separator 54.

Figure 41 is a diagram showing the relationship between a buildup of a deposit in the compressor 18b and changes in compressor efficiency $\eta c$ with respect to a case where oil capture with the oil separator 54 is performed and a case where oil capture with the oil separator 54 is not performed.

For ease of description, a phenomenon shown as "Case of oil mist smaller in particle size" in FIG. 37(A) is referred to as "Phenomenon A", and a phenomenon shown in Figure 37(B), in which the effect of inhibiting generation and growth of a deposit by means of an oil mist larger in particle size is produced, is referred to as "Phenomenon B".

Under the deposit buildup operation condition, Phenomena A and B described above occur simultaneously with each other in the diffuser portion 18b6 of the compressor 18b. When the oil separator 54 is used, the proportion of an oil mist larger in particle size is relatively reduced by capturing with the oil separator 54, as shown in Figure 41 (A). Accordingly, Phenomenon A occurs more frequently than Phenomenon B. As a result, a deposit forms and grows in the diffuser portion 18b6, thereby reducing the compressor efficiency $\eta c$.

On the other hand, as shown in Figure 41(B), the proportion of an oil mist larger in particle size is increased when the oil separator 54 is not used compared with when the oil separator 54 is used. The change in oil mist particle size distribution between the case where oil capture is performed and the case where oil capture is not performed is as shown in Figure 36 referred to above. Accordingly, when the oil separator 54 is not used, Phenomenon B occurs as frequently as or more frequently than Phenomenon A. As a result, the deposit is not generated, or the deposit is subjected to cleaning and removed by Phenomenon B if the amount of buildup of the deposit is not larger than a certain amount (if the deposit does not firmly adhere to the diffuser portion 18b6). Thus, the compressor efficiency $\eta c$ is not reduced, or the compressor efficiency $\eta c$ can be recovered by creating a condition under which Phenomenon B occurs more frequently than Phenomenon A if the compressor efficiency decrement $\Delta \eta c$ is not larger than a certain value.

For the reason described above, use of the oil separator 54 is avoided when the deposit buildup operation condition is met (when the degree of degradation of oil is equal to or higher than the predetermined value, and when the deposit buildup mode is established), thereby introducing into the compressor 18b an oil mist larger in particle size and capturable with the oil separator 54 when the oil separator 54 is used. That is, the amount of oil mist is increased as compared with when the deposit buildup operation condition is not met (when the oil-capturing flow passage form is selected). The diffuser portion 18b6 is thereby cleaned to prevent generation and growth of a deposit buildup. Thus, prevention of a buildup of a deposit and a reduction in compressor efficiency $\eta c$ can be achieved, as shown in Figure 40(B). When the deposit buildup operation condition is not met (when the degree of degradation of oil is not equal to or higher than the predetermined value, or when the deposit buildup mode is not established), the oil separator 54 is used to be able to limit the oil consumption in a situation where there is no concern of reduction in compressor efficiency $\eta c$.

In the system in the present embodiment, only when the deposit buildup operation condition is met under which there is a concern of a buildup of a deposit in the compressor 18b, the blow-by gas flow passage form is changed for prevention of a deposit buildup so that the oil separator 54 is not used, as described above. Thus, both reduction of the oil consumption and prevention of a deposit buildup in the compressor 18b can be simultaneously achieved in a favorable way.

Modified Example of Embodiment 7

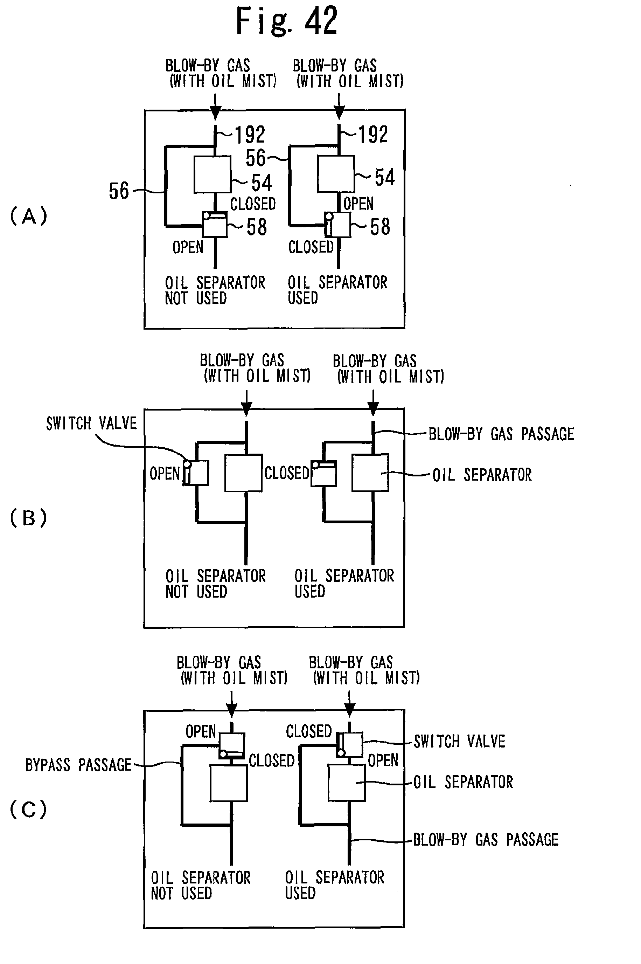

Suitable places for disposition of the switch valve 58 including the arrangement in Embodiment 7 described above will be described with reference to Figure 42.

Figure 42 is a diagram for explaining variations of the place for disposition of the switch valve 58.

The disposition of the switch valve 58 shown in Figure 42(A) corresponds to that in Embodiment 7 described above. In each of the arrangements shown in Figures 42(B) and 42(C) as well as in the arrangement shown in Figure 42(A), the blow-by gas flow passage form can be changed between the oil-capturing flow passage form and the non-oil-capturing flow passage form. Additionally, since there is a pressure loss in the oil separator 54, the blow-by gas flow passage form can be changed by opening/closing of the bypass passage with the switch valve even in the case of the arrangement shown in Figure 42(B), in which the switch valve is provided in an intermediate portion of the bypass passage.

However, not all of Figures 42(A) to 42(C) but Figures 42(A) and 42(B) show preferable places for disposition of the switch valve 58 in the arrangements shown in Figures 42(A) to 42(C). This is because in the case of the arrangement shown in Figure 42(C) oil not captured by the oil separator 54 always strikes the switch valve irrespective of whether or not the oil separator 54 is used. In contrast, in the arrangements shown in Figures 42(A) and 42(B), the switch valve (58) is exposed to oil not captured by the oil separator 54 only when the non-oil-capturing flow passage form is selected. These arrangements thus enable reducing chances of exposing the switch valve (58) to oil as compared with the arrangement shown in Figure 42(C), thereby reducing the possibility of the switch valve (58) being made immovable by attachment of oil.

In Embodiment 7 described above, the oil separator 54 corresponds to the "oil capture means" in the present invention, and the switch valve 58 controlled by the ECU 194 corresponds to the "flow passage change means" in the present invention. Also, the "flow passage control means" in the present invention is realized by the ECU 194 executing processing in step 600 or 602 according to the results of determinations in steps 200 and 204.

In the modified example of Embodiment 7 described above, the "compressor local temperature obtaining means" in the present invention is realized by the ECU 194 calculating the temperature T3local of the local high-temperature portion in the internal portion (diffuser portion 18b6) of the compressor 18b in accordance with the above-described method.

Embodiment 8

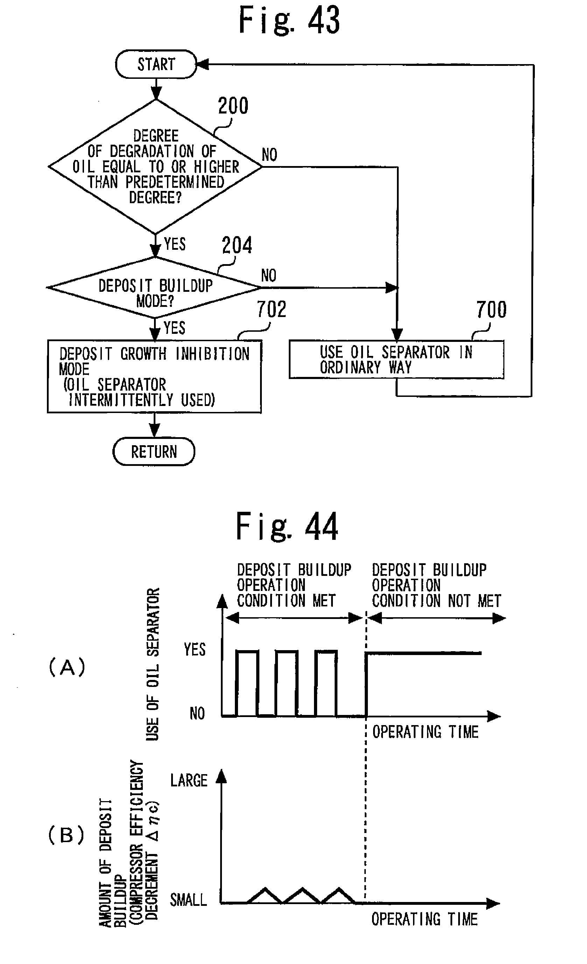

Embodiment 8 of the present invention will be described with reference mainly to Figures 43 and 44.

The system in the present embodiment can be implemented by using the hardware arrangement provided for the internal combustion engine 190 and by making the ECU 194 execute a routine described later with reference to Figure 43 in place of the routine shown in Figure 39.

In the system in Embodiment 7 described above, when the deposit buildup operation condition is met under which there is a concern of a buildup of a deposit in the compressor 18b, the switch valve 58 is controlled so that the oil separator 54 is not used. In contrast, in the system in the present embodiment, when the deposit buildup operation condition is met under which a deposit can build up in the compressor 18b, the switch valve 58 is operated so that the non-oil-capturing flow passage form is intermittently obtained. That is, alternate switching between a state where the oil separator 54 is used and a state where the oil separator 54 is not used is repeatedly performed.

Figure 43 is a flowchart showing a control routine executed by the ECU 194 to inhibit a buildup of a deposit in the compressor 18b in Embodiment 8 of the present invention. In Figure 43, the same steps as those shown in Figure 39 for Embodiment 7 are indicated by the same reference characters. The same description of them will not be repeated or abbreviated descriptions will be made of them.

In the routine shown in Figure 43, if, after the affirmative result of determination in step 200, it is determined in step 204 that the deposit buildup mode is established, that is, if it can be determined that the present operating condition is the deposit buildup operation condition under which there is a concern of a buildup of a deposit in the compressor 18b (diffuser portion 18b6) due to an oil mist contained in blow-by gas, the deposit growth inhibition mode in the present embodiment is executed (step 702). More specifically, in the deposit growth inhibition mode in this step 702, the switch valve 58 is driven so that the non-oil-capturing flow passage form is intermittently obtained (the bypass passage 56 is intermittently used) in order to repeatedly perform alternate switching between the state where the oil separator 54 is used and the state where the oil separator 54 is not used.

Figure 44 is a diagram for explaining the effect of the control routine shown in Figure 43.

In the routine described above with reference to Figure 43, when the deposit buildup operation condition is met (when the degree of degradation of oil is equal to or higher than the predetermined value, and when the deposit buildup mode is established), the state where the oil separator 54 is used and the state where the oil separator 54 is not used are alternately selected, as shown in Figure 44(A). With this selection, with the lapse of operating time, the amount of buildup of a deposit in the diffuser portion 18b6 changes according to use/non-use of the oil separator 54, as shown in Figure 44(B).

More specifically, in the state where the oil separator 54 is used under the deposit buildup operation condition, the amount of buildup of the deposit increases with the lapse of operating time for the reason described above with reference to Figure 41(A). Thereafter, when the switch valve 58 is controlled so that the state where the oil separator 54 is not used is established, the amount of buildup of the deposit is reduced with the lapse of operating time for the reason described above with reference to Figure 41 (B) (the deposit cleaning effect). With the progress of the deposit buildup to a certain extent (when the deposit grows), the deposit firmly adheres to the diffuser portion 18b6. In the present embodiment, therefore, switching intervals at which alternate switching between the state where the oil separator 54 is used and the state where the oil separator 54 is not used is performed are set sufficiently wide based on experimental results or the like obtained in advance in order to change the flow passage at intervals within such limits that the deposit cleaning effect produced by charging an oil mist large in particle size is sufficiently high (such that before the deposit firmly adheres to the diffuser portion 18b6, an of oil mist large in particle size can be charged by making a switch to the state where the oil separator 54 is not used).

As described above, a buildup of a deposit in the compressor 18b can also be prevented by intermittently charging an oil mist large in particle size under the deposit buildup operation condition according to the method of controlling the switch valve 58 so that the bypass passage 56 (non-oil-capturing flow passage form) is intermittently used, thus enabling prevention of a reduction in compressor efficiency $\eta$c. More specifically, the method in the present embodiment enables, by means of intermittent use of the bypass passage 56, increasing chances of capturing oil with the oil separator 54 while limiting the amount of buildup of a deposit so as not to exceed a certain amount in order to prevent the diffuser portion 18b6 from being fully immovable. Therefore, the system in the present embodiment enables both reduction of the oil consumption and prevention of a deposit buildup in the compressor 18b in a favorable way while placing a larger weight on the reduction of the oil consumption as compared with the system in Embodiment 7 described above.

The system in the present embodiment enables, by means of frequently reciprocating the switch valve 58 for intermittent use of the bypass passage 56 under the deposit buildup operation condition, relatively reducing the risk of the switch valve 58 being made immovable by oil attached when the non-oil-capturing flow passage form (bypass passage 56) is used, compared with the system in Embodiment 7 described above, in which the switch valve 58 is controlled continuously to the above-described second operating position under the deposit buildup operation condition.

Modified Example of Embodiments 7 and 8

Embodiments 7 and 8 have been described by way of example with respect to a case where the cyclone-type oil separator 54 is used. However, the effect according to the present invention can be also achieved not only when the cyclone-type oil separator 54 is provided but also when a different type of oil capturing means is provided if it has such a characteristic as to easily capture an oil mist larger in particle size but capture an oil mist smaller in particle size with difficulty.

Embodiment 9

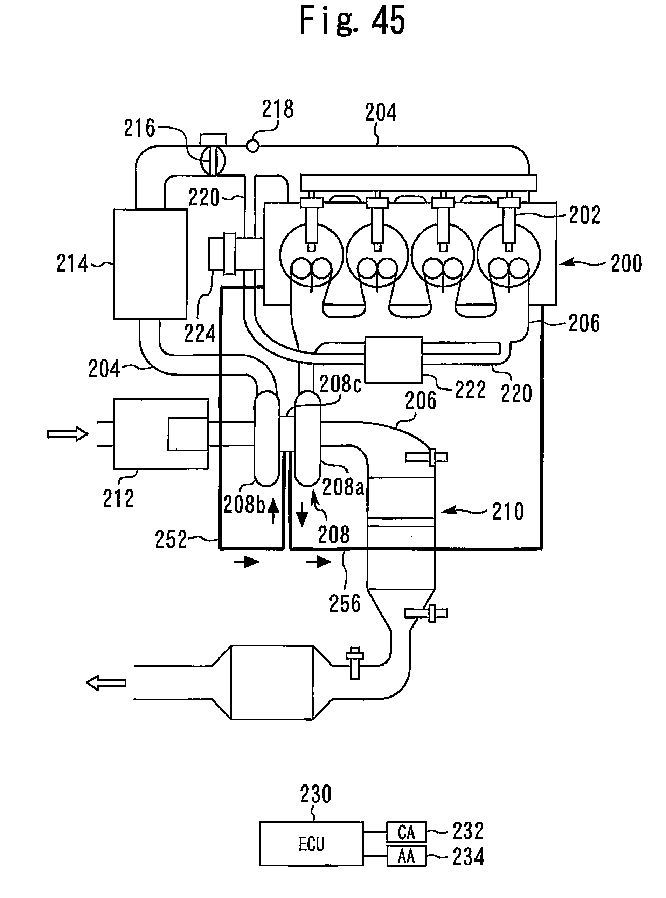

Embodiment 9 of the present invention will be described with reference to Figures 45 to 47.

[System Configuration of Embodiment 9]

Figure 45 is a diagram showing a system configuration of an internal combustion engine 200 in Embodiment 9 of the present invention. A system shown in Figure 45 includes the internal combustion engine (hereafter also referred to simply as "engine") 200. The internal combustion engine 200 shown in Figure 45 is a straight four-cylinder diesel engine. The number of cylinders and the cylinder arrangement are not limited to those of the straight four-cylinder engine. On each cylinder, an injector 202 for directly injecting fuel into the cylinder (combustion chamber) is provided.

An air intake passage 204 and an exhaust passage 206 are connected to each cylinder of the internal combustion engine 200. Exhaust gas discharged from each cylinder of the internal combustion engine 200 flows into the exhaust passage 206. The internal combustion engine 200 is provided with a turbocharger 208 that performs supercharging by the energy of exhaust gas. The turbocharger 208 has a turbine 208a, a compressor 208b and a bearing unit 208c that coaxially supports the same.

A catalyst 210 for clearing off detrimental components in exhaust gas is provided in the exhaust passage 206 on the downstream side of the turbocharger 208.

An air cleaner 212 is provided in the vicinity of an inlet of the air intake passage 204. The compressor 208b is provided downstream of the air cleaner 212. An intercooler 214 is provided downstream of the compressor 208b. An electronic control type of throttle valve (diesel throttle) 216 is provided downstream of the intercooler 214. An intake manifold forming part of the air intake passage 204 is formed downstream of the throttle valve 216. An intake air pressure sensor 218 is provided at the intake manifold.

Fresh air drawn in through the air cleaner 212 is compressed by the compressor 208b of the turbocharger 208 and thereafter cooled by the intercooler 214. The cooled fresh air passes through the throttle valve 216 and is distributed to flow into the cylinders.

The system in the present embodiment includes an exhaust gas recirculation system (EGR system). The EGR system recirculates part of exhaust gas flowing through the exhaust passage 206 as EGR gas to the air intake passage 204. More specifically, an EGR passage 220 that connects the exhaust passage 206 on the upstream side of the turbine 208a and the air intake passage 204 on the downstream side of the throttle valve 216 to each other is provided. An EGR cooler 222 is provided in the EGR passage 220. An EGR valve 224 is provided downstream of the EGR cooler 222.

The system in the present embodiment also includes a positive crankcase ventilation system (PCV) not illustrated. The positive crankcase ventilation system is a system for reducing mainly HC by leading blow-by gas into the air intake passage 204 and subjecting the blow-by gas to afterburning. In the system in the present embodiment, the engine body and a portion of the air intake passage 204 on the upstream side of the compressor 208b are connected to each other and blow-by gas is returned to a portion on the upstream side of the compressor 208b.

The system in the present embodiment further includes an ECU 230. The ECU 230 is configured by a computational processing device having a storage circuit including, for example, a ROM and a RAM. To an input section of the ECU 230, various sensors for sensing the operating state of the internal combustion engine 200, such as a crank angle sensor 232 for sensing the crank angle and the crank angular velocity, and an accelerator position sensor 234 for sensing the amount of depression of the accelerator pedal, are connected as well as the intake air pressure sensor 218. To an output section of the ECU 230, various actuators for controlling the operating state of the internal combustion engine 200, such as the above-described injector 202, throttle valve 216 and EGR valve 224, and a variable nozzle described later, are connected. The ECU 230 controls the operating state of the internal combustion engine 200 by driving the various actuators on the basis of outputs from the various sensors and predetermined programs.

[Specific Components in Embodiment 9]

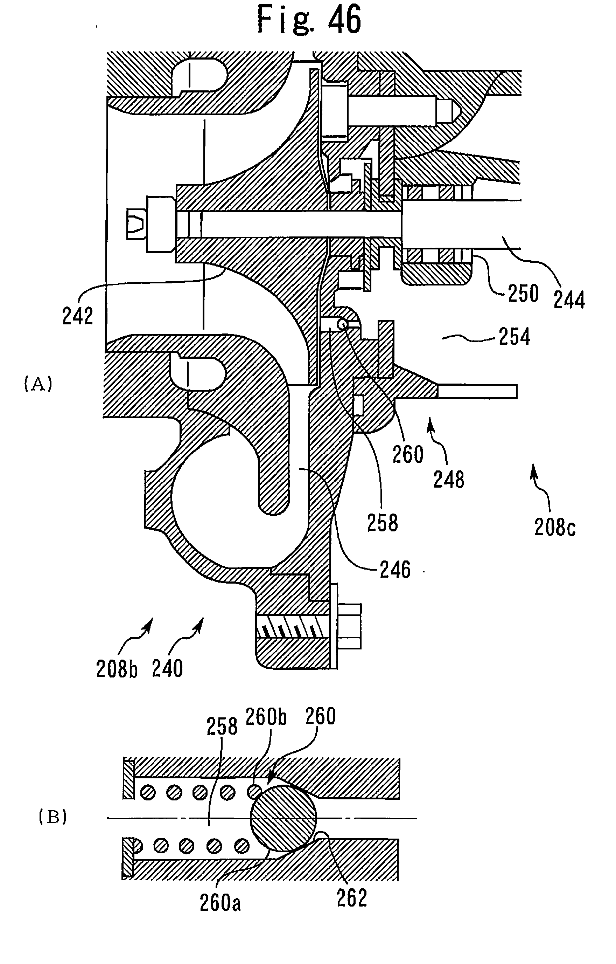

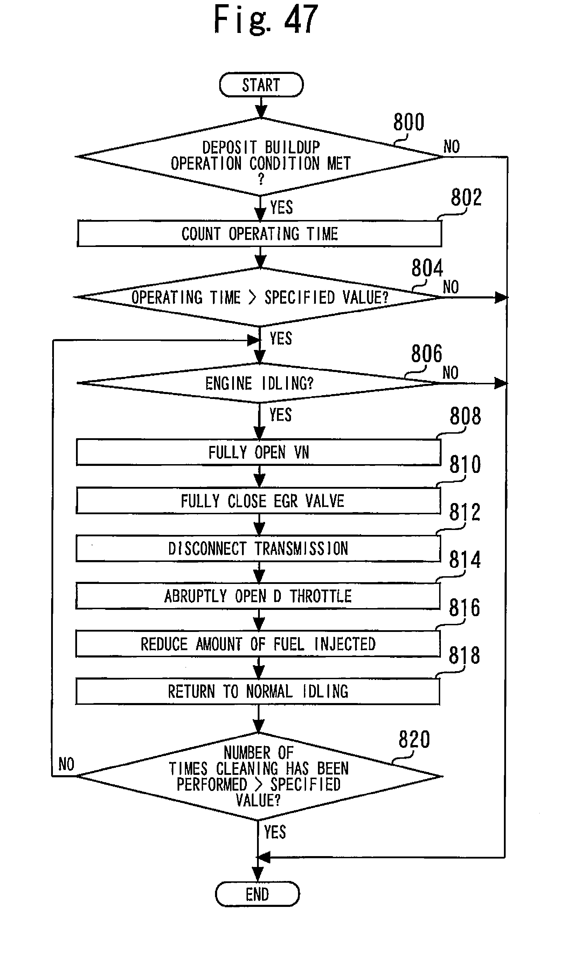

Specific components of the system in the present embodiment will be described with reference to Figures 46 and 47. One of main features of the present invention resides in a structure including an oil communication passage 258 and a check valve 260 shown in Figure 46. Another of the features resides in specific control shown in Figure 47.

(Structure of Centrifugal Compressor)

Figure 46 is a sectional view showing portions of a compressor housing and a center housing of the turbocharger 208. The turbocharger 208 has the turbine 208a, the compressor 208b and the bearing unit 208c.

The turbine 208a has a turbine housing. A turbine wheel is housed in the turbine housing. The turbine housing leads exhaust gas to the turbine wheel, and the turbine wheel converts the energy of the exhaust gas into rotational energy.

The turbocharger 208 in the present embodiment is a variable-nozzle turbocharger. A variable nozzle (VN) is housed in the turbine housing. The variable nozzle is driven by an actuator for adjusting the nozzle opening. The flow velocity of exhaust gas is increased by reducing the opening of the variable nozzle. The exhaust pressure can be reduced by increasing the opening of the variable nozzle. For example, during normal operation, the opening of the variable nozzle is controlled according to factors including the engine speed.

The compressor 208b has a compressor housing 240. A compressor impeller 242 is housed in the compressor housing 240. The compressor impeller 242 is provided on a turbine shaft 244 at one end of this shaft. The above-described turbine wheel is provided on the turbine shaft 244 at the other end of this shaft. The rotational energy of the above-described turbine wheel is transmitted through the turbine shaft 244 to rotate the compressor impeller 242.

The compressor 208b is a centrifugal compressor. Air passes through most passages in the blade region of the compressor impeller 242 in radial directions. The pressure of air is boosted mainly by the action of centrifugal force. A diffuser portion 246 is formed in the compressor housing 240 on the downstream side of the compressor impeller 242. Air is decelerated when passing through the diffuser portion 246 and the pressure of the air is thereby increased. The air is thereafter delivered to the downstream air intake passage 204.

The bearing unit 208c has a center housing 248. The center housing 248 connects the turbine housing and the compressor housing 240 to each other. A bearing portion 250 that rotatably supports the turbine shaft 244 inserted into the center housing 248 is provided in the center housing 248. An oil-lubricated bearing, a slide bearing in the present embodiment is used as bearing portion 250.

An oil introduction passage 252 (Figure 45) for introducing oil from the internal combustion engine 200 is connected to the center housing 248. Oil introduced from the oil introduction passage 252 is led to the bearing portion 250 and a space around the bearing portion 250 (bearing chamber 254). Thereafter, the oil is discharged into an oil discharge passage 256 (Figure 45) to be returned to the internal combustion engine 200.

Specifically, the turbocharger 208 in the present embodiment has the oil communication passage 258, which is a communication hole connecting the bearing chamber 254 and the diffuser portion 246 to each other. More specifically, the oil communication passage 258 is provided in the compressor housing 240 or the center housing 248 and provides communication between the bearing chamber 254 and the diffuser portion 246. The diffuser portion 246 may be assumed to include a portion of the compressor housing 240 on the back surface side of the compressor impeller 242. Further, the check valve 260 for opening and closing the oil communication passage 258 is provided. The check valve 260 can be opened when the pressure in the bearing chamber 254 is higher by a predetermined value or more than the pressure in the diffuser portion 246. A more concrete description will be made. Figure 46(B) is an enlarged view of the check valve 260 and a portion around the check valve 260. The check valve 260 has a valve element 260a and a spring 260b. A seat portion 262 on which the valve element 260a inserted from the diffuser portion 246 side can be seated is formed at a position in the oil communication passage 258 in the compressor housing 240. The valve element 260a is seated by being pressed against the seat portion 262 by the spring 260b. When the pressure in the bearing chamber 254 exceeds the sum of the pressure in the diffuser portion 246 and the urging force of the spring 260b, the check valve 260 is opened.

The turbocharger 208 in the present embodiment has the above-described specific structure and can therefore supply oil from the bearing chamber 254 to the diffuser portion 246 by opening the check valve 260. Therefore, while in the system in which oil in the PCV is returned to a portion on the upstream side of the compressor 208b, attachment of a deposit to the diffuser portion 246 occurs due to soot or the like contained in the oil, the turbocharger 208 in the present embodiment is capable of leading oil in the bearing chamber 254 to the diffuser portion 246 to perform cleaning to remove a deposit.


(Specific Control)

Figure 47 is a flowchart of a specific control routine in Embodiment 9 of the present invention executed by the ECU 50. In the routine shown in Figure 47, the ECU 230 first determines whether or not the deposit buildup operation condition is met (step 800). The deposit buildup operation condition is met, for example, when the compressor outlet temperature or the soot concentration in oil is higher than a specified value. The compressor outlet temperature may be estimated based on, for example, a stored map in which the relation between the operating state and the compressor output temperature is determined. The outlet temperature of the compressor 208b may alternatively be estimated by using a model. The soot concentration in oil may be obtained in the same way.

If the deposit buildup operation condition is not met, processing in this routine is terminated. If the deposit buildup operation condition is met, the ECU 230 counts the operating time (step 802). The ECU 230 determines whether or not the counted operating time has reached a specified value (step 804). As this specified value, a value correlated to an allowable amount of deposit building up in the diffuser portion 246 is stored in the ECU 230.

If the determination for condition in step 804 is not met, processing in this routine is terminated. If the determination condition is met, diffuser portion oil supply processing is executed (steps 806 to step 820). The diffuser portion oil supply processing is executed at a convenient time when the internal combustion engine 200 enters an idling state during normal operation. The ECU 230 first determines whether or not the internal combustion engine 200 is idling (step 806). This determination can be made, for example, on the basis of factors including the output value from the accelerator position sensor 234.

If the condition for determination in step 806 is not met, processing in this routine is terminated. If the determination condition is met, the variable nozzle (VN) is opened or, preferably, fully opened (step 808). Also, the EGR valve 224 is closed or, preferably, completely closed (step 810). Also, the transmission is shifted to neutral (step 812).

Subsequently, in the engine idling state, the throttle valve 216 is abruptly opened (step 814). Further, when the throttle is abruptly opened, the ECU 230 estimates a change in pump loss based on factors including the pressure in the intake manifold sensed by the intake air pressure sensor 218, and reduces the amount of fuel to be injected according to this change (step 816). Return to the normal engine idling state is thereafter made (step 818).

This diffuser portion oil supply processing is repeated until the number of times cleaning has been performed reaches a specified number of times (step 820). However, when the driver performs an operation on the accelerator, the diffuser portion oil supply processing is suspended and a switch to processing for the normal operation is made. Processing for the remaining number of times of cleaning is resumed next time the engine enters the idling state.

As described above, in the routine shown in Figure 47, the throttle valve 216 is abruptly opened at a convenient time when the engine 200 enters the idling state (step 814). Air around the compressor 208b can thereby be caused to flow abruptly to the engine side to produce a negative pressure in the diffuser portion 246. By producing a negative pressure in the diffuser portion 246, the pressure difference between the diffuser portion 246 and the bearing chamber 254 is increased and the check valve 260 is automatically opened. As a result, oil droplets in the bearing chamber 254 are led to the diffuser portion 246 on the downstream side of the compressor impeller 242.

In each of the internal combustion engines 10 and 120 in Embodiment 1 and other embodiments, the oil mist generation device having the negative-pressure pump 96, the gas introduction passage 98 and the atmospheric relief valve 100 is provided as a component of the oil supply apparatus for supplying oil to the internal passage in the compressor 18b by using the communication passage 52. On the other hand, the oil supply apparatus provided in the internal combustion engine 200 in the present embodiment is provided with the bearing chamber 254 (oil passage), the oil communication passage 258 and the check valve 260. From the oil supply apparatus having these components, oil is supplied to the diffuser portion 246, which is an internal passage in the compressor 208b, by performing control in accordance with the routine described above with reference to Figure 47 when the idling condition is met after the deposit buildup operation condition is met. The amount of oil supplied to the above-described internal passage (diffuser portion 246) in a situation where blow-by gas containing an oil mist is supplied to the compressor 208b can thereby be increased compared with when the deposit buildup operation condition is not met.

The system in the present embodiment described above enables removing a deposit attached to the diffuser portion 246 by cleaning without damaging the compressor impeller 242. Since cleaning is executed when the engine is idling, the deposit can be subjected to cleaning and removed without causing any hindrance to the normal operation of the internal combustion engine 200.

At the time of abruptly opening the throttle, an increase in turbo rotational speed can be prevented by control in the mode of opening the variable nozzle (step 808). Also, at the time of abruptly opening the throttle, a large negative pressure can be produced by control in the mode of closing the EGR valve 224 (step 810).

At the time of performing diffuser portion oil supply processing, application of a torque to the vehicle in a state of being stopped while the engine is idling can be avoided by control in the mode of automatically shifting the transmission to neutral (step 812).

Also, when the throttle is abruptly opened, an abrupt increase in engine torque due to an increase in pressure in the intake manifold can be prevented by estimating a change in pump loss and reducing the amount of fuel to be injected according to the change in pump loss (step 816).

In the processing routine described above with reference to Figure 47, processing in steps 808 to 812 is executed as pre-processing before processing in step 814. However, part or the whole of processing in steps 808 to 812 may be removed.

Also, in the processing routine described above with reference to Figure 47, processing in step 816 may be removed.

In Embodiment 9 described above, the bearing chamber 254 corresponds to the "oil passage" in the present invention and the check valve 260 corresponds to the "opening and closing means" in the present invention.

Also, in the present embodiment, the ECU 230 executes processing in steps 806 to 820 to realize the "diffuser portion oil supply means" in the present invention, executes processing in steps 806 and 814 to realize the "throttle abrupt opening means" in the present invention, executes processing in step 808 to realize the "variable nozzle opening means" in the present invention, and executes processing in step 810 to realize the "EGR valve closing means" in the present invention.

Embodiment 10

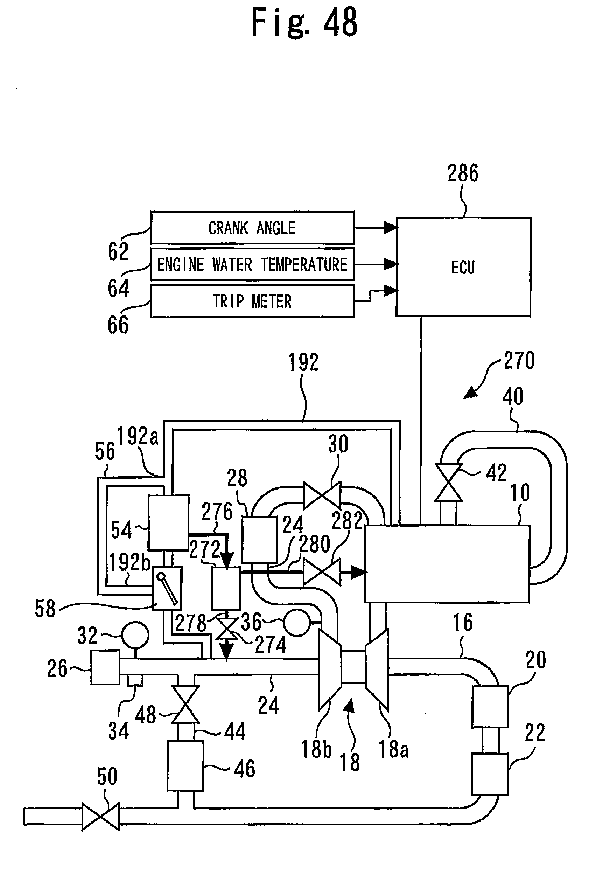

Embodiment 7 of the present invention will be described with reference mainly to Figures 48 to 55.

[System Configuration of Embodiment 10]

Figure 48 is a diagram showing a system configuration of an internal combustion engine 270 in Embodiment 10 of the present invention. In Figure 48, the same components as those shown in the figures referred to above including Figure 35 for Embodiment 7 are indicated by the same reference characters. The same description of them will not be repeated or abbreviated descriptions will be made of them.

In each of the above-described internal combustion engines 10 and 120 in Embodiment 1 and other embodiments, the oil mist generation device having the negative-pressure pump 96, the gas introduction passage 98 and the atmospheric relief valve 100 is provided as a component of the oil supply apparatus that supplies oil to the internal passage in the compressor 18b by using the communication passage 52. In the internal combustion engine 270 in the present embodiment, an oil supply apparatus configured as described below is provided in place of the oil supply apparatus having the oil mist generation device including the negative-pressure pump 96. In respects other than the arrangement relating to the oil supply apparatus, the internal combustion engine 270 is basically arranged in the same way as the internal combustion engine 10.

That is, the oil supply apparatus in the present embodiment also uses the communication passage 192 and is provided with the oil separator 54, an oil mist recovery tank 272, and an oil mist injection valve 274. Descriptions will be made below mainly of these components. Descriptions of the same portions as those in the arrangement around the oil separator 54 in the internal combustion engine 190 in Embodiment 7 or 8 are not made below.

The oil separator 54 is connected to the oil mist recovery tank 272 through an oil passage 276. The oil mist recovery tank 272 is capable of recovering oil captured and collected by the oil separator 54 and storing a certain amount of recovered oil. The oil mist recovery tank 272 is connected to a portion of the air intake passage 24 on the upstream side of the compressor 18b through an oil mist injection passage 278. The oil mist injection valve 274 is provided in the oil mist injection passage 278.

The oil mist recovery tank 272 is connected to the oil pan 78 of the internal combustion engine 270 through an oil return passage 280. An oil return valve 282 is provided in the oil return passage 280. Captured and collected oil is returned to the oil pan 78 by opening the oil return valve 282.

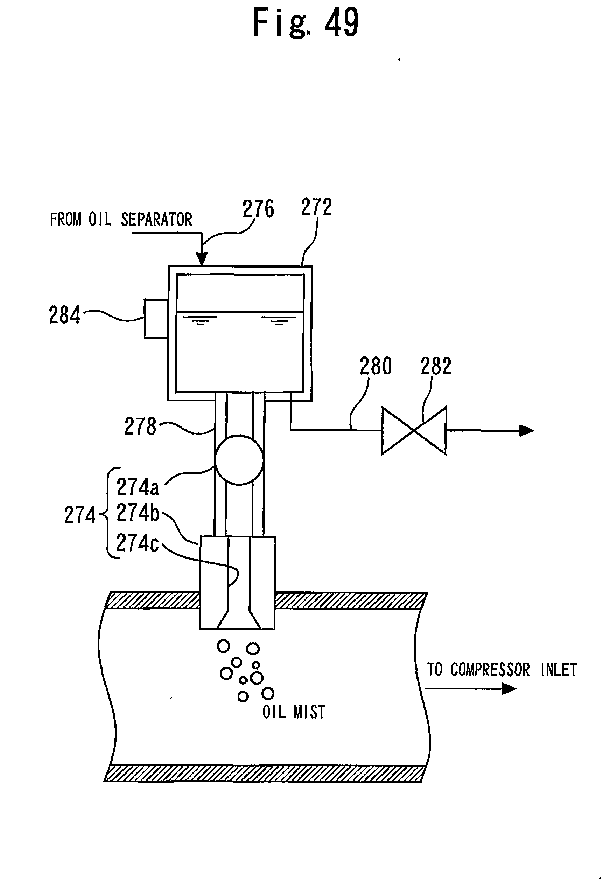

Figure 49 is an enlarged schematic diagram of a portion in the vicinity of the oil mist recovery tank 272 and the oil mist injection valve 274. The oil mist injection valve 274 has a valve element 274a and a nozzle body 274b. A nozzle portion 274c is formed as a flow passage in the nozzle body 274b. The diameter of the nozzle portion 274c is increased at the tip side of the nozzle body 274b. By opening of the oil mist injection valve 274 (i.e., opening of the valve element 274a), an oil mist is injected into the air intake passage 24, as shown in Figure 49. Any of various arrangements for forming a sprayed mist, such as a pressure control pump, (not described in detail because an application of a selection from well-known techniques suffices as such an arrangement) may be provided for use with the oil mist injection valve 274 as required. An oil level meter 284 for measuring the amount of remaining oil is provided at the oil mist recovery tank 272.

To an input section of an ECU 286 in the present embodiment, the oil level meter 284 and the same kinds of sensors as those connected to the ECU 60 are connected. To an output section of the ECU 286, the oil mist injection valve 274, the oil return valve 282 and the same actuators as those connected to the ECU 60 are connected. The ECU 286 can perform opening/closing control on each of the oil mist injection valve 274 and the oil return valve 282 by means of a control signal. The oil mist injection valve 274 is normally closed while the oil return valve 282 is normally open.

[Specific Control in Embodiment 10]

The problems relating to a buildup of a deposit in the internal passage (such as the diffuser portion 18b6) in the compressor 18b and to the influence of the operation of the cyclone-type (centrifugal-separation-type) oil separator 54 have already been described in the description of Embodiment 1 with reference to Figures 7 and 8 and in the description with reference to Figures 36 to 38. In the present embodiment, control described below is performed for the purpose of preventing a buildup of a deposit in the compressor 18b.

(Oil Mist Injection Valve 274)

In the present embodiment, the oil mist injection valve 274 is provided to inhibit the above-described deposit buildup. It is assumed that the nozzle shape of the nozzle portion 274c of the oil mist injection valve 274 is designed based on experiments made in advance so that a sprayed mist containing a large amount of "oil mist of a particle size most suitable for cleaning on a built-up deposit" is formed. More specifically, this oil mist particle size is preferably such that the particle can reach the outlet of the diffuser portion 18b6 of the compressor 18b even in the case of landing on a surface in the diffuser portion 18b6, as described above with reference to Figure 37. The nozzle portion 274c may be designed based on experiments made in advance so that an amount of particles of such a particle size suitable for inhibition of the deposit buildup are contained.

In the present embodiment, oil is recovered from blow-by gas and the recovered oil can be supplied as an oil mist to a portion of the air intake passage 24 on the upstream side of the compressor 18b through the oil mist injection valve 274 when necessary. Because injection of an oil mist can be performed only when necessary, unnecessary consumption of oil recovered with the oil separator 54 can be avoided and a limited amount of oil can be effectively used.

The oil mist injection valve 274 may supply an oil mist of a particle size larger than Dmax in Figure 36. Dmax is "the maximum value of the particle size of oil mists passing through the centrifugal-separation-type oil separator 54", as shown in Figure 36. In the oil-capturing flow passage form, an oil mist of a particle size larger than Dmax can not be supplied to the air intake passage 24 since oil is captured and collected by the oil separator 54. As described above, an oil mist of a larger particle size is effective in cleaning the diffuser portion 18b6 and inhibiting generation and growth (progress of deposition) of a deposit from an oil mist of a smaller particle size. If the oil mist injection valve 274 is constructed so as to be capable of supplying an oil mist of such a sufficiently large particle size, an oil mist having a certain large particle size can be supplied to the portion of the air intake passage 24 on the upstream side of the compressor 18b with stability by desired timing substantially irrespective of the blow-by gas flow passage form. A method such as this also enables increasing the amount of oil mist supplied to a portion on the upstream side of the compressor 18b with the arrangement according to the present embodiment, thus enabling increasing the amount of oil supplied to the internal passage in the compressor 18b. Also, since oil recovery by means of the oil separator 54 and oil mist supply by means of the oil mist injection valve 274 can be controlled independently of each other, both reduction of oil consumption and prevention of a deposit buildup in the compressor can be simultaneously achieved in a favorable way.

(Determination of Deposit Buildup Operation Condition)

In the present embodiment, determination is made during the operation of the internal combustion engine 270 as to whether or not the present operating condition is the "deposit buildup operation condition under which there is a concern of a buildup of a deposit in the compressor 18b (diffuser portion 18b6) due to an oil mist contained in blow-by gas". In the present embodiment, the deposit buildup operation condition is determined by using the soot concentration, the LPL-EGR mixing ratio and the compressor outlet temperature.

(1) Determination Based on Relationship between Deposit Buildup and Soot Concentration

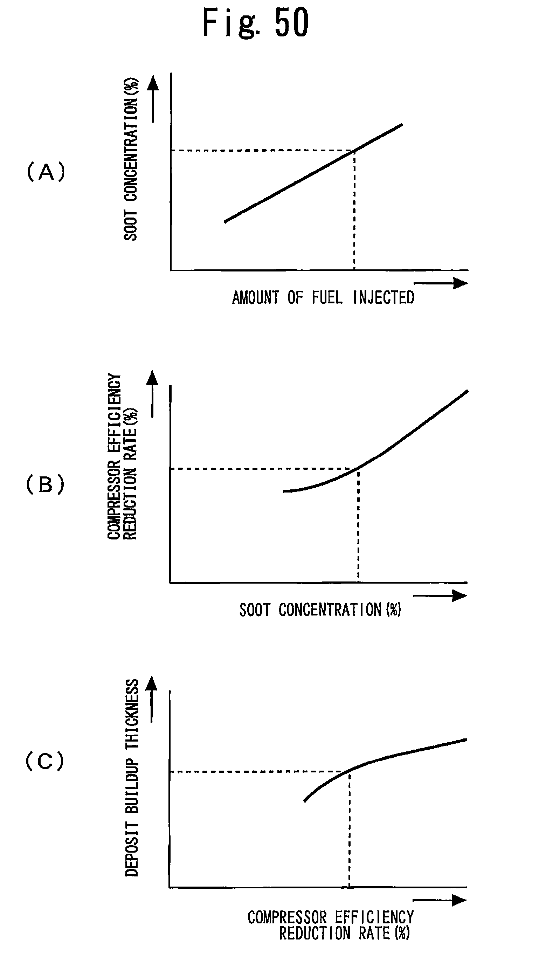

Figure 50 is a diagram showing the relationship between a deposit buildup and the soot concentration.
There is a correlation between the soot concentration and the amount of fuel injected, as shown in Figure 50(A). A causal sequence in this relationship will be described. The soot concentration in gas flowing in the compressor 18b correlates with the rate of reduction in compressor efficiency, as shown in Figure 50(B). Further, the reduction in compressor efficiency correlates with the amount of deposit buildup (the thickness of a deposit built up) on a wall surface in the diffuser portion 18b6 of the compressor, as shown in Figure 50(C).
In the present embodiment, the soot concentration is calculated by the following equation (1) based on the above-described correlation:

$$S = cof_1 + cof_2 \times A \quad \dots (1)$$

S is the soot concentration; A is the amount of fuel injected; and $cof_1$ + $cof_2$ are predetermined constants.
The ECU 286 obtains a command value for the amount of fuel injected from the injector 12 and calculates the soot concentration S according to the above equation (1). If the soot concentration is equal to or higher than a predetermined upper limit value, the ECU 286 determines that the soot concentration meets the deposit buildup operation condition.

(2) Determination Based on Relation between Deposit Buildup and LPL-EGR Mixing Ratio

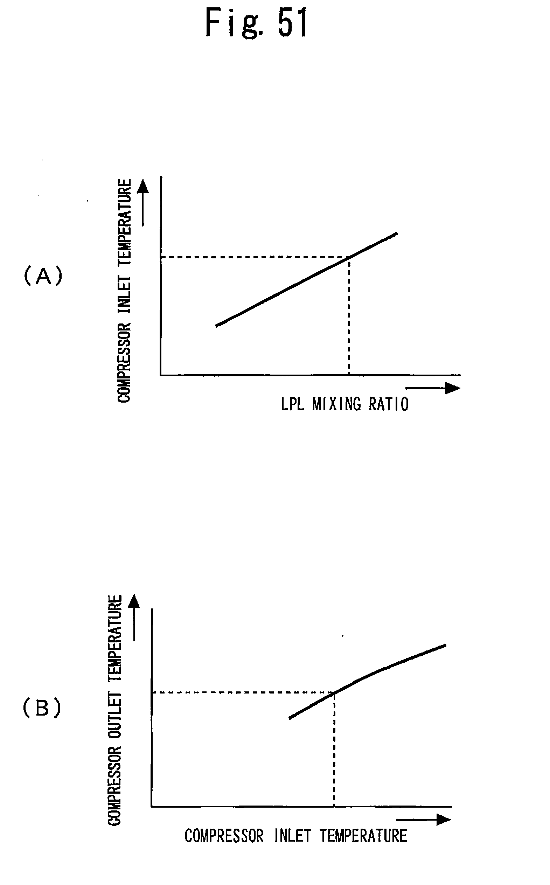

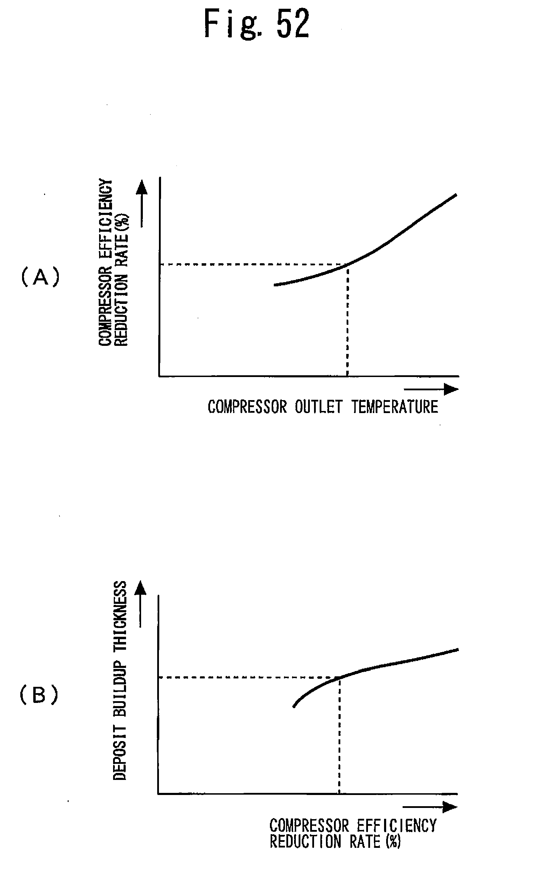

Figures 51 and 52 are diagrams for explaining the relationship between a deposit buildup and the LPL-EGR mixing ratio.
There is a correlation between the LPL-EGR mixing ratio and the compressor inlet temperature, as shown in Figure 51(A). There is a correlation between the compressor inlet temperature and the compressor outlet temperature, as shown in Figure 51 (B). When the compressor outlet temperature rises, the compressor efficiency is reduced, as shown in Figure 52(A). The reduction in compressor efficiency correlates with the amount of deposit buildup on a wall surface in the diffuser portion 18b6 of the compressor (the thickness of a deposit built up), as shown in Figure 52(B). When the temperature of gas flowing in the compressor is increased, an oil mist is heated and the facility with which a deposit builds up on a diffuser portion wall surface is thereby increased.
In the present embodiment, an "LPL mixing ratio upper limit value at which the compressor efficiency reduction rate has a predetermined value (limit value)" is calculated in advance based on the above-described correlations and is stored in the ECU 286. The ECU 286 obtains the value of the LPL-ERG mixing ratio and compares this value with the stored LPL mixing ratio upper limit value. The LPL-ERG mixing ratio may be calculated from the amount of intake air and the opening of the LPL-EGR valve 48 for example. If the LPL-EGR mixing ratio is as high as or higher than the LPL mixing ratio upper limit value, the ECU 286 determines that the LPL mixing ratio meets the deposit buildup operation condition.

(3) Determination Based on Relationship between Deposit Buildup and Compressor Outlet Temperature

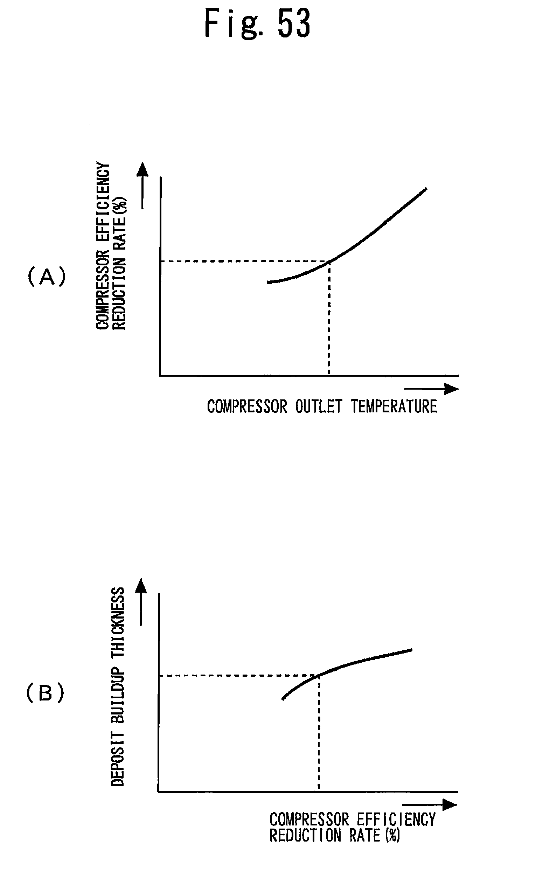

Figure 53 is a diagram for explaining the relationship between a deposit buildup and the compressor outlet temperature.
There is a correlation between the compressor outlet temperature and the compressor efficiency reduction rate, as shown in Figure 53(A). There is a correlation between the compressor efficiency reduction rate and the amount of deposit buildup (the thickness of a deposit built up) on a wall surface in the diffuser portion 18b6 of the compressor, as shown in Figure 53(B). When the compressor outlet temperature rises, an oil mist is heated and the facility with which a deposit builds up on a diffuser portion wall surface is thereby increased.
In the present embodiment, based on the above-described correlations, determination as to whether or not the deposit buildup operation condition is met is made by determining whether or not the outlet temperature of the compressor 18b sensed by the second intake air temperature sensor 36 is equal to or higher than a predetermined value. That is, a "compressor outlet temperature upper limit value at which the compressor efficiency reduction rate has a predetermined value (limit value)" is calculated in advance and is stored in the ECU 286. The ECU 286 obtains the value of the outlet temperature of the compressor 18b and compares this with the stored compressor outlet temperature upper limit value. The outlet temperature of the compressor 18b may be sensed by the second intake air temperature sensor 36. If the outlet temperature of the compressor 18b is as high as or higher than the compressor outlet temperature upper limit value, the ECU 286 determines that the compressor outlet temperature meets the deposit buildup operation condition.

In the present embodiment, determinations (1) to (3) described above are made. If it is determined as a result of each determination that the deposit buildup operation condition is met, the ECU 286 opens the oil mist injection valve 274 to perform oil mist injection. In this way, determination as to whether the deposit buildup operation condition is met is made with accuracy and oil mist injection is speedily achieved, enabling reliable inhibition of a deposit buildup on a wall surface in the diffuser portion 18b6 of the compressor.

In the present embodiment, control described below is also performed according to the amount of remaining oil in the oil mist recovery tank 272.

That is, when it is determined that the deposit buildup operation condition is met, the ECU 286 compares the amount of remaining oil obtained from the oil level meter 284 with a predetermined lower limit value. If the amount of remaining oil obtained from the oil level meter 284 is equal to or larger than the lower limit value, the ECU 286 opens the normally closed oil mist injection valve 274 and closes the normally open oil return valve 282.

On the other hand, when it is determined that the deposit buildup operation condition is not met, the ECU 286 compares the amount of remaining oil obtained from the oil level meter 284 with the lower limit value. If the amount of remaining oil obtained from the oil level meter 284 is smaller than the lower limit value, the ECU 286 closes the normally open oil return valve 282. Thus, oil recovered by the oil separator 54 is stored to maintain the amount of remaining oil in the oil mist recovery tank 272 at a value larger than the lower limit value, securing the amount of oil. Also, a tank smaller in size and having a smaller capacity can be used as the oil mist recovery tank 272.

[Concrete Processing in Embodiment 10]

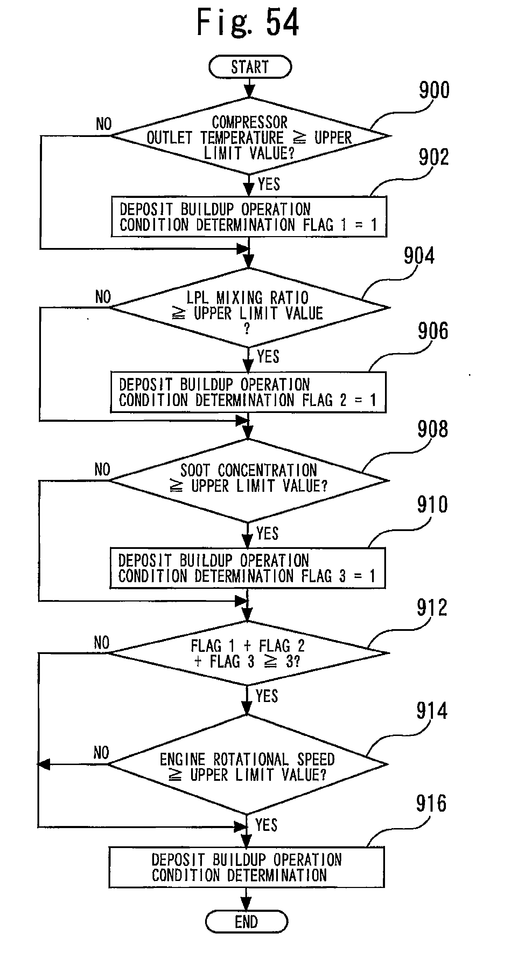

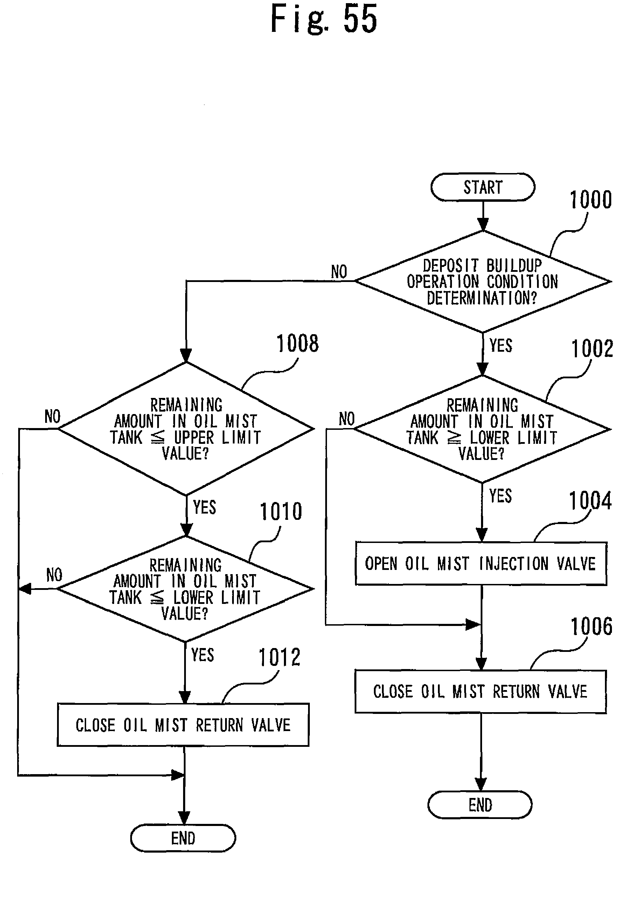

Figures 54 and 55 are flowcharts of routines executed by the ECU 286 on the supercharged internal combustion engine 270 according to Embodiment 10 of the present invention. Figure 54 shows a routine for determination of the deposit buildup operation condition. Figure 55 shows a routine for control of components including the oil mist injection valve.

(Deposit Buildup Operation Condition Determination Routine)

In the routine shown in Figure 54, the ECU 286 first executes a routine for determining whether or not the compressor output temperature is equal to or higher than the upper limit value (step 900). The ECU 286 obtains the outlet temperature of the compressor 18b and compares the obtained outlet temperature with the compressor outlet temperature upper limit value stored. If the outlet temperature of the compressor 18b is as high as or higher than the compressor outlet temperature upper limit value, the condition in this step is met and the ECU 286 determines that the compressor outlet temperature meets the deposit buildup operation condition.

If it is determined that the condition in step 900 is met, the process advances to step 902 and the ECU 286 turns on a deposit buildup operation condition determination flag 1 (substitutes 1 for a flag value). If it is determined that the condition is not met, the process skips to the step subsequent to step 902.

Next, the ECU 286 executes a routine for determining whether or not the LPL mixing ratio is equal to or higher than the upper limit value (step 904). The ECU 286 obtains the value of the LPL-EGR mixing ratio, and compares this with the LPL mixing ratio upper limit value stored. When the LPL-EGR mixing ratio is as high as or higher than the LPL mixing ratio upper limit value, the condition in this step 904 is met, the ECU 286 determines that the LPL mixing ratio meets the deposit buildup operation condition. This routine is shown in Figure 54 as a routine including processing in this step 904 on the internal combustion engine 270 having LPL-EGR. However, this routine stands even if the LPL-EGR system is not provided. In a case where the LPL-EGR system is not provided, therefore, processing in step 904 relating to the LPL mixing ratio may be removed.

If it is determined that the condition in step 904 is met, the process advances to step 906 and the ECU 286 turns on a deposit buildup operation condition determination flag 2 (substitutes 1 for a flag value). If it is determined that the condition in is not met, the process skips to the step subsequent to step 906.

Next, the ECU 286 executes a routine for determining whether or not the soot concentration is equal to or higher than the upper limit value (step 908). The ECU 286 calculates the soot concentration by the above-described equation (1) and compares this stored value with the upper limit value. If this soot concentration is equal to or higher than the predetermined upper limit value, the condition in this step is met and the ECU 286 determines that the soot concentration meets the deposit buildup operation condition.

If it is determined that the condition in step 908 is met, the process advances to step 910 and the ECU 286 turns on a deposit buildup operation condition determination flag 3 (substitutes 1 for a flag value). If it is determined that the condition in is not met, the process skips to the step subsequent to step 910.

Next, the ECU 286 determines whether or not the sum of the values of the deposit buildup operation condition determination flags 1, 2, and 3 is not smaller than 3 (step 912). If the total value 3 is reached, all the flags in steps 902, 906, and 910 are on. In other cases, the result of at least one of the determinations is that the deposit buildup operation condition is not met, and this routine therefore ends.

If it is determined that the condition in step 912 is met, processing for determining whether or not the engine speed is equal to or higher than a predetermined upper limit value is executed by the ECU 286 (step 914). If the engine speed is equal to or higher than the predetermined upper limit value, a final determination flag is turned on to indicate that the deposit buildup operation condition is met (step 916), the routine shown in Figure 54 ends and the process proceeds to processing shown in Figure 55. If the engine speed is not equal to or higher than the predetermined upper limit value, the present routine ends.

(Routine for Control of Components including Oil Mist Injection Valve)

The ECU 286 executes the routine shown in Figure 55 in parallel with the routine shown in Figure 54. In the routine shown in Figure 55, the ECU 286 first executes processing for determining whether or not the result of deposit buildup operation condition determination is Yes (step 1000). In this step, the flag in step 916 in the routine shown in Figure 54 is referred to. If the flag is on, the process advances to step 1002.

In step 1002, the ECU 286 executes processing for determining whether or not the remaining amount in the oil mist tank is equal to or larger than the lower limit valve. The ECU 286 compares the amount of remaining oil obtained from the oil level meter 284 with the predetermined lower limit value. If the amount of remaining oil obtained from the oil level meter 284 is equal to or larger than the lower limit value, the normally closed oil mist injection valve 274 is opened (step 1004) and the normally open oil return valve 282 is closed (step 1006). On the other hand, if the amount of remaining oil obtained from the oil level meter 284 is smaller than the lower limit value, no such processing as processing for opening the oil mist injection valve 274 is performed, the oil mist return valve 282 is closed and processing for accumulating oil in the oil mist tank is performed.

If in step 1000 the flag in step 916 in the routine shown in Figure 54 referred to is off, the process moves to step 1008. This is a case where it is determined that the deposit buildup operation condition is not met. The ECU 286 compares the amount of remaining oil obtained from the oil level meter 284 with the upper limit value. If the amount of remaining oil obtained from the oil level meter 284 is not equal to or smaller than the upper limit value, the present routine ends and the normally open oil return valve 282 is maintained in the open state.

If the amount of remaining oil obtained from the oil level meter 284 is equal to or smaller than the upper limit value, the ECU 286 executes processing for determining whether or not the amount of remaining oil is smaller than the lower limit value (step 1010). If the amount of remaining oil obtained from the oil level meter 284 is not smaller than the lower limit value, the present routine ends and the normally open oil return valve 282 is maintained in the open state. In this state, the amount of remaining oil is within a suitable range, such that the amount of remaining oil is equal or smaller than the upper limit value and equal to or larger than the lower limit value.

If the amount of remaining oil is smaller than the lower limit value, the normally open oil return valve 282 is closed. Oil recovered by the oil separator 54 is thereby stored to increase the amount of remaining oil in the oil mist recovery tank 272 to a value larger than the lower limit value, thus securing the amount of oil.

By the above-described processing, determination as to whether the deposit buildup operation condition is met can be made with accuracy. When it is determined in the above-described way that the deposit buildup operation condition is met, the amount of oil mist supplied to the compressor 18b can be increased by using the oil mist injection valve 274, compared with when the deposit buildup operation condition is not met. Oil mist injection can be speedily achieved to inhibit a deposit buildup on a wall surface in the diffuser portion 18b6 of the compressor with reliability. Also, the amount of remaining oil in the oil mist recovery tank 272 can be maintained at a suitable level to ensure use of the oil mist injection valve 274.

Modified Examples of Embodiment 10

In the above description of Embodiment 10, no mention has been made of change of the blow-by gas passage by means of control of the switch valve 58. However, control described below may be added. That is, when it is determined that the deposit buildup operation condition is met, the switch valve 58 may be controlled so that the above-described non-oil-capturing flow passage form for providing the flow of blow-by gas without passage through the oil separator 54 is obtained. When it is not determined that the deposit buildup operation condition is met, the switch valve 58 may be controlled so that the above-described oil-capturing flow passage form for flowing blow-by gas through the oil separator 54 is obtained. Further, the blow-by gas flow passage form may be changed according to whether or not the amount of remaining oil in the oil mist recovery tank 272 is equal to or larger than the upper limit value. More specifically, when the amount of remaining oil in the oil mist recovery tank 272 is equal to or larger than the upper limit value, that is, there is no need to recover oil by the oil separator 54, the non-oil-capturing flow passage form may be selected. Such control may be combined with the control in Embodiment 10 as desired. Reduction of oil consumption and prevention of a deposit buildup in the compressor can thereby be simultaneously achieved in a favorable way.

While the internal combustion engine 270 in Embodiment 10 described above is provided with the bypass passage 56 and the switch valve 58, application of the present invention is not limited to such an arrangement. The present invention may be applied to an arrangement including no such bypass passage and switch valve.

Modified Examples of Embodiments 1 to 10

In the above descriptions of Embodiments 1 to 10, a method of using a compressor efficiency and a method of using the degree of degradation of oil (e.g., the soot concentration in oil) and deposit buildup mode determination (determination of the compressor temperature) have been described by way of example as a method of determining whether the deposit buildup operation condition is met. Determination as to the deposit buildup operation condition can be made in a favorable way by using the various parameters used in Embodiments 1 to 10 described above. However, the parameters for determination as to the deposit buildup operation condition other than those described above include the compressor rotational speed, the engine load, the supercharging pressure and the difference between the pressure in the crank chamber and the intake air pressure. Also, the methods of determination as to the deposit buildup operation condition described above in the descriptions of Embodiments 1 to 10 can be used by being replaced with each other in Embodiments 1 to 10.

In the above descriptions of Embodiments 1 to 10, a turbocharger using exhaust gas energy as drive force has been described by way of example as a supercharger having the centrifugal compressor 18b. However, the supercharger in the present invention is not limited to a turbocharger having a centrifugal compressor. That is, the compressor provided in the supercharger in the present invention is not necessarily a centrifugal compressor, and the compressor drive system may be one using power from the crankshaft of the internal combustion engine or one using an electric motor.

In the above descriptions of Embodiments 1 to 10, the internal combustion engine 10 and other engines, which are compression-ignition diesel engines, have been described by way of example. However, internal combustion engines to which the present invention can be applied are not limited to those described above. For example, the present invention can be applied to spark-ignition internal combustion engines (such as, gasoline engine).

In the above descriptions of Embodiments 1 to 10, the internal combustion engine 10 and other engines provided with an LPL-EGR system have been described by way of example. However, the present invention can also be implemented by being applied to an internal combustion engine provided with no LPL-EGR system.

Description of symbols

| 10, 120, 170, 190, 200, 270 | internal combustion engine |
| 12, 202 | injector |
| 16, 206 | exhaust passage |
| 18, 208 | turbocharger |
| 18a, 208a | turbine of turbocharger |
| 18b, 208b | centrifugal compressor of turbocharger |
| 18b1, 240 | housing of centrifugal compressor |
| 18b2 | compressor inlet portion of centrifugal compressor |
| 18b3, 242 | compressor impeller |
| 18b4 | impeller portion of centrifugal compressor |
| 18b5 | scroll portion of centrifugal compressor |
| 18b6, 246 | diffuser portion of centrifugal compressor |
| 18c | connecting shaft of turbocharger |
| 24, 204 | air intake passage |
| 26, 212 | air cleaner |
| 30 | diesel throttle |
| 32 | air flow meter |

| | |
|---|---|
| 34 | first intake air temperature sensor |
| 36 | second intake air temperature sensor |
| 38 | intake air pressure sensor |
| 40 | high-pressure exhaust gas recirculation passage (HPL) |
| 42 | HPL-EGR valve |
| 44 | low-pressure exhaust gas recirculation passage (LPL) |
| 46 | EGR cooler |
| 48 | LPL-EGR valve |
| 52, 192 | communication passage |
| 192a | upstream-side connection portion of communication passage |
| 192b | downstream-side connection portion of communication passage |
| 54 | oil separator |
| 56 | bypass passage |
| 58 | switch valve |
| 60, 194, 230, 286 | ECU (Electronic Control Unit) |
| 62, 232 | crank angle sensor |
| 64 | water temperature sensor |
| 66 | trip meter |
| 67 | brake sensor |
| 68 | piston |
| 70 | connecting rod |
| 72 | crankshaft |
| 74 | cylinder block |
| 76 | crankcase |
| 78 | oil pan |
| 80 | crank chamber |
| 82 | crank chamber internal pressure sensor |
| 84 | cylinder head |
| 86 | combustion chamber |
| 88 | head cover |
| 90 | internal space |
| 92, 94 | internal communication passage |
| 96 | negative-pressure pump |
| 96a | air intake port of negative-pressure pump |
| 96b | discharge port of negative-pressure pump |
| 96c | cylinder of negative-pressure pump |
| 96d | rotor of negative-pressure pump |
| 96d1 | rotor center shaft of negative-pressure pump |
| 96d2 | rotor groove of negative-pressure pump |
| 96e | oiling port of negative-pressure pump |
| 96f | vane of negative-pressure pump |
| 96g, 96i | spring of negative-pressure pump |
| 96h | discharge valve of negative-pressure pump |
| 98, 160, 164, 166, 168 | gas introduction passage |
| 100 | atmospheric relief valve |
| 102 | brake negative-pressure passage |
| 104 | brake booster |
| 106, 110, 126, 176, 188 | solenoid valve |
| 108 | negative-pressure passage |
| 112 | camshaft |
| 114 | baffle plate |
| 116 | oil separator chamber |
| 116a | inlet portion of oil separator chamber |
| 116b | oil recovery hole of oil separator chamber |
| 122 | negative-pressure-using device |
| 124 | negative-pressure passage |
| 128 | negative-pressure tank |
| 130, 152, 178 | oil strainer |

| | |
|---|---|
| 132, 154, 180 | oil pump |
| 134, 156, 182 | sub oil hole |
| 136, 158, 184 | oil filter |
| 138 | main oil hole |
| 140 | crank journal |
| 142 | air intake camshaft journal |
| 144 | exhaust camshaft journal |
| 146 | chain tensioner |
| 148 | crank pin |
| 150 | negative-pressure pump oil passage |
| 162 | gas introduction valve |
| 172 | oil jet |
| 174 | oil jet oil passage |
| 186 | oil return passage |
| 208c | bearing unit of turbocharger |
| 216 | throttle valve |
| 218 | intake air pressure sensor |
| 220 | EGR passage |
| 224 | EGR valve |
| 234 | accelerator position sensor |
| 244 | turbine shaft of turbocharger |
| 248 | center housing of turbocharger |
| 250 | bearing portion of compressor |
| 252 | oil introduction passage |
| 254 | bearing chamber of compressor |
| 256 | oil discharge passage |
| 258 | oil communication passage |
| 260 | check valve |
| 260a | valve element of check valve |
| 260b | spring of check valve |
| 262 | seat portion of compressor housing |
| 272 | oil mist recovery tank |
| 274 | oil mist injection valve |
| 274a | valve element of oil mist injection valve |
| 274b | nozzle body of oil mist injection valve |
| 274c | nozzle portion of oil mist injection valve |
| 276 | oil passage |
| 278 | oil mist injection passage |
| 280 | oil return passage |
| 282 | oil return valve |
| 284 | oil level meter |

**Claims**

1. A supercharged internal combustion engine comprising:

   a supercharger having a compressor in an air intake passage;
   a communication passage connected between an upstream-side portion of the air intake passage on an upstream side of an impeller of the compressor and a crank chamber of the internal combustion engine or an engine internal space communicating with the crank chamber; and
   an oil supply apparatus that supplies oil to an internal passage in the compressor through which intake air flows, wherein when a deposit buildup operation condition under which there is a concern of a buildup of a deposit in the compressor is met, the oil supply apparatus increases an amount of oil supplied to the internal passage compared with when the deposit buildup operation condition is not met.

2. The supercharged internal combustion engine according to claim 1,
   wherein the deposit buildup operation condition is met when a temperature of the compressor reaches a predetermined value.

3. The supercharged internal combustion engine according to claim 1,
wherein the deposit buildup operation condition is met when a compressor efficiency of the compressor is reduced to a value equal to or lower than a predetermined value.

4. The supercharged internal combustion engine according to claim 1,
wherein the deposit buildup operation condition is met when a degree of degradation of the oil is equal to or higher than a predetermined degree and when a temperature of the compressor is equal to or higher than a predetermined value.

5. The supercharged internal combustion engine according to claim 4,
wherein the compressor is a centrifugal compressor,
wherein the internal combustion engine further comprises compressor local temperature obtaining means for obtaining a temperature of a high-temperature portion whose temperature is locally increased to a high temperature in an internal portion of the centrifugal compressor, and
wherein the deposit buildup operation condition is met when the degree of degradation of the oil is equal to or higher than the predetermined degree and when the temperature of the high-temperature portion is equal to or higher than the predetermined value.

6. The supercharged internal combustion engine according to claim 1,
wherein the deposit buildup operation condition is met when a temperature of the compressor is equal to or higher than a predetermined value and when soot concentration in the oil is equal to or higher than a predetermined value.

7. The supercharged internal combustion engine according to any one of claims 1 to 6,
wherein the oil supply apparatus increases the amount of oil supplied to the internal passage by increasing the amount of oil supplied to the upstream-side portion of the air intake passage.

8. The supercharged internal combustion engine according to claim 7,
wherein the oil supply apparatus increases the amount of oil supplied to the upstream-side portion of the air intake passage by increasing an amount of blow-by gas introduced to the upstream-side portion of the air intake passage through the communication passage.

9. The supercharged internal combustion engine according to claim 7,
wherein the oil supply apparatus includes an oil mist generation device that generates an oil mist, and
wherein the oil supply apparatus supplies an oil mist generated by the oil mist generation device to the crank chamber or the engine internal space communicating with the crank chamber.

10. The supercharged internal combustion engine according to claim 9,
wherein the oil mist generation device includes:

a negative-pressure pump that is supplied with oil and that is capable of discharging the oil together with its discharge gas;
a gas introduction passage that communicates with an air intake port of the negative-pressure pump; and
opening and closing means for opening and closing the gas introduction passage,
wherein a discharge port of the negative-pressure pump communicates with the crank chamber or the engine internal space communicating with the crank chamber, and
wherein the opening and closing means is arranged to open the gas introduction passage when the deposit buildup operation condition is met.

11. The supercharged internal combustion engine according to claim 10,
wherein the negative-pressure pump is rotationally driven with a camshaft provided in the internal combustion engine, and
wherein oil circulating in the internal combustion engine is supplied from the camshaft to the negative-pressure pump.

12. The supercharged internal combustion engine according to claim 10 or 11,
wherein the intake port of the negative-pressure pump is connected to a negative-pressure-using device that uses a negative pressure produced by the negative-pressure pump, and

wherein when there is a deficiency of the negative pressure to be used by the negative-pressure-using device, the oil supply apparatus prohibits opening of the gas introduction passage by the opening and closing means.

13. The supercharged internal combustion engine according to any one of claims 10 to 12, further comprising a brake negative-pressure passage that provides communication between the air intake port of the negative-pressure pump and a brake booster provided in a brake system of a vehicle on which the internal combustion engine is mounted, wherein the opening and closing means is arranged to shut the gas introduction passage in a situation where a request for use by the brake booster of the negative pressure produced by the negative-pressure pump is issued while the gas introduction passage is open, and where the negative pressure produced by the negative-pressure pump is lower than a negative pressure according to the request.

14. The supercharged internal combustion engine according to claim 12 or 13, further comprising a negative-pressure tank that stores negative pressure produced by the negative-pressure pump.

15. The supercharged internal combustion engine according to any one of claims 9 to 14,
wherein the gas introduction passage is a passage for introducing air into the negative-pressure pump,
wherein the internal combustion engine further comprises:

intake air amount measurement means for measuring an amount of intake air flowing through the air intake passage on an upstream side of the portion to which the communication passage is connected; and
intake air amount correction means for correcting an amount of intake air measured by the intake air amount measurement means based on a pressure in the crank chamber when the negative-pressure pump is operating in a situation where the gas introduction passage is open.

16. The supercharged internal combustion engine according to claim 9,
wherein the oil mist generation device includes an oil jet that jets oil into the crank chamber or the engine internal space communicating with the crank chamber.

17. The supercharged internal combustion engine according to any one of claims 8 to 16, further comprising a collision-type oil separator disposed in the communication passage, the crank chamber or the engine internal space communicating with the crank chamber.

18. The supercharged internal combustion engine according to claim 7 or 8,
wherein the oil supply apparatus includes:

oil capture means for capturing and collecting oil contained in blow-by gas by separating the oil from the blow-by gas, the oil capture means being provided in an intermediate portion of the communication passage;
a bypass passage that branches off from the communication passage at an upstream-side connection portion on an upstream side of the oil capture means in a blow-by gas flow direction and merges into the communication passage at a downstream-side connection portion on a downstream side of the oil capture means in the blow-by gas flow direction;
flow passage change means capable of selecting a blow-by gas flow passage form between an oil-capturing flow passage form for causing blow-by gas to pass through the oil capture means and a non-oil-capturing flow passage form for causing blow-by gas to flow through the bypass passage without passing through the oil capture means; and
flow passage control means for controlling the flow passage change means so that the non-oil-capturing flow passage form is selected when the deposit buildup operation condition is met.

19. The supercharged internal combustion engine according to claim 18,
wherein the flow passage control means controls the flow passage change means so that the non-oil-capturing flow passage form is intermittently obtained when the deposit buildup operation condition is met.

20. The supercharged internal combustion engine according to claim 18 or 19,
wherein the flow passage change means is a switch valve provided in the downstream-side connection portion or an intermediate portion of the bypass passage, the switch valve functioning to change the blow-by gas flow passage form.

21. The supercharged internal combustion engine according to any one of claims 1 to 6,

wherein the compressor includes:

a turbine shaft, the impeller of the compressor being provided at one end of the turbine shaft;
a compressor housing in which the impeller is housed and a diffuser portion is formed downstream of the impeller; and
a center housing connected to the compressor housing,
wherein the oil supply apparatus includes:

an oil passage formed in the center housing, oil being supplied to a bearing portion for the turbine shaft through the oil passage;
an oil communication passage that provides communication between the oil passage and the diffuser portion;
opening and closing means capable of opening and closing the oil communication passage; and
diffuser portion oil supply means for supplying oil from the oil passage to the diffuser portion by causing the opening and closing means to open the oil communication passage when the deposit buildup operation condition is met.

22. The supercharged internal combustion engine according to claim 21,
wherein the opening and closing means is a check valve capable of opening when a pressure in the oil passage is higher than a pressure in the diffuser portion.

23. The supercharged internal combustion engine according to claim 22, further comprising a throttle valve provided in the air intake passage on a downstream side of the diffuser portion,
wherein the diffuser portion oil supply means includes throttle abrupt opening means for abruptly opening the throttle valve when the deposit buildup operation condition is met while the internal combustion engine is idling.

24. The supercharged internal combustion engine according to claim 22 or 23, further comprising a variable nozzle that reduces exhaust pressure exerted on a turbine wheel provided at another end of the turbine shaft by increasing an opening of the nozzle,
wherein the diffuser portion oil supply means includes variable nozzle opening means for increasing the opening of the variable nozzle when the deposit buildup operation condition is met while the internal combustion engine is idling.

25. The supercharged internal combustion engine according to any one of claims 22 to 24, further comprising:

an EGR passage connected between an exhaust passage of the internal combustion engine and the air intake passage, part of exhaust gas being recirculated to the air intake passage through the EGR passage; and
an EGR valve capable of opening and closing the EGR passage,
wherein the deposit cleaning means includes EGR valve closing means for closing the EGR valve when the deposit buildup operation condition is met while the internal combustion engine is idling.

26. The supercharged internal combustion engine according to claim 7,
wherein the oil supply apparatus includes:

oil capture means for capturing and collecting oil contained in blow-by gas by separating the oil from the blow-by gas, the oil capture means being provided in an intermediate portion of the communication passage;
an oil tank which stores oil captured and collected by the oil capture means; and
an oil mist injection valve provided at the upstream-side portion of the air intake passage and connected to the oil tank, an oil mist having such a particle size as to inhibit a deposit buildup in the compressor being supplied to the upstream-side portion through the oil mist injection valve.

27. The supercharged internal combustion engine according to claim 26, further comprising an LPL-EGR device,
wherein the oil supply apparatus includes:

deposit buildup determination means for determining whether or not the deposit buildup operation condition is met based on soot concentration in gas flowing through the internal passage in the compressor, the value of an LPL mixing ratio in the LPL-EGR device and an outlet temperature of the compressor; and
control means for opening the oil mist injection valve when the deposit buildup determination means determines that the deposit buildup operation condition is met.

**28.** The supercharged internal combustion engine according to claim 26 or 27,
wherein the oil mist injection valve supplies an oil mist of a particle size equal to or larger than a certain value such that the oil mist reaches an outlet of a diffuser portion of the compressor before adhering to the diffuser portion even if the oil mist has landed on a surface of the diffuser portion.

**29.** The supercharged internal combustion engine according to any of claims 26 to 28, further comprising:

a bypass passage that branches off from the communication passage at an upstream-side connection portion on an upstream side of the oil capture means in a blow-by gas flow direction and merges into the communication passage at a downstream-side connection portion on a downstream side of the oil capture means in the blow-by gas flow direction;

flow passage change means capable of selecting a blow-by gas flow passage form between an oil-capturing flow passage form for causing blow-by gas to pass through the oil capture means and a non-oil-capturing flow passage form for causing blow-by gas to flow through the bypass passage without passing through the oil capture means; and

flow passage control means for controlling the flow passage change means to change the blow-by gas flow passage form between the oil-capturing flow passage form and the non-oil-capturing flow passage form, according to an operating condition of the internal combustion engine and whether or not the amount of oil in the oil tank is equal to or larger than an upper limit value,

wherein the oil capture means is a centrifugal separation type of oil separator, and

wherein the oil mist injection valve supplies an oil mist of a particle size larger than a maximum value of the particle size of oil mists passing through the centrifugal separation type of oil separator.

# Fig. 1

BLOW-BY GAS
(WITH OIL MIST)

| 62 | CRANK ANGLE |
| 64 | ENGINE WATER TEMPERATURE |
| 66 | TRIP METER |
| 67 | BRAKE |
| 82 | CRANK CHAMBER INTERNAL PRESSURE |
| 100 | ATMOSPHERIC RELIEF VALVE |
| 106 | SOLENOID VALVE |
| 110 | SOLENOID VALVE |

ECU

# Fig. 2

FRESH AIR

BLOW-BY GAS

BLOW-BY GAS THAT
PASSED THROUGH
CYLINDERS

# Fig. 3

# Fig. 4

## (A)

INTAKE AIR (FRESH AIR)

DISCHARGE GAS 96h
(FRESH AIR
+ OIL MIST)

96i

96a

96

96b

96d2

FLOW OF LUBRICATING OIL

96d2

96f

96f

96g 96c

96e

## (B)

96d

96d1

96g

EP 2 787 195 A1

# Fig. 5

(A)

OIL MIST GENERATED
BY CAM ACTION

114

96a

98    100

CLOSED

96

オイル

112

SUPPLY OF OIL
FROM CAMSHAFT

90

OIL

HAVING A LARGE MASS, FALLING TO OIL PAN

(B)

OIL MIST GENERATED
BY CAM ACTION

114

96a

98    100

← *1

OPEN

96

OIL

112

SUPPLY OF OIL
FROM CAMSHAFT

90

96b

INTO ENGINE

*2

*1: INTRODUCTION OF FRESH AIR
*2: OIL MIST + FRESH AIR

# Fig. 6

52

OIL    88

116

OIL

TO OIL PAN

BLOW-BY GAS AND OIL

116b   114    90    116a

# Fig. 7

18b

18b5

18b1

18b6

24

DEPOSIT BUILDUP PORTION

18b3

· INTAKE GAS
· BLOW-BY GAS
　(INCLUDING OIL MIST)

18c

18b4

18b2

DEPOSIT BUILDUP PORTION

18b5　18b6

EP 2 787 195 A1

# Fig. 8

*1 :EVAPORATION
*2 :TEMPERATURE RISE
    (HIGH-TEMPERATURE GAS FLOW)
*3 :TEMPERATURE RISE

18b  18b5  18b1

18b6

*1

REMAINDER FLOWS DOWNSTREAM
BEFORE ADHERING

18b2

*2

REMAINDER
FLOWS
DOWNSTREAM
WITHOUT
LANDING

*3

18b4

NOTE THIS PORTION

18b3

*1

OIL MIST
(UP TO ABOUT 6 μm)

*1    DEPOSIT

SOOT
(ABOUT 0.1 μm)

ADHESIVE
OIL MIST

| OIL MIST IN BLOW-BY GAS FLOWS INTO COMPRESSOR | OIL MIST IS INCREASED IN VISCOSITY | PART OF OIL MIST LANDS | OIL MIST ADHERES |
|---|---|---|---|

50

# Fig. 9

```
                    START
                      │
              ┌───────▼────────┐   100
              ╱  DEFICIENCY     ╲    YES
             ╱  OF NEGATIVE      ╲──────────────────────┐
              ╲    PRESSURE      ╱                       │
               ╲      ?        ╱                         │
                └──────┬──────┘                          │
                       │ NO                              │
              ┌────────▼─────────┐  104                  │
             ╱    COMPRESSOR       ╲   NO                │
            ╱ EFFICIENCY EQUAL TO OR╲──────────────┐    │
             ╲ LOWER THAN PREDETERMINED╱            │    │
              ╲       VALUE?        ╱               │    │
                └───────┬─────────┘                │    │
                        │ YES         106          │    │
              ┌─────────▼──────────────────┐       │    │
              │  DEPOSIT SWEEP MODE         │       │    │
              │ (ATMOSPHERIC RELIEF VALVE OPEN)│    │    │
              └─────────┬──────────────────┘       │    │
                        │            108           │    │
              ┌─────────▼─────────┐                │    │
             ╱     ANY BRAKE       ╲   YES          │    │
            ╱ REQUEST AND PUMP PRODUCED╲────────────┘    │
             ╲   PRESSURE LOW?    ╱                       │
              └────────┬────────┘                        │
                       │ NO                              ▼
                       │              ┌──────────────────────────────┐  102
                       │              │  NORMAL OPERATION MODE         │
                       │              │ (ATMOSPHERIC RELIEF VALVE      │
                       │              │  COMPLETELY CLOSED)            │
                       │              └──────────────┬───────────────┘
                       ◄─────────────────────────────┘
                    RETURN
```

# Fig. 10

# Fig. 11

OIL HAVING FLUIDITY

OIL LOSING FLUIDITY AND ABOUT TO BE DEPOSIT

A

B

WALL SURFACE OF DIFFUSER PORTION

A B

A AND B CONTACT EACH OTHER

WALL SURFACE OF DIFFUSER PORTION

A TAKES IN B AND INCREASES IN VOLUME

WALL SURFACE OF DIFFUSER PORTION

TO DIFFUSER PORTION OUTLET WITHOUT BECOMING DEPOSIT

WALL SURFACE OF DIFFUSER PORTION

INLET

OUTLET

# Fig. 12

AMOUNT OF OIL ⟶ LARGE

WHEN AIR IS INTRODUCED FROM VACUUM PUMP

NORMAL OPERATION

0

OIL PARTICLE SIZE ⟶ LARGE

# Fig. 13

WHEN AIR IS INTRODUCED
FROM VACUUM PUMP

COMPRESSOR EFFICIENCY DECREMENT

0

WORSENING

NORMAL
OPERATION

ENGINE OPERATING TIME ⟶

# Fig. 14

DEPOSIT GRADUALLY BUILDS
UP IN COMPRESSOR AND
COMPRESSOR EFFICIENCY
IS REDUCED

ATMOSPHERIC RELIEF
VALVE OPENED

HIGH

ATMOSPHERIC RELIEF
VALVE CLOSED

ATMOSPHERIC RELIEF
VALVE CLOSED

COMPRESSOR EFFICIENCY

LOW

TIME

RECOVERED BY DEPOSIT
CLEANING (REMOVAL)

# Fig. 15

```
                    ┌─────────┐
                    │  START  │
                    └────┬────┘
                         │
                         ▼            200
              ◇ OIL DEGRADED? ◇──────────── NO ─────────────────┐
                         │                                        │
                         │ YES              100                   │
              ◇ DEFICIENCY OF ◇──────────── YES ──────────┐     │
              ◇ NEGATIVE PRESSURE? ◇                        │     │
                         │                                  │     │
                         │ NO               204             │     │
              ◇ DEPOSIT BUILDUP MODE? ◇───── NO ────────┐  │     │
                         │                               │  │     │
                         │ YES              206          │  │     │
         ┌──────────────────────────────────────┐       │  ▼     ▼
         │ DEPOSIT GROWTH INHIBITION MODE        │       │  ┌──────────────────────┐  202
         │ (ATMOSPHERIC RELIEF VALVE OPEN)       │       │  │ NORMAL OPERATION MODE │
         └──────────────┬───────────────────────┘       │  │ (ATMOSPHERIC RELIEF   │
                        │                    108         │  │  VALVE COMPLETELY     │
              ◇ ANY BRAKE ◇                              │  │  CLOSED)              │
              ◇ REQUEST AND PUMP ◇──── YES ──────────────┘  └───────────┬──────────┘
              ◇ PRODUCED PRESSURE ◇                                      │
              ◇ LOW? ◇                                                   │
                        │ NO                                             │
                        ▼◄──────────────────────────────────────────────┘
                    ┌─────────┐
                    │ RETURN  │
                    └─────────┘
```

# Fig. 16

# Fig. 17

```
          ( START )
              │
              ▼          200
        ◇─────────────◇         NO
        │ OIL DEGRADED? ├──────────────────────────────┐
        ◇─────────────◇                                 │
              │ YES                                      │
              ▼          100                             │
        ◇──────────────◇        YES                      │
        │ DEFICIENCY OF  ├─────────────────────────────►│
        │ NEGATIVE PRESSURE? │                           │
        ◇──────────────◇                                 │
              │ NO         204                            │
              ▼                                           │
        ◇──────────────◇        NO                        │
        │ DEPOSIT BUILDUP MODE? ├──────────────────────►│
        ◇──────────────◇                                 │
              │ YES        300                            │
              ▼                                    202     │
   ┌──────────────────────────┐        ┌────────────────────────────┐
   │ DEPOSIT GROWTH INHIBITION │        │   NORMAL OPERATION MODE     │
   │ MODE (ATMOSPHERIC RELIEF  │        │  (ATMOSPHERIC RELIEF        │
   │ VALVE INTERMITTENTLY OPENED) │     │  VALVE COMPLETELY CLOSED)   │
   └──────────────────────────┘        └────────────────────────────┘
              │            108
              ▼
        ◇──────────────◇
        │  ANY BRAKE     │       YES
        │ REQUEST AND PUMP ├──────────┐
        │ PRODUCED PRESSURE │          │
        │     LOW?        │            │
        ◇──────────────◇              │
              │ NO                     │
              ▼                        │
          ( RETURN )
```

# Fig. 18

(A) ATMOSPHERIC RELIEF VALVE

DEPOSIT BUILDUP OPERATION CONDITION MET | DEPOSIT BUILDUP OPERATION CONDITION NOT MET

OPEN

CLOSED

OPERATING TIME

(B) COMPRESSOR EFFICIENCY DECREMENT

HIGH

LOW

OPERATING TIME

# Fig. 19

# Fig. 20

# Fig. 21

DEPOSIT BUILDUP
OPERATION
CONDITION MET

(A) ATMOSPHERIC RELIEF VALVE

OPEN CLOSED :OPEN

(B) NEGATIVE PRESSURE REQUEST

YES

NO

(C) VACUUM TANK REMAINING NEGATIVE PRESSURE

HIGH

LOW

TIME

# Fig. 22

START

OBTAIN INTAKE AIR AMOUNT MEASURED
WITH AIR FLOW METER — 300

ATMOSPHERIC RELIEF VALVE OPEN? — 302   NO

YES

OBTAIN PRESSURE IN CRANK CHAMBER — 304

CALCULATE CORRECTION AMOUNT A
ACCORDING TO PRESSURE IN CRANK CHAMBER — 306

CORRECT INTAKE AIR AMOUNT MEASURED
WITH AIR FLOW METER BY CORRECTION AMOUNT A — 308

RETURN

# Fig. 23

DISPOSITION EXAMPLE 1
(EMBODIMENT 1)

DISPOSITION EXAMPLE 2

DISPOSITION EXAMPLE 3

DISPOSITION EXAMPLE 4

EP 2 787 195 A1

# Fig. 24

EP 2 787 195 A1

# Fig. 25

MAIN OIL HOLE 138

136 OIL FILTER

84 CYLINDER HEAD

140 CRANK JOURNAL

158 OIL FILTER

134 SUB OIL HOLE

OCV

142 INTAKE CAMSHAFT JOURNAL

144 EXHAUST CAMSHAFT JOURNAL

OIL JET

148 CRANK PIN

18 TURBO

156 SUB OIL HOLE

132 OIL PUMP

VARIABLE VALVE OPERATING MECHANISM

CHAIN TENSIONER

CONNECTING ROD OIL JET

154 OIL PUMP

96 VACUUM PUMP

130 OIL STRAINER

146

68 CHAIN

PISTON

152 OIL STRAINER

78 OIL PAN

EP 2 787 195 A1

# Fig. 26

ENGINE BODY

160  96          10 (or120)

FRESH AIR
+ OIL MIST
BLOW-BY GAS

162

52

24    24    40

16

18b    18a    16

18

# Fig. 27

96          ENGINE BODY

10 (or120)

FRESH AIR
+ OIL MIST
BLOW-BY GAS

164

162    52

28    40

24    24

16

18b    18a    16

18

# Fig. 28

ENGINE BODY

96

166

164

52

28

40

24

24

16

18b

18

18a

16

BLOW-BY GAS + OIL MIST

BLOW-BY GAS

10 (or120)

# Fig. 29

ENGINE BODY

168

96

162

52

28

40

24

24

16

18b

18

18a

16

BLOW-BY GAS + OIL MIST

BLOW-BY GAS

10 (or120)

# Fig. 30

# Fig. 31

MAIN OIL HOLE ~138

OIL FILTER 136

SUB OIL HOLE 134

OIL PUMP 132

OIL STRAINER ~130

VARIABLE VALVE OPERATING MECHANISM

OCV

CYLINDER HEAD 84

INTAKE CAMSHAFT JOURNAL

142

EXHAUST CAMSHAFT JOURNAL

~144

CHAIN TENSIONER

146

OIL JET

CRANK JOURNAL ~140

CRANK PIN ~148

CONNECTING ROD OIL JET

CHAIN 68

PISTON

TURBO 18

OIL JET 172

~174

~176

78

OIL PAN

EP 2 787 195 A1

# Fig. 32

```
                    ┌─────────┐
                    │  START  │
                    └────┬────┘
                         ▼
                  ╱─────────────╲                    104
                 ╱   COMPRESSOR   ╲
                ╱  EFFICIENCY EQUAL ╲      NO
               ╱   TO OR LOWER THAN  ╲──────────────────┐
                ╲  PREDETERMINED    ╱                    │
                 ╲    VALUE?       ╱                     │
                  ╲──────┬────────╱                      │
                         │ YES        402                │
                         ▼                               ▼         400
        ┌────────────────────────────┐   ┌────────────────────────────┐
        │    DEPOSIT SWEEP MODE       │   │   NORMAL OPERATION MODE      │
        │  (OIL JETTING EXECUTED)     │   │  (OIL JETTING NOT EXECUTED)  │
        └──────────────┬─────────────┘   └──────────────┬─────────────┘
                       │ NO                              │
                       ▼◄───────────────────────────────┘
                 ┌──────────┐
                 │  RETURN  │
                 └──────────┘
```

# Fig. 33

```
                    ┌─────────┐
                    │  START  │
                    └────┬────┘
                         ▼          200
                  ╱─────────────╲          NO
                 ╱  OIL DEGRADED? ╲──────────────────────────┐
                  ╲──────┬───────╱                           │
                         │ YES                               │
                         ▼          204                      │
                  ╱─────────────╲          NO                │
                 ╱ DEPOSIT BUILDUP╲─────────────────────►    │
                 ╲    MODE?       ╱                      │    │
                  ╲──────┬───────╱                       │    │
                         │ YES        502                ▼    ▼         500
        ┌────────────────────────────┐   ┌────────────────────────────┐
        │ DEPOSIT GROWTH INHIBITION   │   │   NORMAL OPERATION MODE      │
        │ MODE (OIL JETTING EXECUTED) │   │  (OIL JETTING NOT EXECUTED)  │
        └──────────────┬─────────────┘   └──────────────┬─────────────┘
                       │                                 │
                       ▼◄────────────────────────────────┘
                 ┌──────────┐
                 │  RETURN  │
                 └──────────┘
```

# Fig. 34

EP 2 787 195 A1

MAIN OIL HOLE — 138

136 — OIL FILTER

134 — SUB OIL HOLE

132 — OIL PUMP

130 — OIL STRAINER

84 — CYLINDER HEAD

OCV

VARIABLE VALVE OPERATING MECHANISM

142 — INTAKE CAMSHAFT JOURNAL

EXHAUST CAMSHAFT JOURNAL — 144

CHAIN TENSIONER

146

OIL JET

140 — CRANK JOURNAL

148 — CRANK PIN

CONNECTING ROD OIL JET.

68

CHAIN     PISTON

18 — TURBO

186

184 — OIL FILTER

182 — SUB OIL HOLE

180 — OIL PUMP

188 — 

178 — OIL STRAINER

172 — OIL JET

78 — OIL PAN

# Fig. 35

BLOW-BY GAS
(WITH OIL MIST)

192

192a

56

54

192b

TO OIL PAN

30

28

24

32

58

26 34 24

48

44

50 46

36 18a
18b 18

16

18a 20

22

38

42

14 24a 40

12

16

16a

190

194

ECU

62 — CRANK ANGLE

64 — ENGINE WATER TEMPERATURE

66 — TRIP METER

# Fig. 36

WHEN OIL CAPTURE
IS NOT PERFORMED

THE LARGER THE PARTICLE SIZE OF OIL MIST,
THE HIGHER THE CAPTURE RATE

WHEN OIL CAPTURE
IS PERFORMED

Dmax

LARGE

SMALL

AMOUNT OF OIL IN BLOWBY GAS

SMALL                LARGE

PARTICLE SIZE OF OIL MIST

# Fig. 37

[DIFFERENCE BETWEEN SMALL PARTICLE SIZE AND LARGE PARTICLE SIZE]

**(A)**

IN THE CASE OF
SMALL-PARTICLE-SIZE OIL MIST

BECAUSE OF LACK OF FLUIDITY,
BECOMES A DEPOSIT BEFORE REACHING
DIFFUSER PORTION OUTLET

DIFFUSER PORTION WALL SURFACE

IN THE CASE OF
LARGE-PARTICLE-SIZE OIL MIST

RETAINS HIGH FLUIDITY EVEN
WHEN EVAPORATING TO SOME
EXTENT, BECAUSE OF LARGE MASS

HAVING HIGH FLUIDITY,
REACHES DIFFUSER
PORTION OUTLET BEFORE
ADHERING

DIFFUSER PORTION WALL SURFACE

INLET                                              OUTLET

[DEPOSIT INHIBITION (CLEANING) EFFECT OF
LARGE-PARTICLE-SIZE OIL MIST]

**(B)**

LARGE-PARTICLE-SIZE OIL MIST

A

B

SMALL-PARTICLE-SIZE OIL MIST LOSING
FLUIDITY AND ABOUT TO BE DEPOSIT

WALL SURFACE OF DIFFUSER PORTION

A          B

A AND B CONTACT EACH OTHER

WALL SURFACE OF DIFFUSER PORTION

A TAKES IN B AND INCREASES
IN VOLUME

WALL SURFACE OF DIFFUSER PORTION

OIL MIST INCREASING IN
VOLUME AND HAVING
FLUIDITY TO DIFFUSER
PORTION OUTLET

WALL SURFACE OF DIFFUSER PORTION

INLET                                              OUTLET

# Fig. 38

# Fig. 39

# Fig. 40

DEPOSIT BUILDUP OPERATION CONDITION MET | DEPOSIT BUILDUP OPERATION CONDITION NOT MET

(A)

USE OF OIL SEPARATOR

YES

NO

OPERATING TIME

(B)

AMOUNT OF DEPOSIT BUILDUP (COMPRESSOR EFFICIENCY DECREMENT $\Delta \eta c$)

LARGE

SMALL

OPERATING TIME

# Fig. 41

(A)

OIL CAPTURE PERFORMED (OIL SEPARATOR USED)

↓

PROPORTION OF LARGE-PARTICLE-SIZE OIL MIST SMALL

↓

PHENOMENON A > PHENOMENON B

↓

DEPOSIT GENERATED

↓

COMPRESSOR EFFICIENCY $\eta c$ REDUCED

(B)

OIL CAPTURE NOT PERFORMED (OIL SEPARATOR NOT USED)

↓

PROPORTION OF LARGE-PARTICLE-SIZE OIL MIST LARGE

↓

PHENOMENON A $\leqq$ PHENOMENON B

↓

NO DEPOSIT GENERATED OR DEPOSIT IS REMOVED BY PHENOMENON B IF THE AMOUNT OF DEPOSIT IS NOT LARGER THAN A CERTAIN VALUE

↓

COMPRESSOR EFFICIENCY $\eta c$ NOT REDUCED OR EFFICIENCY $\eta c$ IS RECOVERED IF COMPRESSOR EFFICIENCY DECREMENT $\Delta \eta c$ IS NOT LARGER THAN A CERTAIN VALUE

# Fig. 42

(A)

BLOW-BY GAS
(WITH OIL MIST)      BLOW-BY GAS
(WITH OIL MIST)

~192

56~
~54

56~

CLOSED
~58

OPEN

OIL SEPARATOR
NOT USED

~192

~54

OPEN

CLOSED
~58

OIL SEPARATOR
USED

(B)

BLOW-BY GAS
(WITH OIL MIST)      BLOW-BY GAS
(WITH OIL MIST)

SWITCH VALVE

OPEN

CLOSED

BLOW-BY GAS PASSAGE

OIL SEPARATOR

OIL SEPARATOR
NOT USED

OIL SEPARATOR
USED

(C)

BLOW-BY GAS
(WITH OIL MIST)      BLOW-BY GAS
(WITH OIL MIST)

OPEN

CLOSED

BYPASS PASSAGE

CLOSED

OPEN

SWITCH VALVE

OIL SEPARATOR

BLOW-BY GAS PASSAGE

OIL SEPARATOR
NOT USED

OIL SEPARATOR
USED

# Fig. 43

```
        START ◄─────────────────────────┐
          │                               │
          ▼        200                    │
      ╱DEGREE╲                            │
   ╱ OF DEGRADATION OF ╲  NO              │
  ◄ OIL EQUAL TO OR HIGHER ├──────┐       │
   ╲THAN PREDETERMINED ╱          │       │
      ╲ DEGREE? ╱                 │       │
          │ YES    204            │       │
          ▼                       │       │
      ╱DEPOSIT BUILDUP╲  NO       │       │
     ◄    MODE?        ├──────────┼──►    │
      ╲             ╱  702        ▼       │
          │ YES              ┌─────────┐  │
   ┌──────────────────┐      │USE OIL  │  │
   │DEPOSIT GROWTH     │      │SEPARATOR│700
   │INHIBITION MODE    │      │IN       │──┘
   │(OIL SEPARATOR     │      │ORDINARY │
   │ INTERMITTENTLY USED)│    │WAY      │
   └──────────────────┘      └─────────┘
          │
        RETURN
```

# Fig. 44

(A)

(B)

EP 2 787 195 A1

# Fig. 45

73

# Fig. 46

(A)

242

250 244

254

260 248

258

246

208c

208b 240

(B)

258 260b 260

260a 262

# Fig. 47

```
                    ┌─────────┐
                    │  START  │
                    └────┬────┘
                         │
                         ▼
              ╱─────────────────────╲  800
         ╱───────────────────────────────╲    NO
        ╱   DEPOSIT BUILDUP                ╲───────┐
        ╲  OPERATION CONDITION MET         ╱       │
         ╲            ?                    ╱        │
              ╲─────────────────────╱              │
                         │ YES          802        │
                         ▼                          │
              ┌────────────────────────┐            │
              │  COUNT OPERATING TIME   │            │
              └────────────┬───────────┘            │
                           │        804             │
                           ▼                        │
              ╱─────────────────────────╲   NO      │
             ╱ OPERATING TIME > SPECIFIED ╲──────────┼──►
             ╲          VALUE?            ╱          │
              ╲─────────────────────────╱           │
                         │ YES                       │
       ┌─────────────────┤                          │
       │                 ▼          806              │
       │      ╱─────────────────────╲    NO         │
       │     ╱   ENGINE IDLING?       ╲─────────────┼──►
       │     ╲                        ╱             │
       │      ╲─────────────────────╱              │
       │                 │ YES        808           │
       │                 ▼                          │
       │      ┌────────────────────────┐            │
       │      │     FULLY OPEN VN       │  810       │
       │      └────────────┬───────────┘            │
       │                   ▼                        │
       │      ┌────────────────────────┐            │
       │      │  FULLY CLOSE EGR VALVE  │  812       │
       │      └────────────┬───────────┘            │
       │                   ▼                        │
       │      ┌────────────────────────┐            │
       │      │ DISCONNECT TRANSMISSION │  814       │
       │      └────────────┬───────────┘            │
       │                   ▼                        │
       │      ┌────────────────────────┐            │
       │      │ ABRUPTLY OPEN D THROTTLE│  816       │
       │      └────────────┬───────────┘            │
       │                   ▼                        │
       │      ┌────────────────────────┐            │
       │      │REDUCE AMOUNT OF FUEL INJECTED│ 818   │
       │      └────────────┬───────────┘            │
       │                   ▼                        │
       │      ┌────────────────────────┐            │
       │      │  RETURN TO NORMAL IDLING│            │
       │      └────────────┬───────────┘            │
       │                   ▼                        │
       │        ╱─────────────────────╲  820        │
       │  NO   ╱   NUMBER OF            ╲            │
       └──────╱ TIMES CLEANING HAS BEEN ╲           │
              ╲ PERFORMED > SPECIFIED   ╱           │
               ╲       VALUE?          ╱            │
                ╲─────────────────────╱             │
                         │ YES                       │
                         ▼◄──────────────────────────┘
                    ┌─────────┐
                    │   END   │
                    └─────────┘
```

EP 2 787 195 A1

# Fig. 48

76

# Fig. 49

FROM OIL SEPARATOR

276 272

284

280 282

278

274 { 274a 274b 274c

OIL MIST

TO COMPRESSOR INLET

# Fig. 50

(A)

(B)

(C)

EP 2 787 195 A1

# Fig. 51

(A)

(B)

79

# Fig. 52

(A)

(B)

# Fig. 53

(A)

COMPRESSOR EFFICIENCY REDUCTION RATE (%)

COMPRESSOR OUTLET TEMPERATURE

(B)

DEPOSIT BUILDUP THICKNESS

COMPRESSOR EFFICIENCY REDUCTION RATE (%)

# Fig. 54

```
                    START

                       │
                       ▼
   NO          COMPRESSOR                     900
◄─────  OUTLET TEMPERATURE ≧ UPPER
│              LIMIT VALUE?
│                      │ YES
│                      ▼                       902
│         DEPOSIT BUILDUP OPERATION
│         CONDITION DETERMINATION FLAG 1 = 1
│                      │
└─────────────────────►│
                       ▼                       904
   NO          LPL MIXING RATIO
◄─────       ≧ UPPER LIMIT VALUE
│                      ?
│                      │ YES
│                      ▼                       906
│         DEPOSIT BUILDUP OPERATION
│         CONDITION DETERMINATION FLAG 2 = 1
│                      │
└─────────────────────►│
                       ▼                       908
   NO          SOOT CONCENTRATION
◄─────       ≧ UPPER LIMIT VALUE?
│                      │ YES
│                      ▼                       910
│         DEPOSIT BUILDUP OPERATION
│         CONDITION DETERMINATION FLAG 3 = 1
│                      │
└─────────────────────►│
                       ▼                       912
   NO          FLAG 1 + FLAG 2
◄─────         + FLAG 3 ≧ 3?
│                      │ YES
│                      ▼                       914
│  NO       ENGINE ROTATIONAL SPEED
◄──◄─────    ≧ UPPER LIMIT VALUE?
│                      │ YES
│                      ▼                       916
└─────────────────────►│
                       ▼
          DEPOSIT BUILDUP OPERATION
          CONDITION DETERMINATION
                       │
                       ▼
                     END
```

# Fig. 55

```
                                    ┌─────────┐
                                    │  START  │
                                    └─────────┘
                                         │
                                         ▼        1000
                    NO             ╱─────────────╲
        ┌─────────────────────────  DEPOSIT BUILDUP
        │                          ╲OPERATION CONDITION╱
        │                           ╲ DETERMINATION? ╱
        │                            ╲─────────────╱
        │                                   │ YES        1002
        ▼          1008                     ▼
   ╱─────────────╲                     ╱─────────────╲
   ╱  REMAINING   ╲       NO          ╱  REMAINING   ╲       NO
  ╱ AMOUNT IN OIL MIST╲◄──┐         ╱ AMOUNT IN OIL MIST╲◄──┐
  ╲ TANK ≦ UPPER LIMIT╱   │         ╲ TANK ≧ LOWER LIMIT╱   │
   ╲    VALUE?    ╱       │          ╲    VALUE?    ╱       │
    ╲─────────────╱       │           ╲─────────────╱       │
         │ YES     1010   │                │ YES     1004   │
         ▼                │                ▼                │
   ╱─────────────╲        │        ┌───────────────────────┐│
   ╱  REMAINING   ╲   NO  │        │OPEN OIL MIST INJECTION VALVE│
  ╱ AMOUNT IN OIL MIST╲───┤        └───────────────────────┘│
  ╲ TANK ≦ LOWER LIMIT╱   │                │                │
   ╲    VALUE?    ╱       │                └────────────────┘
    ╲─────────────╱       │                │        1006
         │ YES     1012   │                ▼
         ▼                │        ┌───────────────────────┐
   ┌──────────────────┐   │        │CLOSE OIL MIST RETURN VALVE│
   │CLOSE OIL MIST RETURN VALVE│   │        └───────────────────────┘
   └──────────────────┘   │                │
         │                │                ▼
         └────────────────┘         ┌─────────┐
                │                    │   END   │
                ▼                    └─────────┘
           ┌─────────┐
           │   END   │
           └─────────┘
```

## INTERNATIONAL SEARCH REPORT

| International application No. |
| --- |
| PCT/JP2012/067381 |

A. CLASSIFICATION OF SUBJECT MATTER
*F02B39/16*(2006.01)i, *F01M13/00*(2006.01)i, *F02B39/14*(2006.01)i

According to International Patent Classification (IPC) or to both national classification and IPC

B. FIELDS SEARCHED

Minimum documentation searched (classification system followed by classification symbols)
F02B39/16, F01M13/00, F02B39/14

Documentation searched other than minimum documentation to the extent that such documents are included in the fields searched
Jitsuyo Shinan Koho          1922–1996   Jitsuyo Shinan Toroku Koho    1996–2012
Kokai Jitsuyo Shinan Koho    1971–2012   Toroku Jitsuyo Shinan Koho    1994–2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 41-18803 Y1 (Maschinenfabrik Augsburg-Nuernberg AG.),<br>02 September 1966 (02.09.1966),<br>entire text; all drawings<br>(Family: none) | 1,7<br>3<br>2,4-6,8-29 |
| Y | JP 2008-248726 A (Osaka Gas Co., Ltd.),<br>16 October 2008 (16.10.2008),<br>claim 4<br>(Family: none) | 3 |
| A | JP 53-119409 A (Mitsubishi Heavy Industries, Ltd.),<br>18 October 1978 (18.10.1978),<br>entire text; all drawings<br>(Family: none) | 1 |

| ☒ Further documents are listed in the continuation of Box C. | ☐ See patent family annex. |
| --- | --- |

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search<br>01 October, 2012 (01.10.12) | Date of mailing of the international search report<br>09 October, 2012 (09.10.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/067381 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-150956 A  (Toyota Motor Corp.), 03 July 2008 (03.07.2008), claim 1 (Family: none) | 18 |

Form PCT/ISA/210 (continuation of second sheet) (July 2009)

## INTERNATIONAL SEARCH REPORT

International application No.

PCT/JP2012/067381

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
        (See extra sheet.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**          ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2012/067381 |

Continuation of Box No.III of continuation of first sheet(2)

Document 1 (JP 41-18803 Y1 (Maschinenfabrik Augsburg-Nuernberg AG.), 02 September 1966 (02.09.1966), entire text; all drawings (Family: none)) discloses an internal combustion engine with a supercharger, said internal combustion engine being provided with a supercharger, a communication path, and an oil supply device, wherein the amount of oil is increased when a deposit accumulation operating condition is fulfilled.

Therefore, the invention of claim 1 cannot be considered to be novel in the light of the invention disclosed in the document 1, and does not have a special technical feature.

Consequently, the following inventions (invention groups) are involved in claims.

Meanwhile, the invention of claim 1 having no special technical feature is classified into invention 1.

(Invention 1) the inventions of claims 1, 2 and 7-29

An internal combustion engine with a supercharger, said internal combustion engine being provided with a supercharger, a communication path, and an oil supply device, wherein the amount of oil is increased when a deposit accumulation operating condition is fulfilled, and the deposit accumulation condition is fulfilled when the temperature of a compressor reaches a predetermined value.

(Invention 2) claim 3

An internal combustion engine with a supercharger, said internal combustion engine being provided with a supercharger, a communication path, and an oil supply device, wherein the amount of oil is increased when a deposit accumulation operating condition is fulfilled, and the deposit accumulation condition is fulfilled when the compressor efficiency of a compressor decreases to a predetermined value or less.

(Invention 3) claims 4 and 7

An internal combustion engine with a supercharger, said internal combustion engine being provided with a supercharger, a communication path, and an oil supply device, wherein the amount of oil is increased when a deposit accumulation operating condition is fulfilled, and the deposit accumulation condition is fulfilled when oil deteriorates to or below a predetermined level and the temperature of a compressor is a predetermined value or more.

(Invention 4) claim 6

An internal combustion engine with a supercharger, said internal combustion engine being provided with a supercharger, a communication path, and an oil supply device, wherein the amount of oil is increased when a deposit accumulation operating condition is fulfilled, and the deposit accumulation operating condition is fulfilled when the temperature of a compressor is a predetermined value or more and the concentration of soot in the oil is a predetermined value or more.

Form PCT/ISA/210 (extra sheet) (July 2009)

**REFERENCES CITED IN THE DESCRIPTION**

**Patent documents cited in the description**

- JP 2009293464 A
- JP 2007309128 A
- JP 2008150956 A
- JP 2009097450 A
- JP 6033792 A
- JP 2008157047 A
- JP 2011074833 A
- JP 2011202591 A
- JP 2010090873 A
- JP 2006104983 A
- JP 2011140922 A
- JP 2009041443 A